# EUROPEAN PATENT APPLICATION

(11) **EP 2 587 345 A2**
(43) Date of publication of application: **01.05.2013**
(21) Application number: 13152219.5
(22) Date of filing: 19.08.2008
(51) Int. Cl.: G06F 3/033

(54) **Finger-worn devices and related methods of use**

(30) Priority: 19.08.2007 US 956708 P; 26.12.2007 US 16635 P; 13.02.2008 US 28194 P; 03.04.2008 US 41931 P; 03.04.2008 US 42245 P; 13.04.2008 US 44486 P; 10.05.2008 US 52176 P; 21.05.2008 US 54833 P; 29.06.2008 US 76673 P
(62) Divisional of application: 08808009.8
(71) Applicant: Ringbow Ltd., Kohav Yair 44864 (IL)
(72) Inventor: Shai, Saar, 44864 Kochav Yair (IL)
(74) Representative: Modiano, Micaela Nadia

(57) **Abstract**

Finger-worn user input devices and methods for operating same. In some embodiments, a device includes at least one rotatable section (112, 112', 912) and an indication mechanism (116, 116a, 130, 516, 526, 616, 816, 826, 836, 1316, 1416, 1616, 2116, 2222, 2320, 2720, 3524) for indicating either a device use or a device state. In some embodiments, a device includes a stationary section (114), at least one rotatable section (112, 912) and an indication mechanism. In some embodiments, one or more rotatable sections are tiltable. In some embodiments, a device further includes one or more mechanisms selected from mechanisms used for sensing (118, 128, 128a, 134, 136, 1216), communication (140), power generation (616, 3342), light generation (526), vibration generation (516), reflection (816, 826, 836), illumination (3616), projection (3420), physical feedback (340) and magnetic influence (736).

## Description

### FIELD OF THE INVENTION

The invention relates to in general to finger-worn user-input devices and in particular to finger-worn ring devices used for providing inputs to other devices or systems or used to provide indications to other devices or systems.

### BACKGROUND OF THE INVENTION

Various finger-worn user-input devices are known. For example, U.S. Patent No. 5,481,265 to Russell discloses some embodiments of an ergonomic customizable user/computer interface device. These embodiments include only ROM and EEPROM replaceable memory cartridges, for the purpose of user authentication and signals encoding. There is no mention of interface indicators of feedback mechanism. Also, the devices described do not reflect modern utilization of a vast selection of sensing mechanism types, and new engineering progress for generating and/or harvesting energy. Therefore, Russell's devices lack appropriate power sources for today's mobile markets. In addition, his devices have very limited modes of interaction.

U.S. Patent No. 5,489,922 to Zloof discloses a remote computer mouse, embodied by an outer ring rotating on an inner ring. Zloofs device cannot register a user-input without moving parts, and is useful only for control of an external graphic interface.

U.S. Patent No. 5,832,296 to Wang et al. discloses a self-contained, finger-wearable interface device that communicates with electronic devices. This device may include a variety of sensing mechanisms, such as pressure and force sensing mechanisms, as well as processing circuitry, a wireless transmitter and an optional receiver. The device resembles a ring and is adapted to be worn on a user's finger with sensing mechanisms placed both on the inside and outside surfaces for actuation by a wearer's finger and thumb. The ring body serves as an omni-directional loop antenna for transmitting and receiving signals. To operate the Wang device in a manner designed to emulate a computer mouse, the "clicking" or selection action of a mouse is performed by flexing or bending the finger on which the device is worn to actuate a pressure sensing mechanism. Wang's device has disadvantages when used to control many types of electronic devices and does not facilitate operation where a state of the device may be set.

Therefore, prior art finger worn user input devices have various disadvantages and lack many features that would be useful in input and other actions.

### SUMMARY OF THE INVENTION

The invention provides, in various embodiments, finger-worn user-input devices (or simply "finger-worn devices"). More specifically, the invention provides various embodiments of such devices that are operable by rotation of rotatable ring sections. Some embodiments include just one rotatable section, while others include a plurality of rotatable sections. In such embodiments, a stationary ring-like section is not required because input or indications may be obtained by sensing of the finger on which the devices are worn, or by sensing relative rotation between rotatable sections. In some embodiments having only rotatable sections, rotated positions of any rotatable section are distinguishable from other positions.

In some embodiments, rotatable sections may be tilted in addition to being rotated. The additional tilting feature expends on interaction possibilities and abilities to control interfaces.

The invention further provides various finger-worn devices operable by touch and/or touch motion and/or pressure on a designated surface (as a touch surface). In some of these embodiments, the surface may have specific "touch points" (as indication locations) for specific types of interactions. In some embodiments, the touch surface may display visuals which may correspond to specific types of interactions. In some embodiments, the designated surface may be repositioned for specific types of interactions.

The invention further provides various finger-worn devices which can serve both as touch operable finger-worn devices and as rotation operable finger-worn devices.

The invention further provides finger-worn devices which are alterable in shape, for the object of being attached and/or connected to separate parties. Some of the devices can connect to each other and may be operable collaboratively.

The invention further provides finger-worn devices in which elements may be attached or detached from a main finger-worn device, for certain beneficial features.

The invention further provides various indication mechanisms, integrated in finger-worn devices, for the object of relaying indications about their use and/or information about conditions (as states) of the finger-worn devices. In this description, "mechanism" may refer to any means for performing a function. Some of the indication mechanisms provided herein may passively achieve the function of indication relaying, thus negating the need for an internal power source, or negating the need for active sensing operations. Some of these indication mechanisms are sensing mechanisms utilized in unique ways.

The invention further provides a recognition mechanism and method for detecting rotation and rotated positions of a finger-worn device around a finger.

The invention further provides power generating mechanisms which harness use of a finger-worn device for producing power.

The invention further provides a light generating mechanism and a similar vibrations generating mechanism, both of which harness use of finger-worn devices for the object of relaying indications to a separate party. Also provided for the same object are various reflection mechanisms which modulate reflection of light according to use and/or static conditions of finger-worn devices.

The invention further provides an illumination mechanism which facilitates communication with specific systems, and which facilitates detection of output from a finger-worn device and positions and/or motions of a finger wearing the device.

The invention further provides a projection mechanism which facilitates displaying visuals separately from a finger-worn device, and which facilitates a display larger than the device. A projection mechanism may also facilitate communication by visual output.

The invention further provides an interactive display mechanism which facilitates interactions with visuals displayed by or on a finger-worn device.

The invention further provides mechanisms which may physically influence the operation of a finger-worn device, such as a physical feedback mechanism, a magnetic mechanism, a snap-back mechanism and a locking mechanism.

The invention further provides various methods in which finger-worn devices may be utilized for interactions.

In some provided methods, finger-worn devices are utilized with position detecting systems, for the objects of improving on existing position related interactions and providing new and unique ways to interact with position detecting systems. In other provided methods, a finger-worn device may be utilized to facilitate detection of positions of a finger wearing the device.

In some provided methods, interface elements may be generally assigned and copied to a finger-worn device, for certain beneficial interactions.

### BRIEF DESCRIPTION OF THE DRAWINGS

The invention is herein described, by way of example only, with reference to the accompanying drawings, wherein:

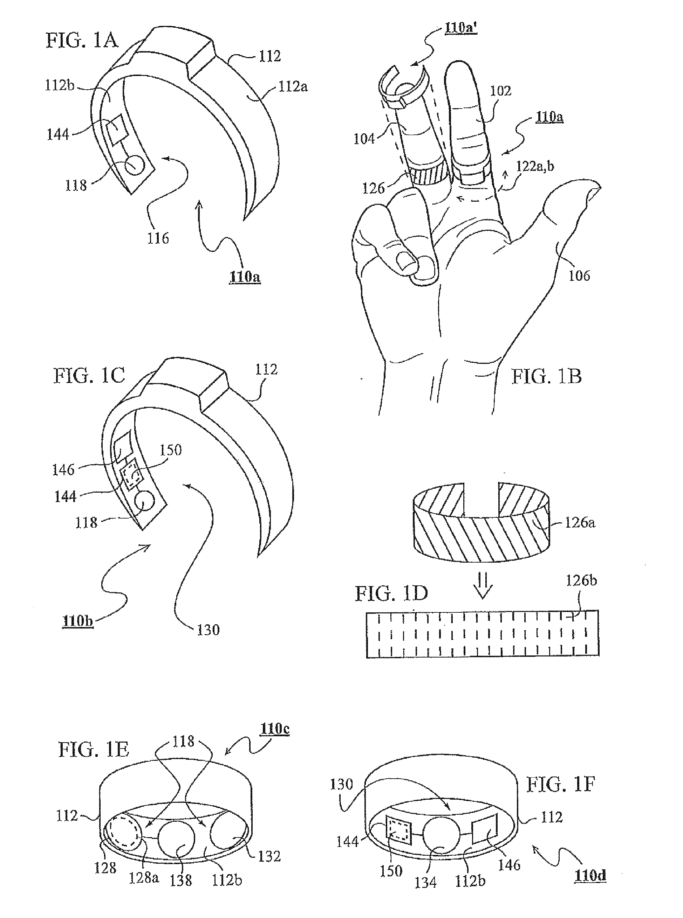

FIG. 1A shows a first embodiment of a finger-worn device of the invention;
FIG. 1B shows the first embodiment as worn on a finger; and as ready to be worn on a curve of another finger;
FIG. 1C shows a second embodiment of a finger-worn, device of the invention;
FIG. 1D shows a process in which a curve of a finger is scanned to obtain a map of the curve;
FIG. 1F, shows a third embodiment of a finger-worn device of the invention;
FIG. 1F shows a fourth embodiment of a finger-worn device of the invention;
FIG. 1G shows a fifth embodiment of a finger-worn device of the invention;
FIGS. 1H and 1I show a sixth embodiment of a finger-worn device of the invention;
FIGS. 2A and 2B show an seventh embodiment of a finger-worn device of the invention in a generally side view (2A) and in cross section (2B);
FIG. 2C shows a passive indication mechanism which can be implemented in the device of FIGS. 2A and 2B;
FIG. 2D shows a eighth embodiment of a finger-worn device of the invention in cross section;
FIG. 2E shows the eighth embodiment of a finger-worn device worn on an index finger;
FIGS. 3A and 3B show a ninth embodiment of a finger-worn device of the invention, in perspective (3A) and in cross section (3B);
FIGS. 3C and 3D show a physical feedback mechanism in the ninth embodiment of a finger-worn device, used for modulating physical feedback;
FIGS. 4A through 4D show a tenth embodiment of a finger-worn device of the invention, in various use states;
FIGS. 5A through 5C show an eleventh embodiment of a finger-worn device of the invention, with details of various components therein;
FIG. 5D shows a light generating mechanism that can be implemented in the twelfth embodiment of a finger-worn device;
FIGS. 6A and 6B show a twelfth embodiment of a finger-worn device of the invention;
FIG 6C shows details of indication locations in the twelfth embodiment of a finger-worn device of the invention;
FIGS. 7A and 7B show a thirteenth embodiment of a finger-worn device of the invention in perspective (7A) and in cross section (7B);
FIGS. 8A through 8C show a fourteenth embodiment of a finger-worn device of the invention;
FIGS. 8D through 8F show a fifteenth embodiment of a finger-worn device of the invention;
FIG. 8G shows a sixteenth embodiment of a finger-worn device of the invention;
FIGS. 9A and 9B show a seventeenth embodiment of a finger-worn device of the invention;
FIG. 9C shows an eighteenth embodiment of a finger-worn device of the invention;
FIGS. 10A through 10C show a nineteenth embodiment of a finger-worn device of the invention in different use positions;
FIG. 10D shows an interface having multiple elements controllable by finger-worn devices of the invention;
FIGS. 11A and 11B show a twentieth embodiment of a finger-worn device of the invention;
FIGS. 12A and 12B show a twenty first embodiment of a finger-worn device of the invention;
FIGS. 13A through 13E show a twenty second embodiment of a finger-worn device of the invention
FIG. 13F shows a transponder mechanism as an exemplary passive indication mechanism for indicating tilt;
FIGS, 14A and 14B show a twenty third embodiment of a finger-worn device of the invention;
FIG. 14C shows a locking mechanism which may be used in any device of the invention;
FIG. 15A and FIG. 15B show a twenty fourth embodiment of a finger-worn device of the invention;
FIG. 15C and FIG. 15D show a twenty fifth embodiment of a finger-worn device of the invention;
FIG. 15E and FIG. 15F show a twenty sixth embodiment of a finger-worn device of the invention;
FIGS. 16A through 16G show a twenty seventh embodiment of a finger-worn device of the invention;
FIGS. 16C and 16D show sections of the embodiment in FIGS. 16A through 16G;
FIGS. 16F and 16G show a cross-section of the embodiment in FIGS. 16A through 16G;
FIGS. 17A and 17B show a twenty eighth embodiment of a finger-worn device of the invention;
FIGS. 17C and 17D show a twenty ninth embodiment of a finger-worn device of the invention;
FIGS. 18A through 18D show a sequence of operation steps to control an interface of a separate party using one device of the invention;
FIGS. 18E through 18H show a sequence of operation steps to control an interface of a separate party using another device of the invention;
FIG. 19A shows a thirtieth embodiment of a finger-worn device of the invention;
FIG. 19B shows a thirty first embodiment of a finger-worn device of the invention;
FIG. 19C shows an interface controllable by a device of the invention;
FIG. 19D shows another interface controllable by a device of the invention;
FIG. 20A through 20C show an exemplary utilization of a device of the invention;
FIG. 20D shows a system in which a device of the invention may facilitate remote controlling of separate parties by auto-connection;
FIG. 21A shows a thirty second embodiment of a finger-worn device of the invention;
FIGS. 21B and 21C show a thirty third embodiment of a finger-worn device of the invention;
FIG. 21D shows a sensing mechanism for sensing touch at a particular indication location in a device of the invention;
FIG. 21E shows a thirty fourth embodiment of a finger-worn device of the invention;
FIG. 22A shows a thirty fifth embodiment of a finger-worn device of the invention;
FIG. 22B shows an array of sensing mechanisms distributed inside a stationary section of the embodiment of FIG. 22A;
FIG. 22C shows a thirty sixth embodiment of a finger-worn device of the invention;
FIG. 23A shows a thirty seventh embodiment of a finger-worn device of the invention;
FIG. 23B shows a thirty eighth embodiment of a finger-worn device of the invention;
FIG. 23C shows an embodiment of an interactive display mechanism;
FIG. 24A shows a thirty ninth embodiment of a finger-worn device of the invention;
FIGS. 24B and 24C show a fortieth embodiment of a finger-worn device of the invention;
FIGS. 25A and 25B show a forty first embodiment of a finger-worn device of the invention;
FIG. 25C shows a forty second embodiment of a finger-worn device of the invention;
FIGS. 26A and FIG. 26B show a forty third embodiment of a finger-worn device of the invention;
FIG. 26C shows a forty fourth embodiment of a finger-worn device of the invention;
FIG. 26D shows a forty fifth embodiment of a finger-worn device of the invention
FIGS. 27A, 27B and 27C show a forty sixth embodiment of a finger-worn device of the invention;
FIGS. 28A, 28B and 28C show embodiments of a system in which a finger-worn device of the invention is connected to non- finger-worn devices;
FIGS. 29A and 29B show a forty seventh embodiment of a finger-worn device of the invention;
FIGS. 29C and 29D show a forty eighth embodiment of a finger-worn device of the invention;
FIGS. 30A and 30B show a forty ninth embodiment of a finger-worn device of the invention;
FIGS. 30C and 30D show an exemplary patch having a passive indication mechanism in the embodiment of FIGS. 30A and 30B;
FIGS. 30E and 30F show a fiftieth embodiment of a finger-worn device of the invention;
FIG. 31 shows a fifty first embodiment of a finger-worn device of the invention;
FIGS. 32A and 32B show an embodiment of a system in which multiple finger-worn devices the invention are temporarily connected side-by-side;
FIG. 32C shows an embodiment of a system in which any number of finger-worn devices are connected to an extension section that has a touch surface coupled with an indication mechanism for indicating touch and/or touch motion and/or pressure;
FIG. 32D shows an interface which may be controlled by multiple connected devices of the invention operating collaboratively;
FIGS. 33A and 33B show a fifty second embodiment of a finger-worn device of the invention;
FIG. 33C shows a fifty third embodiment of a finger-worn device of the invention;
FIG. 33D shows the embodiment of FIG. 21A having an exemplary power generating mechanism;
FIG. 33E shows the fifty fourth embodiment having an alternative tactile output mechanism;
FIG. 34A a fifty fifth embodiment of a finger-worn device of the invention;
FIG. 34B shows a simple projection mechanism implemented in a ring;
FIG. 34C shows a fifty fifth embodiment of a finger-worn device of the invention;
FIG. 34D shows the embodiment utilized for projecting an image on a hand;
FIG. 35A shows a fifty sixth embodiment of a finger-worn device of the invention;
FIG. 35B shows a fifty seventh embodiment of a finger-worn device of the invention;
FIG. 35C shows a fifty eighth embodiment of a finger-worn device of the invention;
FIGS. 35D through 35F show the use of a device as in FIGS. 35A through 35C to communicate with a detection apparatus,;
FIG. 36A shows a fifty ninth embodiment of a finger-worn device of the invention;
FIG. 36B shows a sixtieth embodiment of a finger-worn device of the invention;
FIG. 36C shows a cross section of a device of FIG. 36A;
FIG. 36D shows an embodiment of a system in which a plurality of devices of FIG. 36A are worn on fingers of a hand;
FIG. 36E shows an embodiment of a system in which a plurality of devices of FIG. 34A are worn on fingers of a hand;
FIGS. 37A, 37B, 37C and 37D show an embodiment of a finger-worn device utilized for visual messaging;
FIGS. 37E and 37F show an embodiments of a finger-worn device is utilized for visual messaging;
FIGS. 38A, 38B and 38C show an embodiment of a system in which a finger-worn device is utilized for visual interaction;
FIG. 38D shows an embodiment of a system in which a finger-worn device is utilized for visual interaction with a head-up display;
FIG. 38E shows an exemplary visual from the system of FIG. 38D;
FIGS. 39A through 39C show an embodiment of a system in which a finger-worn device is utilized for interaction;
FIGS. 40A through 40L show an embodiment of system in which a finger-worn device of the invention utilized for interaction;
FIG. 40M shows a sixty first embodiment of a finger-worn device of the invention;
FIGS. 41A and 41B show an embodiment of a system in which a finger-worn device is utilized for interaction;
FIG. 41C shows a sixty second embodiment of a finger-worn device of the invention;
FIG. 41D shows an exemplary interface element;
FIGS. 41E and 41F show the system of FIGS. 41A and 41B in which a finger-worn device is utilized for interaction;
FIG. 41G shows a use of the system of FIGS. 41A and 41B;
FIG. 41H shows a sixty third embodiment of a finger-worn device of the invention;
FIG. 41I shows a sixty fourth embodiment of a finger-worn device of the invention;
FIG. 41J shows the sixty fifth embodiment of the finger-worn device of the invention;
FIG. 41K shows an embodiment of a system in which multiple finger-worn devices are utilized for interactions;
FIG. 42 shows a method for detecting rotation and rotated positions of finger-worn. devices;
FIG. 43 shows a method for detecting rotation and rotated positions of finger-worn devices;
FIG. 44 shows a method for detecting rotation and rotated positions of finger-worn devices;
FIG. 45 shows a method for assigning interface elements to and from a finger-worn device;

The drawings constitute a part of this specification and include exemplary embodiments to the invention, which may be embodied in various forms. It is to be understood that in some instances various aspects of the invention may be shown exaggerated or enlarged to facilitate an understanding of the invention

### DETAILED DESCRIPTION OF THE INVENTION

In this description, "indication mechanism" refers to any means by which use and/or states of a device of the invention may be indicated, "Use" of the device refers to operations in progress (ongoing) performed on the device. A "state" of the device refers to a static condition of the device. A state may be a physical condition and/or a virtual condition, such as ON/OFF modes. A state may be indicated once, when the device is set or goes into a state, or continuously during the period when the device is in a state.

Use and/or states may be directly sensed (such as in case a "sensing mechanism" acts as an indication mechanism). Alternatively, use and/or states may cause specific conditions of the indication mechanism which may be sensed internally (by an element of the device) or externally (by a separate party).

Use and/or states of the device may result in the indication mechanism generating signals or transmissions and/or any other form of information, to another element of the device or to a separate party. Use and/or states of the device may additionally or alternatively result in the indication mechanism influencing other mechanisms and/or components and/or processes of the device or of a separate party. Specifically, use and/or states of the device may result in the indication mechanism influencing signals or transmissions originating from a separate party or from another element of the device. For example, an indication mechanism may influence reflection of light differently for different states of the device.

Examples of "use" include rotating a rotatable section, rotating a rotatable section while the section is tilted, generally touching a touch surface, specifically touching an indication location on a touch surface, touching a touch surface and sliding on the touch surface (commonly referred to as "tap and drag" or "scroll"), pressing (i.e. applying pressure) on a touch surface and the like.

Examples of "states" include rotated positions of a rotatable section, tilted positions of a rotatable section, tilted and rotated positions of a rotatable section, a rotatable section set to rotation tracks, alignments of rotatable sections, connected (and disconnected) sections, connected (and disconnected) devices and the like.

In some embodiments, a device can be in a state when a touch surface is touched and touch is held for the period of the state (i.e. when touch is removed from the surface, the state changes), or when an element is assigned to the device (as an exemplary "virtual" state of the device).

In this description, "sensing mechanism" refers to any means by which use or states of the device may be sensed, detected, viewed, collected, captured, identified, recognized, measured, tracked, acknowledged, admitted, registered, processed, computed, analyzed and/or reacted to. Note that "detection" in this description usually expands on "sensing", such as by extracting information from the sensing, acknowledging indications in the sensing, registering input corresponding to the sensing, processing sensed signals and the like.

In this description, "connection mechanism" refers to any means by which a device of the invention may be connected to a separate party or to another device. "Connection mechanism" also refers to any means by which a section or element or component of a device of the invention may be connected to the device, or to another section, element, component, or a plurality thereof. "Connection mechanism" also refers to any means by which a device of the invention may change shape by connection of sides, ends, sections, elements or components thereof. "Connection" may also refer to an "attachment" that usually facilitates transferring or exchange of electricity and/or information.

In this description, "indication location" refers to any location on a device of the invention where use and/or a state of the device can be indicated, or from which indication of use and/or a state of the device originate. "Indication locations" may correspond to states of a device of the invention, such as to a rotated position of a rotatable section or a rotated and tilted position of a rotatable and tiltable section, and may be utilized to indicate the states. "Indication locations" may further be utilized for indicating use of a device of the invention. "Indication locations" may include, for example, sensors or switches. "Indication locations", in other examples, may react or be influenced by other elements or components of a device of the invention, such as a plug or other indication locations, or by any other use and/or states of a device of the invention, such as touch and/or pressure. "Indication locations" are usually included in an indication mechanism or a passive indication mechanism of devices of the invention.

In this description, "rotatable section" refers to any section or element or part or component of a device which can be rotated. For some embodiments, a rotatable section can be rotated and tilted and/or repositioned, such as between rotation tracks.

In this description, "input" refers to any computable information which can be utilized in or that leads to operations, executions, procedures, functions and/or any other kind of processes. For example, the information may be parameters for variables of programmed code. Usually, detections, such as detected indications, are registered as input.

In this description, "registering input" refers to the process by which an input is obtained. An input may be registered by processing received information from any source (such as from sensing mechanisms) and of any type (such as transmissions).

In this description, when describing a section of a finger-worn device, an "internal side" refers to the side of the section that is generally directed towards a finger wearing the device or towards another section that is closer to the finger. Accordingly, "external sides" refer to the side of a section that is generally directed outwards from a finger.

In this description, "directional information" refers to any information about a direction and/or speed. Usually, "directional information" is obtained from indications from a device of the invention, such as when a rotatable section of the device is rotated, or when a finger slides on a touch surface of the device.

In this description, "interface element" refers to any part of an interface. Some examples of interface elements include software, applications, programs, commands, files, folders, tools, messages, functions, processes, visuals (e.g. visual objects, graphics, icons, etc.), occurrences (e.g. incoming call or change in mode), conditions (e.g. an interface mode), protocols (e.g. a cursor modulation protocol or finger interactions protocol), network connections (e.g. control of a device in a system of network may be assigned to the device), profiles (e.g. a user profile), attributes (e.g. audio volume) and the like.

In this description, "displayed object" (or simply "object" when referring to a display) refers to any specific instance of a visual output or plurality thereof. Usually, a "displayed object" corresponds to an interface element, such as visually representing an element of an interface.

In this description, "incoming signals" refer to any signals or transmissions received from an external source, such as a separate party.

In this description, a "virtual environment" refers to any interface. Specifically, "virtual environment" may refer to any computer generated environments, such as any operating systems or graphic user interfaces (GUIs),

In this description, "function" refers to any operation, execution, process, procedure, action or command for achieving a result, or plurality thereof. Usually, a title of a "function" refers to its result. For example, a "deletion function" is for deleting.

It is hereby noted that any mentioning or use of the term "visual" may refer, in addition to the common definition, to optical elements or properties in general that may not be visible. Specifically, "visual" may refer to any non-visible wavelengths (e.g. infrared). Accordingly, "visual" is not limited the spectrum of visible light. Further accordingly, any mentioning or use of the term "light" and related terms (e.g. "illumination") are not limited to visible light.

It is also hereby noted that any mentioning or use of the term or phrase "optionally" refers to the common definition of the term, as defined in dictionaries. Accordingly, any mention or use of "optionally" does not limit or restrict the related cases or propositions or phrasings so that at least one is possible or allowed or may occur, otherwise cases or propositions or phrasings herein related to the phrase optionally are not mutually exclusive and are not limited to any or either.

It is also hereby noted that any mentioned or use of the phrase "and/or" refers to the common definition of the term. Accordingly any mention or use of "and/or" allows one or more of the related cases or propositions or phrasings are possible or may occur, otherwise at least one but possibly more of the related cases or propositions or phrasings are possible or allowed or may occur, NOT mutually exclusive.

FIG. 1A shows a first embodiment of a finger-worn device of the invention as a device **110a**. Device **110a** -includes a rotatable section **112** which can be worn on and rotated around a finger. Device **110a** further includes an indication mechanism **116** for indicating rotation (or "relative motion") of section **112** around the finger. Section **112** is shown in FIG. 1A as a partial ring, however, it should be clear that this particular embodiment is by no means limiting, and that in some embodiments, section **112** is a full ring. In FIG. 1A, indication mechanism **116** includes a sensing mechanism **118**. Sensing mechanism **118** may utilize any number of sensors generally directed to or facing the finger, such as being generally located at an internal side **112b** of section **112**. As section **112** rotates, mechanism **118** senses a different part on the curve of the finger (e.g. a sensor of mechanism **118** is facing a different part of the finger, specifically on the curve of the finger around which section **112** rotates). Accordingly, relative motion may be indicated by sensing the finger. More specifically, sensing mechanism **118** may sense the surface (also "skin") of the finger, or layers near the surface of the finger. The sensing may be of the epidermal layer of the skin. In other embodiments, the sensing is may be of the dermal and/or sub-dermal layers. Because skins of fingers exhibit physiological patterns and features (e.g. fingerprints, or skin crevices similar to fingerprints in other parts of fingers) along the curve of the finger, indicating rotation of section **112** relative to the finger may be facilitated by any number of mechanisms known in the art for sensing patterns and features, specifically physiological, such as fingerprints sensing mechanisms. Alternatively, indicating rotation may be facilitated by sensing other detectable changes, such as the reflection of light from sub-dermal layers of the finger or from the bone of the finger. In some embodiments, sensing mechanism **118** may be coupled with a processing unit **144** included in a finger worn device of the invention (as in device **110a**). The processing unit may process signals from a sensor, or plurality thereof, utilized by the sensing mechanism. In other embodiments, the processing unit may be included in a separate device or system communicating with a finger worn device of the invention.

FIG. 1B shows device **110a** exemplarily worn on an index finger **102**. Rotation directions **122a**,**b** are shown as directions in which device **110a** can be rotated, such as by a thumb **106**. FIG. 1B further shows a second embodiment of a finger-worn device of the invention as a device **110a'** ready to be worn on a middle finger **104**, specifically on a curve **126** of finger **104**. Curve **126** is generally the curved surface of the finger at the circumference of the finger. When device **110a'** is worn on curve **126**, the curve overlaps inner side **112b** of section **112,** from which sensing of the finger is performed. Accordingly, sensing is specifically of curve **126**. The curve, as referred to herein, may include the entire circumference of the finger (full circle around the finger) or only a certain part of the circumference, such as only the curve of the front of the finger (shown in FIG. 1B). As section **112** rotates, a different part along curve **126** is sensed at any given time (such as by a sensor of mechanism **118** facing a different part for different rotated positions), and so relative motion can be indicated from sensing changes along the curve. Sensing may distinguish between each direction of rotation (i.e. direction **122a** and direction **122b**) so that rotation is each direction is indicated differently, for obtaining directional information about the rotation. In some embodiments, the speed of rotation may be indicated, or information of which may be obtained, by processing the rate in which mechanism **118** senses changes along curve **126**, as sensed changes correspond to rotation.

FIG. 1C shows a second embodiment of a finger-worn device of the invention as a device **110b**, similar to device **110a**. In device **110b**, an indication mechanism is implemented as a recognition mechanism **130**, Mechanism **130** may indicate rotated positions of device **110b** around a finger (i.e. states of the device), in addition to relative motion (i.e. rotation, or use of the device). In addition to the described for device **110a**, device **110b** further includes a memory unit **146**. In some embodiments, the memory unit may be included in a separate device or system communicating with a finger worn device of the invention. In mechanism **130**, memory unit **146**, processor **144** and sensing mechanism **118** are connected. In some embodiments, processor **144** has a recognition function **150** (i.e. program or software) for recognizing patterns and/or features, and/or for comparing patterns and/or features. For example, function **150** may be a fingerprint recognition algorithm programmed into processor **144.** The recognition function may process sensing performed by mechanism **118**. The sensing or results from the recognition function may be stored on and retrieved from memory unit **146**. When device **110b** is worn on a finger, specifically around a curve **126**, the curve may be "mapped" by recognition mechanism **130**. This may be facilitated by scanning the entire curve by mechanism **118**, wherein by rotating section **112** around the finger mechanism **118** may sense all the parts of the curve. The scanning may be stored in memory unit **146**. When section **112** is later at a certain rotated position, mechanism **118** senses a certain part along curve **126**, which corresponds to the position. The part may be recognized by comparing it to the prior scanning which is stored in unit **146**. By recognizing the part, its location along the curve may be known, which can indicate the corresponding rotated position of section **112**. Accordingly, indication of relative motion of section **112** around the finger may be facilitated by sensing a sequence of parts of the curve, which indicates relative motion and may be utilized for obtaining directional information.

Recognition mechanism **130** may utilize any number of mechanisms known in the art for sensing fingerprints and/or for fingerprint recognition, see e.g. US Patent Applications 10/920,255 and 11/424,477 and US Patents 5195145,6088585, 7381941 and 6259108.

FIG. 1D shows a representation of converting a scanning of the curve to a reference map of locations of parts on the curve. In FIG. 1D, scanning of an actual curve **126a** is for registering a map **126b** (shown in the figures divided by dashed lines exemplarily separating locations which correspond to different parts along the actual curve). Registering map 126b from the scanning of curve **126a** may be performed by a processor **144** (FIGS. 1A and 1C). The processor may utilize a function **150** to convert signals from a mechanism **118** to map **126b**. The map is a record of all the parts of the curve and their location along the curve. The record may be encoded information which is "readily comparable" to any further sensing of parts of the curve, which may undergo a similar step before being compared to the map. The map may be updated or replaced with another map when device **110b** is relocated to be worn on a different curve, on the same finger or another finger.

In some embodiments, when a partial curve is scanned and sensed, such as the part of the circumference of the front of the palm (shown in FIG. 1B), sensors of sensing mechanism **118**, or sensors of any sensing mechanisms utilized for indicating rotation and rotated positions (e.g. recognition mechanism **130**), may be distributed (or located) opposite to each other on internal side **112b**, or in any distribution in which at least one sensor is facing the curve for each rotated position of a device of the invention, so that the curve can be sensed when that device is at any position. This facilitates indicating rotation and rotated positions on fingers where the back of the fingers cannot be effectively sensed. For example, a user having hairs on the back of a finger on which the device is worn, in which case a recognition mechanism **130** which is designed to sense crevices in the surface of the skin of the finger may operate deficiently if attempting to sense the back of the hand. Accordingly, having multiple sensors in different locations on the internal side of section **112** may facilitate sensing the front of the finger when section **112** is in any rotated position.

FIG. 1E shows a third embodiment of a finger-worn device of the invention as a device **110c**, similar to the previously described devices, in which a rotatable section **112** shown to have a shape of a full ring. A sensing mechanism **118** includes an optical sensing mechanism **128** (e.g. a photodiode). During rotation of section **112**, indications of rotation may be obtained by sensed optical changes as sensed by mechanism **128** sensing the finger (see e.g. US patent 6259108). Mechanism **118** may utilize a light source **132** (e.g. a light-emitting diode (LED)) to facilitate optical sensing of mechanism **128**. In some embodiments, sensing mechanism **128** may utilize a passive infrared (PIR) sensor **128a** for sensing the natural physiological radiation of infrared (IR) light from the finger, in which case light source **132** is not needed. In some embodiments, by utilizing a PIR sensor, mechanism **128** and accordingly mechanism **118**, act as a passive indication mechanism (e.g. a passive indication mechanism **116a**) where a power source is not needed. For example, a thermoelectric power generator **138** may be utilized by mechanism **118** so that infrared light sensed by sensor **128a** can be converted into power, in addition to indicating relative motion. Similarly, any thermoelectric power generator **138** may be included in any device of the invention as an exemplary power source. Note that a processor and optionally a memory unit may be included in device **110c** for forming a recognition mechanism **130** together with sensing mechanism **118.**

FIG. 1F shows a forth embodiment of a finger-worn device of the invention as a device **110d** similar to the previously described devices, in which a capacitance sensing mechanism **134** is acting as a sensing mechanism for sensing capacitance changes across a curve of a finger during rotation of section **112**. As known in the art (see e.g. US Patent 4353056), crevices on a conductive surface may be detected by sensing capacitance formed between a sensor (e.g. electrodes) and the surface. Such mechanisms are known to be implemented for sensing fingerprints and accordingly may sense patterns and/or features of other surfaces of a finger. As described above, changes in capacitance as detected by mechanism **134** indicate relative motion. In FIG. 1F, device **110d** is shown to further include a processing unit **144** having a recognition function **150** and a memory unit **146**, acting with mechanism **134** as an exemplary recognition mechanism **130**. Similarly to the described above, a capacitance "fingerprint" (i.e. map) of a curve of a finger where the device is worn may be registered from a scanning operation, and stored to be later compared with sensed capacitance of parts of the curve, for obtaining specific indications of rotated positions of section **112.**

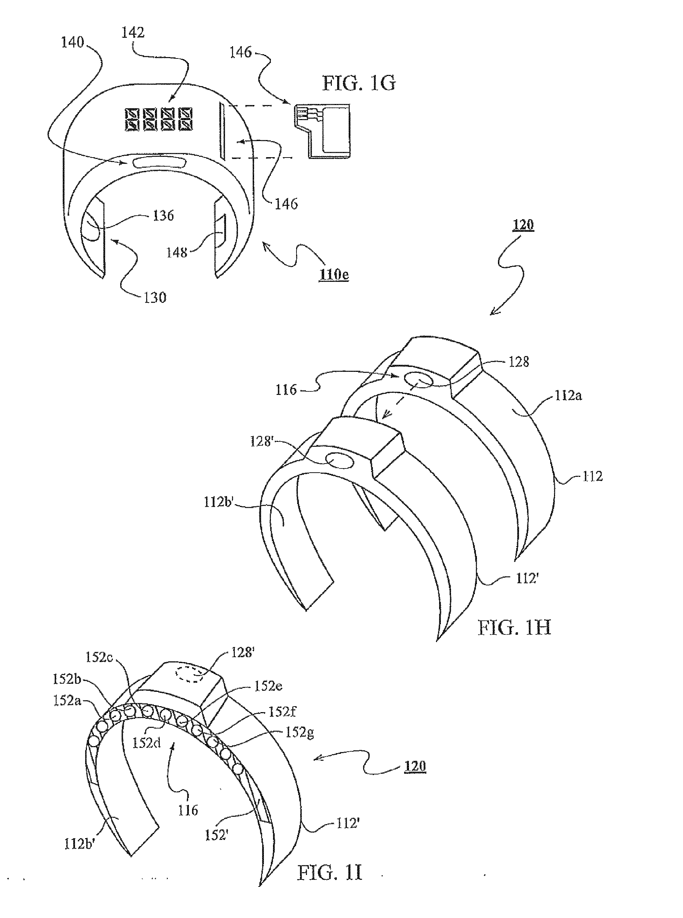

FIG. 1G shows a fifth embodiment of a finger-worn device of the invention as a device **110e**, similar to the previously described devices. In device **110e**, a section **112** is shown in yet another shape, specifically of a partial ring. A recognition mechanism **130**, similarly to the described above, is shown to utilize an acoustic sensing mechanism **136** as known in the art to detect patterns of skin crevices (i.e. ridges and valleys of fingerprints) in a surface of a finger, by detecting acoustic feedback (see e.g. US patents 4977601, 5456256, 7150716), for achieving detection of relative motion (i.e. rotation) and of rotated positions. Further shown included in device **110e** is a general communication mechanism **140** (e.g. a transceiver), a general visual output mechanism **142** (e.g. a liquid crystal display), a power source **148** (e.g. a battery), and an exemplary memory unit **146** being a slot and a memory cart (e.g. Flash memory card).

In some embodiments, memory unit **146** may store information for operations of device **110e** where only an output apparatus is needed to communicate with, such as in case device **110e** also includes a processor (e.g. a processor **144**). For example, memory unit **146** may store media files which can be extracted from the card and played by a processor having a media playing function. Alternatively, the media playing function may also be stored on memory unit **146**, such as an application installed on the card in addition to an archive of media files. By communicating with a media output apparatus (e.g. sound speakers for audio output or a monitor for video output), device **110e** can be operated for playing media. For another example, the device may be operated to select stored information from memory unit **146** and display it by visual output mechanism **142**. Note that similarly, a device of the invention may act as a mobile computer device which can be operated autonomously (without communicating with a separate party or an external interface), or operated with only an output apparatus.

FIGS. 1H and 1I show a sixth embodiment of a finger-worn device of the invention as a device **120** which includes a first rotatable section **112,** a second rotatable section **112'** and an indication mechanism **116** for indicating relative rotation and/or specific relative positions of each rotatable section. In this embodiment, mechanism **116** includes an optical sensing mechanism **128** on section **112** and a pattern **152'** on section **112'** which can be sensed by sensing mechanism **128** (e.g. by generally facing the mechanism, as shown in FIG. 1H). The pattern is specifically shown in FIG. 1I which is a view of an opposite side of section **112'** than shown in FIG. 1H. Pattern **152'** is shown having a plurality of different features **152a-g** to visually indicate rotated positions of section **112'**, or alternatively of relative rotated positions of section **112**, to sensing mechanism **128**. Pattern **152'** may be, for example, a coded black-and-white pattern (e.g. barcode or optical tag) having distinct features evenly distributed across the curve of section **112'**. Sensing mechanism **128** can detect each feature for obtaining information about the corresponding relative position of the sections. Accordingly, when either section is rotated, a different feature (on pattern **152'**) directly faces the sensing mechanism at any given time. During rotation, directional information may be obtained from detecting a sequence of features. As either section rotates, different features are sequentially facing the sensing mechanism, so that by analyzing the sequence of features, information about the direction of rotation may be obtained.

In some embodiments, section **112'** includes a sensing mechanism **128'** so that another rotatable section having a visual pattern may be included in device **120**, wherein its pattern is facing mechanism **128'**. Accordingly, any number of rotatable sections may be included in the device as part of a series of rotatable sections sensing each other's patterns, as described above.

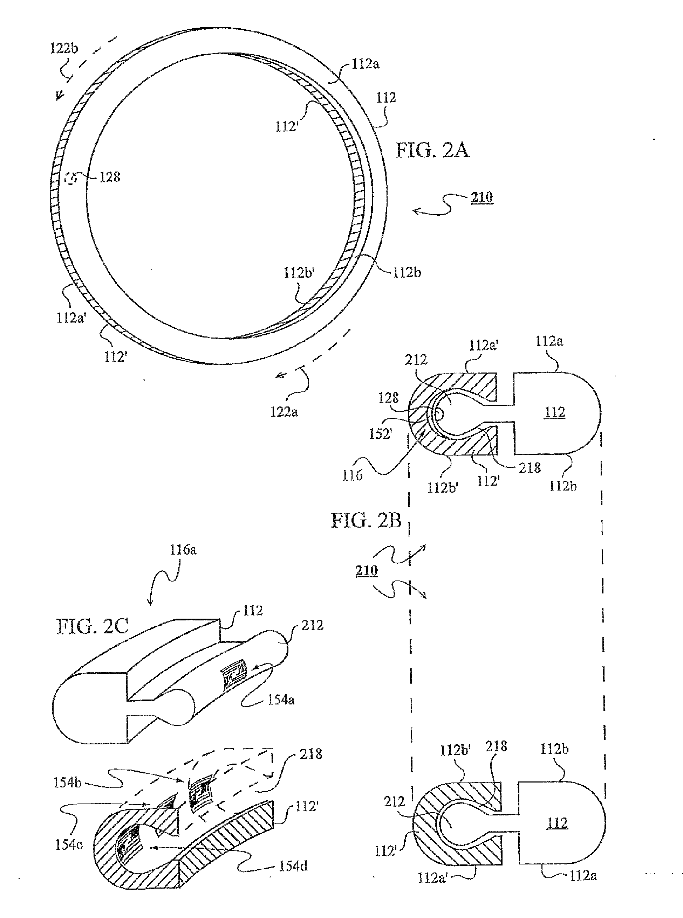

FIGS. 2A and 2B show a seventh embodiment of a finger-worn device of the invention as a device **210**. Device **210** includes a first rotatable section **112** and a second rotatable section **112'**, both of which can be rotated relative to each other and relative to a finger wearing the device Sections **112** and **112'** are shown to be full rings, installed side-by-side and generally of a similar size. It is noted that in this specification, any rotatable section may be either a full ring or a partial ring. The sections may be physically connected by a plug **212** of section **112** installed inside a track **218** of section **112'**. A track of the invention may be straight (i.e. a closed circle) or helical. Device **210** further includes an indication mechanism **116** which facilitates indicating rotation and/or rotated positions of each section relative to the other. As specifically shown in FIG. 2B, indication mechanism **116** includes an optical sensing mechanism **128** on plug **212**, and a visually detectable pattern **152'**, similarly to the described for device **120** (shown in FIG. 1I on section **112'**) on track **218** facing the mechanism **128.** Because rotation is relative, rotating one of sections **112** and **112'** in one direction (e.g. a clockwise direction **122a**) is sensed and indicated the same as rotating the other in an opposite direction (e.g. a counter-clockwise direction **122b).**

FIG. 2C shows a passive indication mechanism **116a** which can be implemented in a device **210.** Passively indication may be facilitated by any number of mechanisms known in the art powered by an external source (see e.g. US patent 6720866). In FIG. 2C, sections **112** and **112'** are shown separated from each other, to illustrate an indication location 154a on plug **212** of section **112** and indication locations **154b-d** on track **218** of section **112'**. When the sections are connected, location **154a** comes in contact with any of locations **154b-d**, correspondingly to a relative rotated position of the sections. Accordingly, at other relative rotated positions, location **154a** comes in contact with other locations on the track. By contact of location **154a** with each of locations **154b-d**, a relative rotated position of the sections, which corresponds to that contact, is indicated passively, such as by the contact of the locations forming a condition that can be detected remotely. For example, location **154a** may have a radio frequency identification (RFID) antenna, while each of the locations on the track **(154b-d)** may have a different RFID transponder for modulating incoming radio frequency signals differently. By connection (through contact) of the antenna with each of the transponder, only that transponder can modulate incoming signals captured and backscattered by the antenna. Thus, for any relative rotated position of the sections, a specific transponder is connected to the antenna so that the position may be indicated differently from other position.

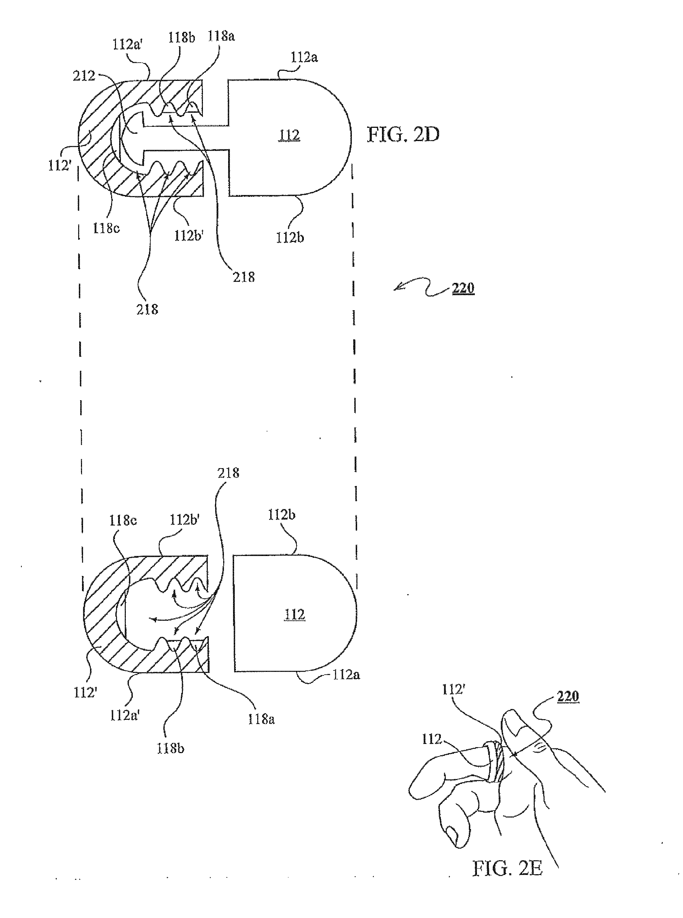

FIG. 2D shows an eighth embodiment of a finger-worn device of the invention as a device **220** similar to device **210**, wherein rotatable sections **112** and **112'** can be rotated relative to each other while plug **212** occupies one of a plurality of rotation tracks **218** at any given time. While being rotated, an indication mechanism can indicate to which track the rotatable sections are set at any given time (defined as "states" of the device or "device states"), in addition to indicating relative rotation (defined as a "use" of the device or "device use"). In FIG. 2D, the indication mechanism includes sensing mechanisms **118a-c** which facilitate indication of device states and use. Exemplarily, sensing mechanisms **118a-c** may be switches distributed to each track and activated by contact with plug **212**. Indications are obtained by contact of plug **212** with each switch, similarly to the described for indication locations of a passive indication mechanism **116a** in FIG. 2C. For example, the switches may be distributed among the tracks, so that contact of the plug with each switch is indicative of the track which the plug occupies. FIG. 2E shows device **220** worn on an index finger.

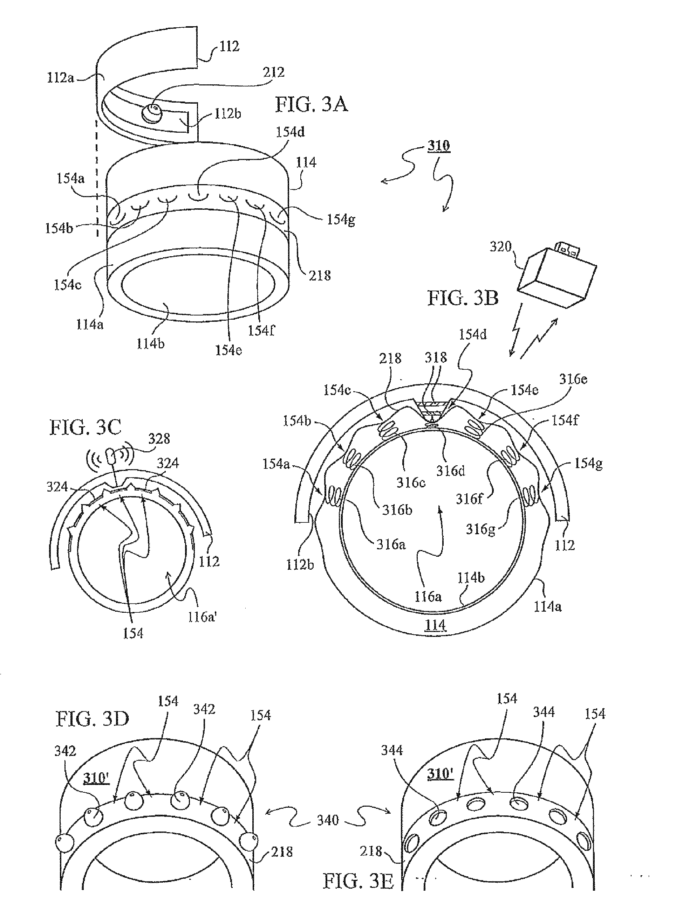

FIGS. 3A and 3B show a ninth embodiment of a finger-worn device of the invention as a device **310** which generally includes a rotatable section **112,** a stationary section **114** and a passive indication mechanism **116a** for passively indicating the rotation and specific rotated positions of section **112,** exemplarily to a separate party **320.** Passive indication may be facilitated by any number of mechanisms known in the art (see e.g. US patent 7212123). Section **112** is shown ready to be installed to rotate on a rotation track **218** which includes evenly spread indication locations **154a-g,** wherein each location corresponds to a specific rotated position of section **112.** Track **218** is formed on an external side **114a** of section **114.** Section **112** has a plug **212** on an internal surface **112b**. The plug may interact with (or "influence") each location (see e.g. FIG. 3B, in which plug **212** influences indication location **154d).** Therefore, in this embodiment, the indication mechanism includes plug **212** and locations **154a-g.** Exemplarily as shown in FIGS. 3A and 3B, plug **212** may include a capacitor **318** while each location **154a-g** may include a corresponding coil **316a-g.** When plug **212** influences an indication location, the capacitor comes in contact with the coil at that location to form a coil-and-capacitor circuit. Each coil may be different so that each circuit may have a different resonant frequency. Separate party **320** (exemplarily shown as a transceiver device) can send signals that stimulate resonance in each coil-and-capacitor circuit formed at device **310,** and can detects the response resonant energy which is indicative of specific rotated positions of section **112**. Accordingly, rotation of section **112** may be indicated by sequential changes in rotated positions of section **112.**

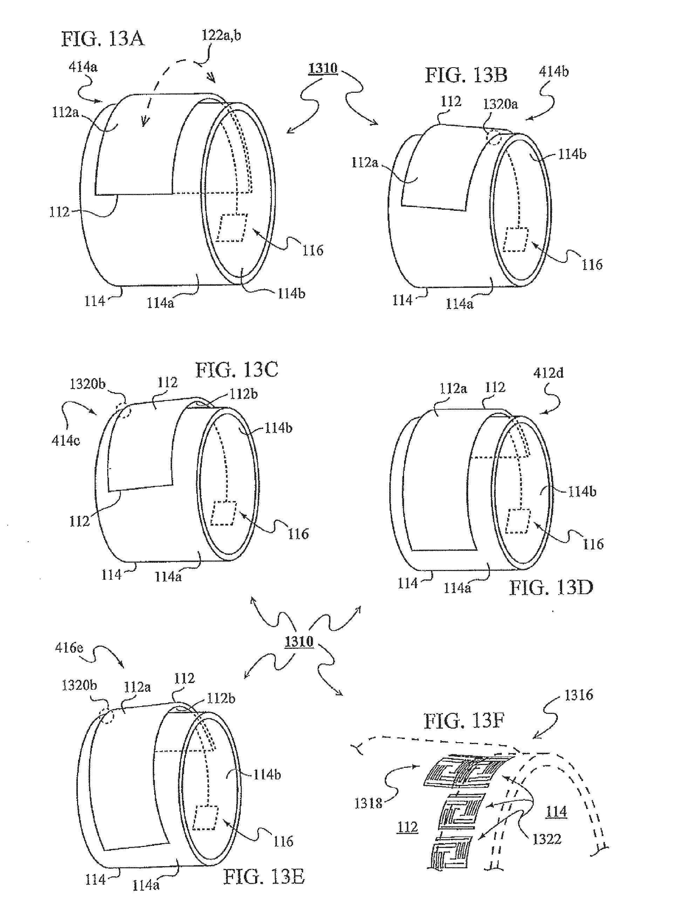

FIG. 3C shows another passive indication mechanism **116a** (as passive indication mechanism **116a'),** in which each indication location includes a corresponding passive transponder **324** while a plug **212** includes an antenna **326** (see e.g. US patent 4890111). Similarly to the described for passive indication mechanism **116a** in FIG. 2C, and as will be described for a transponder mechanism **1316** in FIG. 13F, by connection of the antenna with each transponder, when the plug is in an indication location corresponding to the transponder, a rotated position of a section **112** may be indicated.

In some embodiments, each indication location (e.g. indication locations 154**a-g** in device **310)** can physically accommodate plug **212,** such as to loosely hold it so that section **112** would not rotate unless enough force is applied (preferably by a user purposefully rotating the section). In embodiments where a rotatable section may be held in specific positions, these positions are referred to as "stations".

FIGS. 3D and 3E show a physical feedback mechanism **340** for modulating physical feedback when operating any device of the invention, such as the described above for "station". In FIG. 3C, mechanism **340** is shown in an embodiment of a device **310',** however mechanism **340** may influence any tilting operation or any other repositioning operation described herein.

For device **310',** pins **342** are specifically shown in FIG. 3D to be protruding between indication locations **154,** on track **218** on which rotatable section **112** rotate. The pins are designed to slightly obstruct plug **212** during the rotation of section **112,** to facilitate a physical feedback of slight obstructions during rotation. Additionally, when section **112** is not rotated (i.e. no force is applied to rotate the section) the plug is held between two pins, correspondingly to an indication location, for indicating a specific rotated position of section **112.** Section **112** can be rotated further by applying enough force to "release" the plug from between the pins. The pins may be controlled to protrude or retract, such as by having actuators.

Specifically shown in FIG. 3E, pins **342** are retracted into holsters **344,** for facilitating a smooth rotation of section **112** (i.e. no physical feedback of obstruction is felt while rotating the section). Accordingly, rotating section **112** (i.e. use of the device) is indicated by sequential indication from each indication location **154** that plug **212** passes through.

In some embodiments, the extent of protrusion of the pins may be modulated so that they can completely block plug **212,** and accordingly prevent section **112** from further rotating. In some cases, it might be desired to temporarily deny rotation, or "lock" section **112** in a rotated position. Later, the pins may be retracted to allow section **112** to rotate further, either smoothly or with physical feedback (i.e. when the pins are partially protruding).

In some embodiments, each pin **342** may be controlled individually. For example, it might be desired in some cases to block section **112** from reaching a specific rotated position. Accordingly, a pair of pins on either side of an indication location may be protruding from their respective holsters **344,** to block plug **212** from reaching that location, while the plug may reach any other location by rotating section **112** as the rest of the pins are retracted into their respective holsters.

In some embodiments, locking a rotatable section in rotated positions, and blocking access to rotated positions, may be controlled by operations of a device of the invention which includes a physical feedback mechanism **340.** For example, the device may be communicating with a separate party for controlling an interface element of that party by rotation of section **112.** In some cases, the interface element may not be available for being controlled. Accordingly, the separate party may send signals to the device, to trigger an operation of locking section **112** in its position (i.e. preventing it from further rotation). When the element later becomes available, locking may be deactivated.

In some embodiments, locking a rotatable section may be controlled manually by a user. For example, a device of the invention may be designed so that a user can press on a rotatable section to lock it in a position, while the user can further press on the rotatable section to release it from the locked position. Note that physical accommodation and locking as described herein may be achieved other mechanisms than the pins described above.

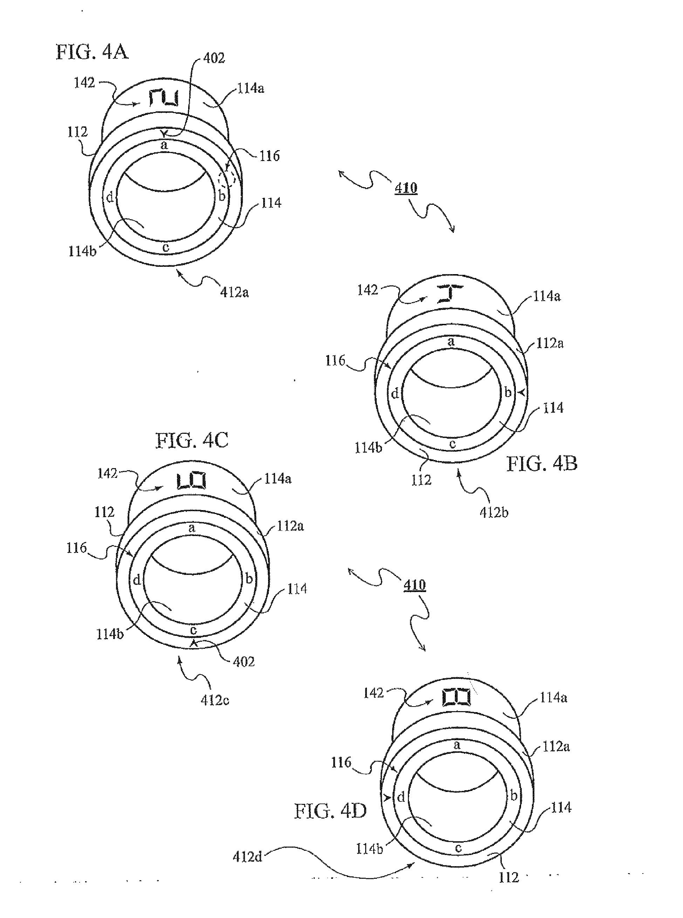

FIGS. 4A through 4D show a tenth embodiment of a finger-worn device of the invention as a device **410** which generally includes a rotatable section **112,** a stationary section **114** and an indication mechanism **116** for indicating specific rotated positions **412a-d** of section **112** relative to section **114.** Mechanism **116** is exemplarily located between the sections. Positions **412a-d** are represented by the pointing direction of an arrow-head mark **402.** Each position corresponds to an indication location, to exemplify an operation corresponding to each particular rotated position. In some embodiments, device **410** may further include a visual output mechanism **142** exemplarily located on external side **114a** of section **114.** Indication of each position **412a-d** may prompt a corresponding display by mechanism **142,** as part of an interface where specific rotated positions prompt specific operations. In FIGS. 4A through 4D, mechanism **142** is shown to display a different digit for each of the positions (digit 2 for position **412a,** digit 4 for position **412b,** digit 6 for position **412c** and digit 8 for position **412d).**

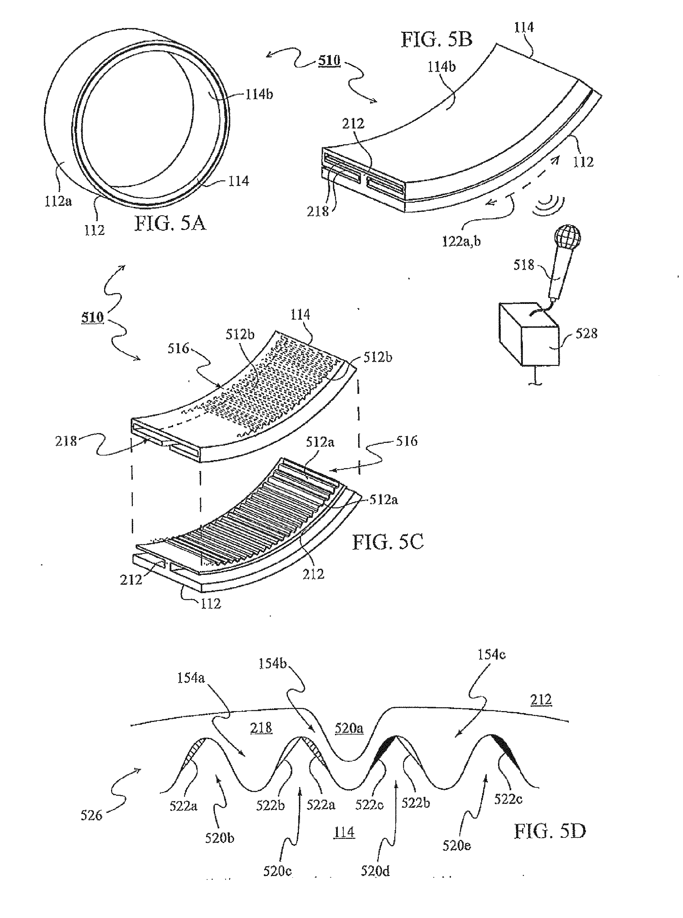

FIGS. 5A to 5C show a eleventh embodiment of a finger-worn device of the invention as a device **510** which generally includes a rotatable section **112,** a stationary section **114** and a vibrations generating mechanism **516** implemented as an exemplary indication mechanism. Vibrations may be obtained by friction and/or pressure between the sections during use of device **510** utilizing means known in the art (see e.g. US patent 3097537). In this embodiment, indication is facilitated by utilizing sound as an exemplary vibration reaction generated by the rotation. In FIGS. 5B and 5C, a T shaped plug **212** is shown to extend from section **112** and occupy a track **218** exemplarily formed by the shape of section **114.** Plug **212** and a track **218** are shown to respectively have physical patterns **512a** and **512b** of cogs, wherein the cogs pattern of the plug fits (accommodates) the cogs pattern of the track. The fitting (or "accommodation") of the cog patterns in various positions represents "stations" as explained above re. FIG. 3.

In use, when section **112** is rotated, the cogs of the pattern of the plug press against the cogs of the pattern of the track to generate sound. For example, each cog may include a thin metal flap which bends as the cogs press against each other, and vibrates when the pressure is released, and/or bumps against the flaps of adjacent cogs. Optionally, each direction **122a** and **122b** of rotation of section **112** may generate a different sound, to differentiate between the directions. This may be facilitated by having each side of each cog of at least one of the patterns react differently to pressure, and consequently generate a different sound than its opposite side. In some embodiments, the sound that is generated during rotation of section **112** can be detected by an acoustic sensor **518** (shown as a microphone in FIG. 5B), such as a piezoelectric transducer (as known for "pickups" of musical instruments). The sensor may be part of a vibrations recognition mechanism **528,** which may have a recognition function which is adapted to recognize sounds from device **510,** such as to register the sound as corresponding input.

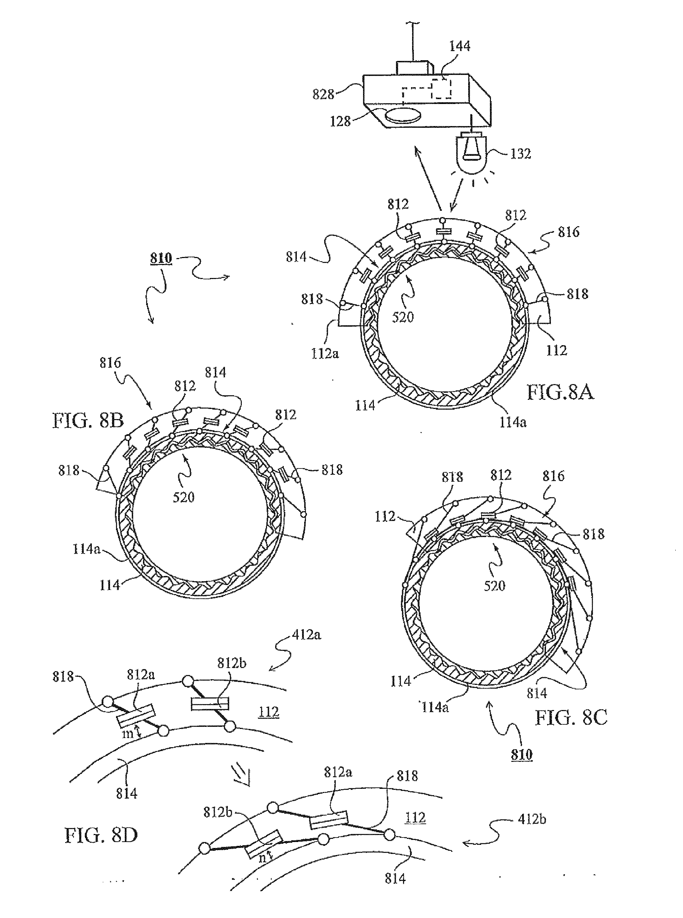

FIG. 5D shows a light generating mechanism **526** that can be implemented in a device **510,** alternatively to vibrations generating mechanism **516.** In FIG. 5D, a section **112** has a cog **520a** while a section **114** has cogs **520b-e** forming exemplary indication locations **154a-c** as slots between two cogs. Cog **520a** interchangeably fits into each slot during rotation of section **112.** The external sides of each slot are formed by a pair of opposite sides of two cogs, wherein cog **520a** must press against one of these sides to fit into that slot, depending on the direction of rotation of section **112.** In some embodiments, each such pair of opposite sides may include a differently reactive material or composition or mechanism which generates a different light emission reaction when reacting to pressure or the release thereof. Shown in FIG. 5D are the opposite sides of cogs **520b** and **520c** (forming location **154a)** including a triboluminescent component **522a,** opposite sides of cogs **520c** and **520d** (forming location **154b)** including a triboluminescent component **522b** and opposite sides of cogs **520d** and **520e** (forming location **154c**) including triboluminescent component **522c**. Each component may include a different triboluminescent material or a different composition of the same triboluminescent material (e.g. quartz crystal), for generating a different luminescent reaction from the friction between the cogs pressing against each other. Accordingly, the light emission (i.e. luminescent reaction) when cog **520a** is moved from one slot to another is distinct for the "target" slot (the slot to which the cog is being moved to), and may be indicative of the rotated position of section **112** at which cog **520a** fits into the target slot. Section **112** may generally be transparent, to facilitate the output of the light from the device. Light generated by mechanism **526** may be mild sparks that are enough to be detected as indications by a visual recognition mechanism **828** as shown in FIG. 8A.

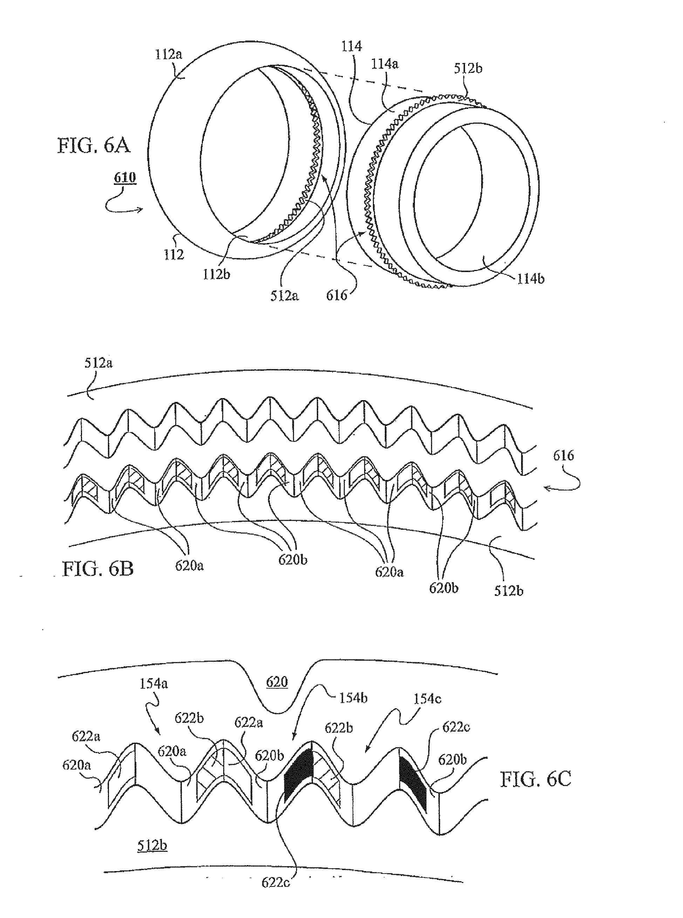

FIGS. 6A and 6B show a twelfth embodiment of a finger-worn device of the invention as a device **610** which includes a rotatable section **112,** a stationary section **114** and a power generating mechanism **616** for generating power to operations of the device and for indicating rotation of section. Generating power is facilitated by converting use to electricity by any number of mechanisms known in the art. In FIGS. 6A and 6B, mechanism **616** is shown to include a pattern **512a** of cogs **620** protruding from an internal side **112b** of section **112,** and a pattern **512b** of cogs **620** protruding from an external side **114a** of section **114** so that the cogs of both pattern fit together when the sections are connected. In FIG. 6B, each of the cogs of pattern **512b** are shown to have one side **620a** and an opposite side **620b.** Similarly to the described for device **510,** when section **112** is rotated, the cogs of pattern **512a** press against either side **620a** or side **620b** of every cog of pattern **512b,** depending on the direction of rotation. Generating electricity, such as electric voltage, may be facilitated by converting the force applied to rotate section **112** to electric energy. For example, each side of the cogs of pattern **512b** may include a transducer which can convert pressure to an electric current (see e.g. US patent 7005780), such as the pressure caused from the cogs of pattern **512a** pressing against any of sides **620a,b** when section **112** is rotated in any direction. The electricity generated by mechanism 616 may be utilized to supply energy for operations of device **610,** such as by "powering-up" components and/or mechanisms of the device. The electricity may be utilized, additionally or alternatively, to recharge any rechargeable power-source of the device. Power generating mechanism **616** may be utilized, in addition to the described above, as an exemplary indication mechanism, such as by detecting different electric voltages generated by mechanism **616** correspondingly to different uses of the device.

In one example, side **620a** includes a first piezoelectric material, whereas side **620b** includes a second piezoelectric material. When the cogs of pattern **612** are pressed against sides **620a** of the cogs of pattern **512b** by rotation of section **112** in one direction, the pressure causes the first piezoelectric material to generate a certain electric voltage. When the cogs of pattern **512a** are pressed against sides **620b** of the cogs of pattern **512b** by rotation of section **112** in an opposite direction, the pressure causes the second piezoelectric material to generate a different electric voltage. The two different voltages may then be utilized to differentiate between directions of rotation of section **112.**

In another example, similarly to the described for the indication mechanism in FIG. 5D, pattern **512a** may include one cog **620,** while in pattern **512b,** a side **620a** of one cog and a side **620b** of an adjacent cog include the same piezoelectric material, so that the voltage generated by the cog of pattern **512a** pressing on any of these sides to fit between these cogs is the same. Alternatively, that voltage is different for any opposite sides of two adjacent cogs. FIG 6C shows indication locations **154a-c** as slots formed by four cogs **620** of pattern **512b,** wherein side **620a** of a first of each pair of cogs that form a slot, and side **620b** of a second cog of that pair, include the same piezoelectric component, e.g. transducer **622a.** This transducer is different from the transducer included in a side **620a** of a first cog and in a side **620b** of a second cog of every other pair (e.g: transducers **622b** and **622c).**

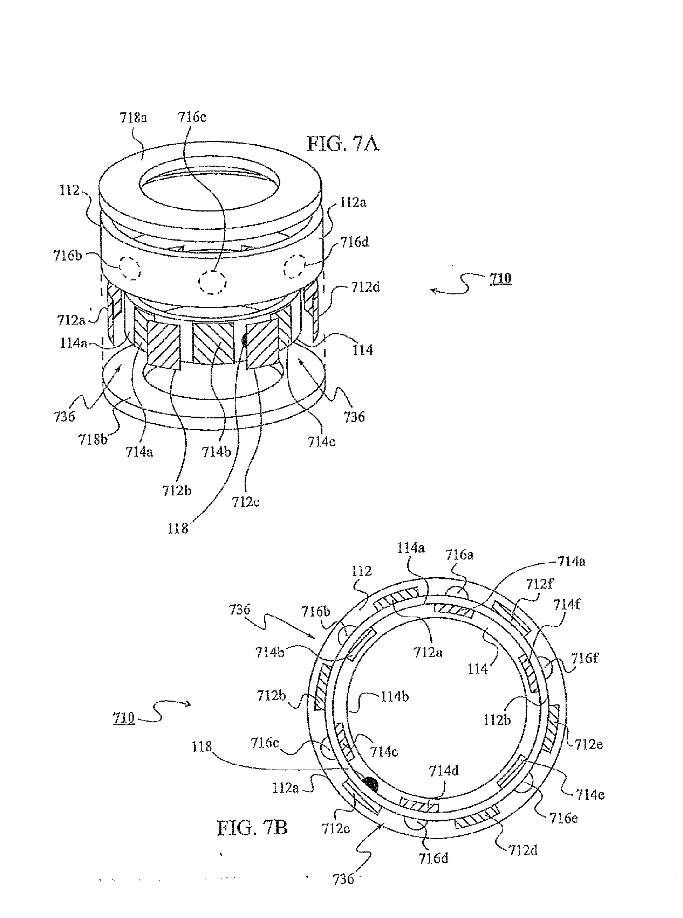

FIGS. 7A and 7B show a thirteenth embodiment of a finger-worn device of the invention as a device **710.** Device **710** includes a rotatable section **112** having magnets **712a-f,** in between which are circuits **716a-f,** and a stationary section **114** having magnets **714a-f.** The magnets and the circuits are part of a magnetic mechanism **736** of the device utilized for influencing rotation and rotated positions of section **112** In FIGS. 7A and 7B, magnets **712a-f** and circuits **716a-f** are exposed at an internal side **112b** of section **112,** with their north pole facing an external side **114a** of section **114.** Additionally, magnets **714a-f** are exposed at external side **114a,** with their north pole facing internal side **112b.** Section **112** is bounded by a side section **718a** and a side section **718b** to prevent it from being repelled off of section **114** by the repulsion of the magnets on each section. Accordingly, sections **718a** and **718b** form a track **218** on which section **112** can be rotated. Each circuit **716a-f** can be activated to generate a magnetic field, which can either have its north pole or its south pole directed at external side **114a,** depending on the direction of the current. When each circuit **716a-f** generates a magnetic field that has its north pole directed at external side **114a,** section **112** is evenly repelled from section **114** and thus "hovers" on it (utilizing a magnetic levitation effect, or magnet suspension effect). When each of the circuits generates a magnetic field that has its south pole directed at external side **114a,** section **112** "settles" at a rotated position where each circuit **716a-f** is directly facing one of magnets **714a-f** that was nearest to it when the magnetic fields where activated, as each circuit is attracted by a magnet on section **114** that was closest to it. This is caused by the pattern of magnetic attraction and repulsion formed by circuits **716a-f** and magnets **712a-f.** Section **112** is then loosely held at the rotated position at which it "settled" when the magnetic field were activated, because each circuit is attracted to the magnet it is facing, and because magnets **712a-f** repelled from further rotating by magnets **714a-f.** If enough force is applied to "overcome" the repulsion between the magnets of on each section, section **112** can be rotated to any other position where circuits **716a-f** directly face magnets **714a-f.** This simulates a "feeling" of section **112** being physically accommodated at specific rotated positions, thereby implementing a stations configuration as explained above re. FIGS. 3C, D. Accordingly, mechanism **736** may be implemented as an exemplary physical feedback mechanism **340.** As shown in FIGS. 7A and 7B, device **710** may further include, in addition to the described above, a sensing mechanism **118** for sensing and indicating rotation of section **112,** and/or specific rotated positions of section **112.** In some embodiments, mechanism **118** may be located on external side **114a** facing internal side **112b** and may utilize magnetic sensors for sensing changes in magnetic fields caused by relative motion of the magnets and/or circuits.

In accordance with the above, any magnetic or electromagnetic elements and effects may be utilized to influence rotation and/or rotated positions of a rotatable section. For example, diamagnetism may be utilized by including a pyrolytic-carbon material, to facilitate levitation of a rotatable section **112** on a stationary section **114.**

FIGS. 8A through 8C show a fourteenth embodiment of a finger-worn device of the invention as a device **810,** in which a passive indication mechanism is implemented as an interferomeric reflection mechanism **816** that modulates light reflection to facilitate indication. Device **810** includes a transparent rotatable section **112** having cogs **520** and a stationary section **114** having similar cogs that fit together with the cogs of section **112,** to provide a plurality of physically accommodated rotation positions as stations. In FIGS. 8A through 8C, reflection mechanism **816** is generally shown having sheets **818** connected to both section **112** and section **114.** Connected to the sheets are substrates **812,** each of which, as shown in close-up in FIG. 8D, includes a transparent layer **812a** and an optical thin film **812b.** Also specifically shown in FIG. 8D is an absorber layer **814.** The absorber layer covers an external side **114a** of section **114,** as shown in FIGS. 8A through 8C. For each station (i.e. rotated position where the cogs of section **112** fit together with the cogs of section **114),** the distance between substrates **812** and absorber layer **814** is different, while each substrate **812** always overlaps a part of layer **814** that is parallel to it, as shown in FIG. 8D. At the top of the figure is a rotated position **412a** where the distance between each substrate **812** and layer **814** is m, while at the bottom of the figure is a rotated position **412b** where the distance between each substrate **812** and layer **814** is n, which is shorter than m. Shown in FIGS. 8A through 8C, are different stations in which sheets **818** have different angles with layer **814.** Exemplarily, the more the angle is straight, the farther substrates **812** are from external side **114a** and accordingly from absorber layer **814.** Controlling the distance between layer **814** and substrates **812,** while having a part of the layer that is always parallel to a substrate, facilitates modulating the color generally reflected from the device, in accordance with any interferometric modulator known in the art to control the wavelength of reflected light (see e.g. US Patents 7113339 and 6952303), so that mechanism **816** acts as a mechanical interferometric modulator and an indication mechanism indicating rotated positions of section **112** by different reflected colors. Indications may be detected by sensing light generally reflected from the device, specifically different colors, each indicative of a position. In FIG. 8A, reflected light is shown to exemplarily be detected by a visual recognition mechanism **828** which may include an optical sensing mechanism **128.** Mechanism **128** may be connected to a processing unit **144** having a recognition function for recognizing certain reflected properties as indications of rotated positions of section **112.** Optionally, mechanism **828** may further include a light source **132** for illuminating the device. Alternatively, device **810** may include, in addition to the described above, its own light source **132** for illuminating the device, such as in case no external source of light is available, or such as in low lighting conditions. Note that an interferometric modulation effect may be achieved by any other mechanical apparatus implemented in a device of the invention for reflecting different colors for different rotated positions. Additionally, such apparatus may be implemented to modulate reflection correspondingly to other kinds of states of a device, such as tilted positions.

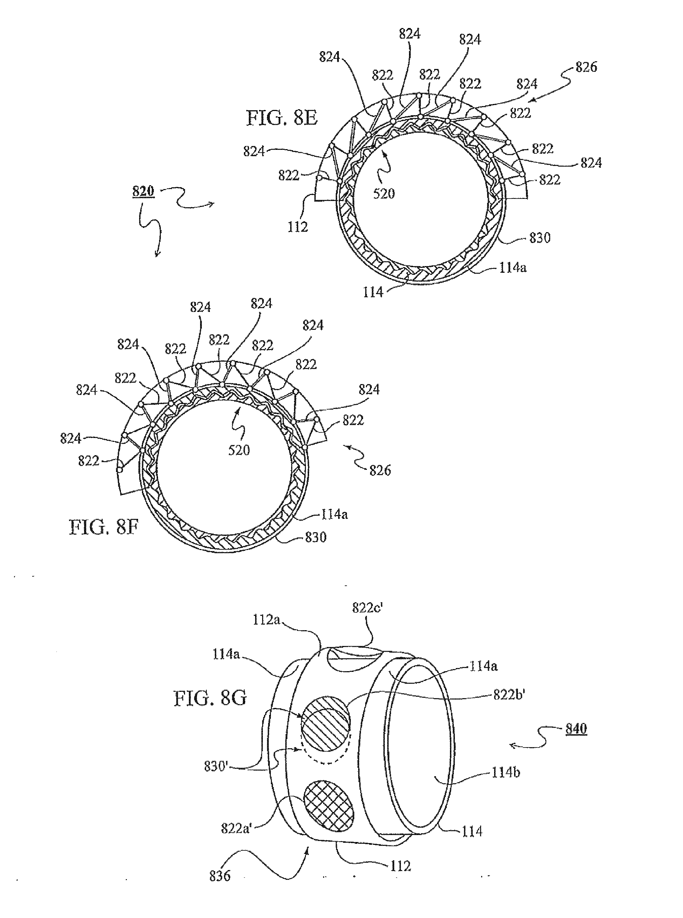

FIGS. 8E through 8F show a fifteenth embodiment of a finger-worn device of the invention as a device **820,** similar to device **810,** having a general reflection mechanism **826** as a passive indication mechanism, which utilizes dynamic and opaque shutters **824** and optical filters **822** which filter light with certain properties (e.g. polarization axis, wavelength, etc.) correspondingly to their angle with an external side **114a** of section **114** which is shown in the figures to be covered by a reflective surface **830.** Similarly to the described for sheets **818,** and as shown in FIGS. 8E and 8F, the filters are at different angles with the surface for different rotated positions of section **112.** Shutters **824** block light from reaching surface **830** other than through filters **822.** The filters may be interference filters, for example, wherein rotation may change their position and/or location relative to the surface.

FIG. 8G shows a sixteenth embodiment of a finger-worn device as a device **840** that includes a rotatable section **112,** a stationary section **114** and a reflection mechanism **836** which utilizes optical filters **822a-c'** on section **112** and acts as an exemplary indication mechanism. Each filter has distinct filtering properties, providing for examples different colors (filter **822a'** shown with crossed lines for illustrating a first color, filter **822b'** shown with lines for illustrating a second color and filter **822c'** shown with no lines to exemplarily illustrate transparency). Mechanism **816** may further utilize a fluorescent surface **830'** on an external side **114a** (surface **830'** is shown as a circular surface partially covered by section 112 and partially apparent through filter **822b').** In specific rotated positions of section **112,** each of filters **822a-c'** overlaps surface **830',** so that light reaching the surface and emitted from the surface must pass through that filter, which exemplarily determines the color of the light as it passes through. Accordingly, light may generally be emitted from device **840** having one of three colors which corresponds to one of the three filters. Each color may be detected for registering a different input than input registered by the detection of the other colors.

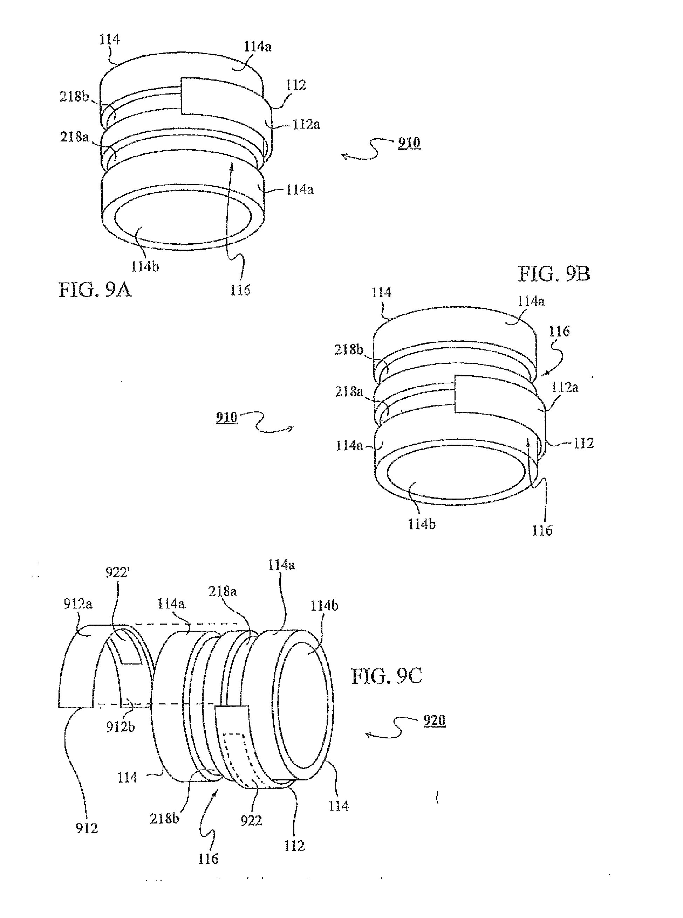

FIGS. 9A and 9B show an seventeenth embodiment of a finger-worn, device of the invention as a device **910** which generally includes a rotatable section **112** and a stationary section **114** having rotation tracks **218a,b.** Section **112** can be set to rotate on any track **218.** Device **910** further includes an indication mechanism **116** (exemplarily implemented on each track) for indicating differently the rotation on each track (device use), and/or for indicating on which track section **112** is set to rotate at any given time (device state). Note that the rotation on each track may be indicated as being "SAME", while different indicated states (of the rotatable section being set to any track) may correspond to registering a different input from the rotation on each track.

FIG. 9C shows an eighteenth embodiment of a finger-worn device of the invention as a device **920** similar to device **910,** which includes a plurality of rotatable sections **112.** In FIG. 9C, device **920** includes, additionally to the described above, a rotatable section **912** similar to rotatable section **112.** Section **912** is shown to include a connection mechanism **922'** on an internal side **912b** so that it may be connected to and disconnected from device **920,** specifically to and from any of tracks **218a,b** on which it may be rotated to indicate specific use of the device. For example, connection mechanism **922'** may utilize mechanical clips on side **912b** to physically attach section **912** to each track. Section **912** may specifically be connected to any track not occupied by another rotatable section, and may be disconnected from a track it occupies. For a more specific example, track **218a** may correspond to controlling audio volume, while track **218b** may correspond to controlling the playback of any audio file. Additionally, section **112** may correspond to a first audio file, while section **912** may correspond to a second audio file. Each file may exemplarily be stored on a memory unit (e.g. memory unit **146)** of each rotatable section, so that connection of each section to a track facilitates accessing the file. Alternatively, specific indication of rotation of each section may correspond to registering specific input for controlling each file. A user may connect any one of the rotatable sections to the device (in case section **112** also has a connection mechanism **922,** and may be connected and disconnected from any of the tracks) to play the file corresponding to that section. Connection of the section may specifically be to each of the tracks, for controlling audio volume and playback of the file. The user may disconnect the rotatable section and connect the other section, to play the audio file corresponding to the other section, and for controlling audio volume and playback of that file. In some embodiments, a first section may remain connected to a track which corresponds to controlling audio volume, while a second section is connected to a track which corresponds to controlling playback, so that volume and playback may be controlled simultaneously by the two sections connected to the tracks. According to the above, each section and each track may correspond to different interface elements or different operations. Moreover, in device **920,** both rotatable sections may be connected permanently (i.e. excluding any connection mechanism).

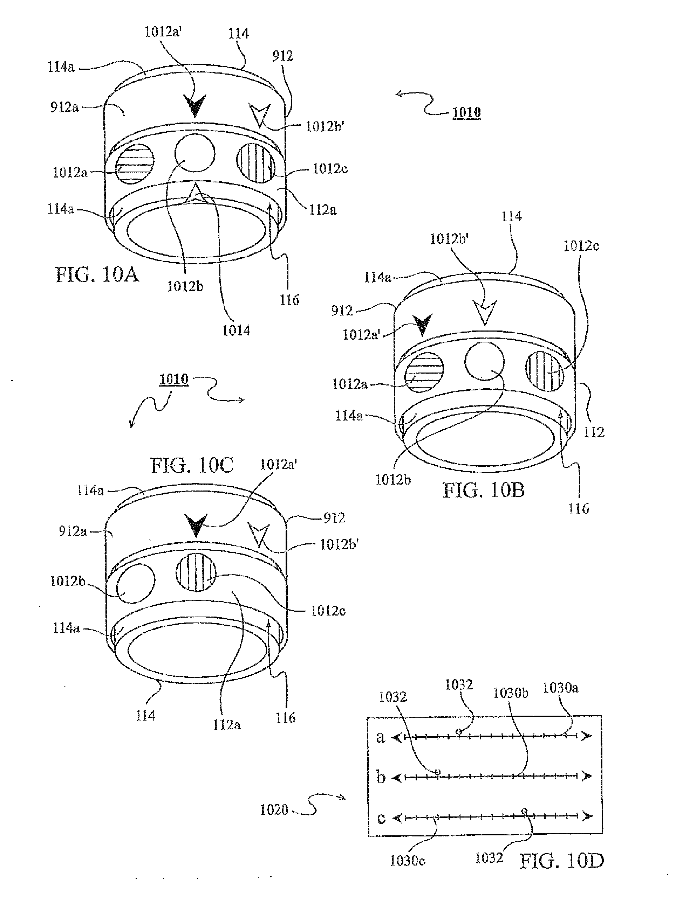

FIGS. 10A, 10B and 10C show a nineteenth embodiment of a finger-worn device of the invention as a device **1010** being utilized for different operations. Device **1010** is similar to device **920** but further includes a visual output mechanism on the external side of each rotatable section, namely on external side **112a** of section **112** and on an external side **912a** of section **912.** Exemplarily displayed on side **112a** are displayed objects **1012a, 1012b** and **1012c.** Exemplarily displayed on side **912a** are displayed objects **1012a'** and **1012b'.** In device **1010,** each of the objects may be any displayed entity as part of an exemplary visual output mechanism. For example, specifically in device **1010,** each object may be a letter or digit composed of activated liquid crystals in a liquid crystal display (LCD). For another example, the objects may be graphic symbols composed of pixels of light emitting diodes (LEDs). In FIGS. 10A, 10B and 10C, each of displayed objects **1012a, 1012b** and **1012c** exemplarily represents an interface element. For example, each of the objects may be a graphic symbol (e.g. "icon") representing of a different file, such as by being a number corresponding to a file in a list of numbered files. Additionally, each of displayed objects **1012a'** and **1012b'** exemplarily represents a function. For example, object **1012a'** may be a graphic symbol representing "compression" (of files) while object **1012b'** may be a graphic symbol representing "deletion". When a particular file symbol is aligned with a function symbol, that function is performed on the file. For example, when object **1012a** is aligned with object **1012a',** the file corresponding to object **1012a** is compressed. Optionally, when the process is done, object **1012a** is exemplarily blinking, as a visual feedback. For another example, when object **1012b** is aligned with object **1012b'** (in FIGS. 10B) the file corresponding to object **1012b** is deleted, while object **1012b** may exemplarily cease from being displayed by the visual display mechanism. Execution of functions may be prompted indication of alignments, or by information of alignments being obtained from indication of rotated positions of the rotatable sections. FIG. 10B shows the result of rotating section **912** counter-clockwise from its position in FIG. 10A, while FIG. 10C shows the result of rotating section **112** counter-clockwise from its position in FIG. 10A.

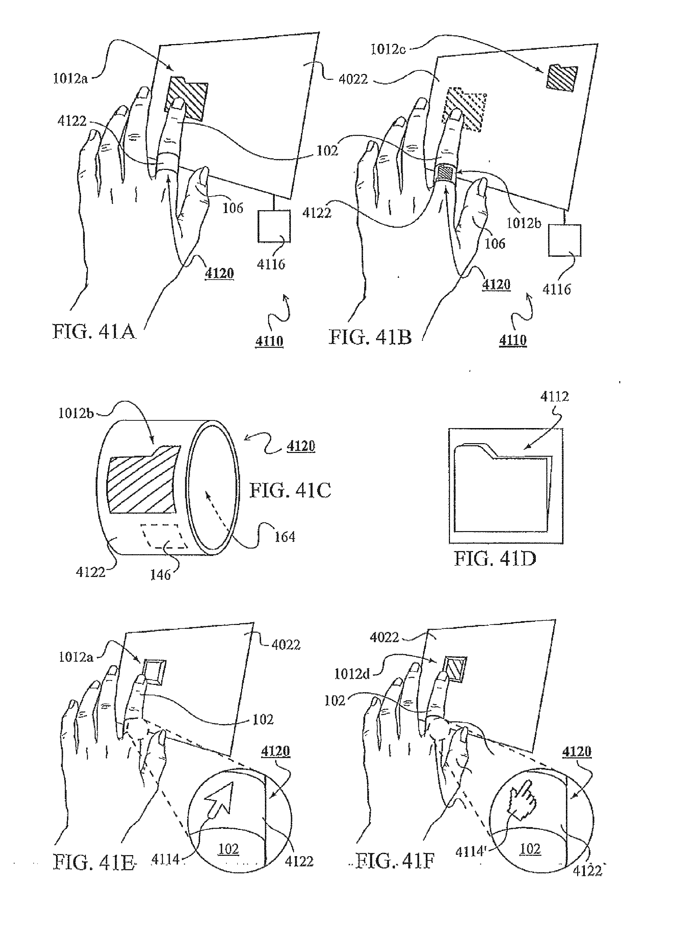

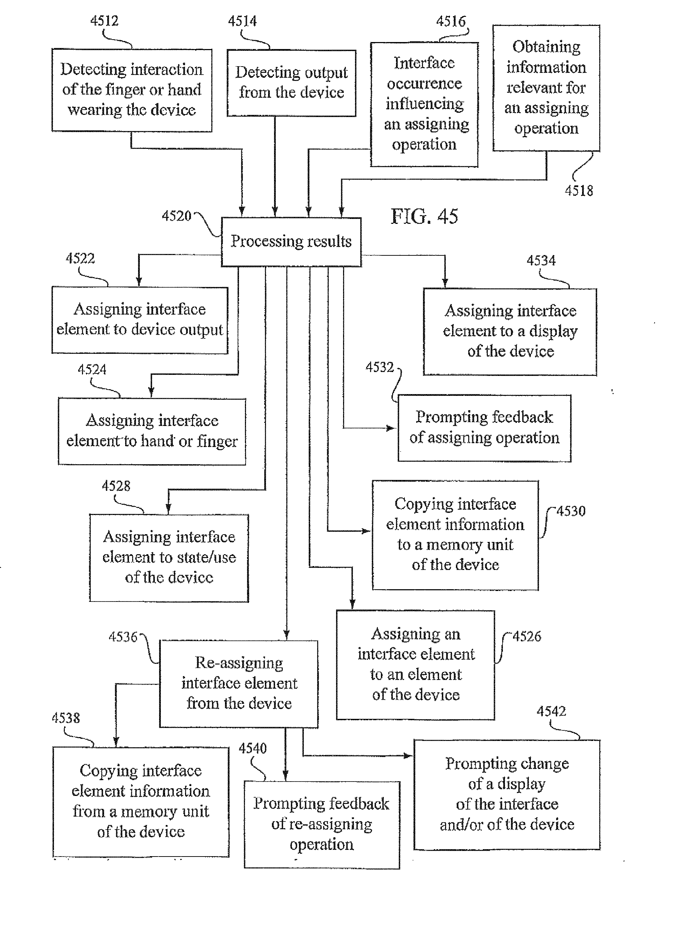

In some embodiments, the displayed objects may correspond to interface elements which were assigned to device **1010** (see FIGS. 41A-41K, and the method in FIG. 45).

Similar results may be achieved by different alignments of rotatable section **112** with rotatable section **112'** in a device **210** (see FIGS. 2A and 2B) which may include a visual output mechanism on each section.

Note that the description of FIGS. 10A-C is exemplary, to illustrate the method of alignment for controlling interfaces. This description applies equally well to devices with only rotatable sections (e.g. as in FIGS. 2) and to devices with one stationary section and one rotatable section, wherein alignment is between specific locations on the stationary section (e.g. a location **1014** shown in FIG. 10A) and specific locations on the rotatable section.

In device **920,** alignments may also correspond to specific locations on section **114.** For example, a function represented by any of objects **1012a'** and **1012b'** may be executed on any of the files represented by objects **1012a-c** only if the function object and the "target" file object are both aligned with location **1014** shown on section **114.** In FIG. 10A, alignment of each of the objects shown in FIGS. 10A-C with location **1014** necessarily corresponds to a specific rotated position of the rotatable section on which that object is displayed.

According to the above, combinations or alignment of rotated positions of rotatable sections of a device of the invention, may be specifically indicated, or registered as input from indications of each position, so that each combination or alignment may correspond to a different operation, either of the device or of a separate party receiving the indications.

FIG. 10D shows an interface **1020,** having multiple elements controllable by finger-worn devices of the invention. In FIG. 10D the interface exemplarily includes elements **1030a-c.** Each element may be any series of members, such as being a scale of values or list of functions. In interface **1020,** each element has a controllable selection **1032** for selecting any one member at any given time. The selection is shown in FIG. 10E as a circle marking a location on each element, while specific locations correspond to members of the element. In some embodiments, the selection of each element may be moved from one member (i.e. specific location) to another by rotation of a rotatable section, while multiple rotatable sections may be for controlling multiple elements. For example, in a device **920,** rotation of section **112** may be assigned to move selection **1032** of element **1030a,** while rotation of section **912** may be assigned to move selection **1032** of element **1030b.** Additionally, simultaneous rotation of both sections (i.e. sections **112** and **912**) may be assigned to move selection **1032** of element **1030c.** Accordingly, rotation of each of the sections individually and both of the sections simultaneously may facilitate selecting members of the elements in interface **1020.** In some embodiments, assigning control to each and both sections, or for rotation of each and both sections, may be temporary, and may be changed by further assigning.

In another method for utilizing device **920** for controlling an interface **1020** which has multiple elements **1030,** each element corresponds to a specific alignment of a section **112** with a section **912** (similarly to the described in FIGS. 10A-C), while scrolling through each element (i.e. controlling a selection **1032** of that element) is by simultaneous rotation of the two sections, during which the alignment between the two sections remain the same.

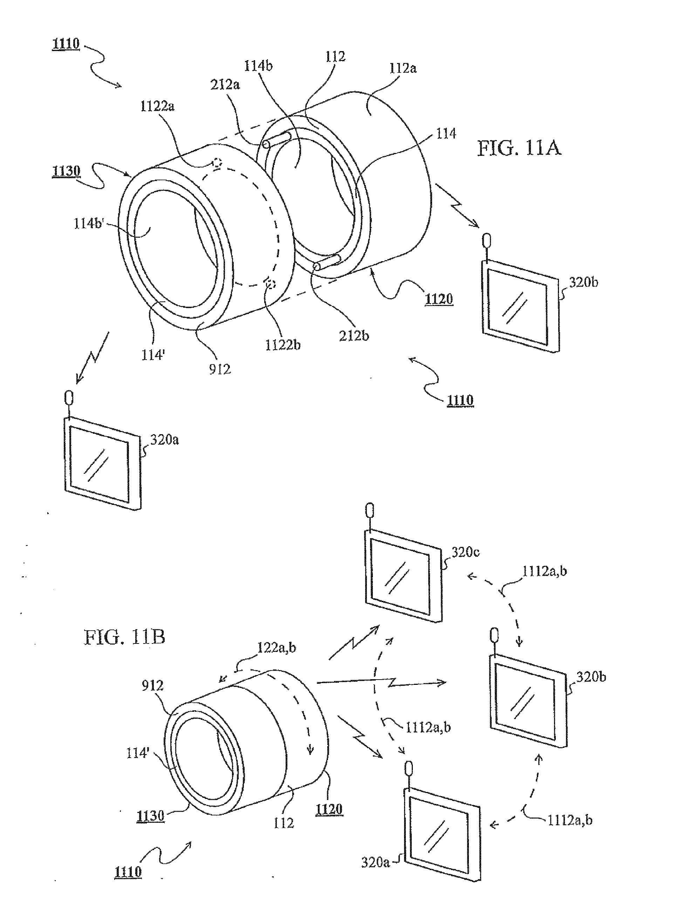

FIGS. 11A and 11B show a twentieth embodiment of a finger-worn device of the invention as a device **1110** generally including a plurality of devices connected "back-to-back". Note that in general, any two devices of the invention may be connected this way. Device **1110** is shown in FIGS. 11A and 11B to include a device **1120** and a device **1130.** Device **1120** generally includes a rotatable section **112,** a stationary section **114** and an indication mechanism, whereas device **1130** generally includes a rotatable section **912,** a stationary section **114'** and an indication mechanism. A connection mechanism **922** of device **1110** facilitates connecting devices **1120** and **1130,** and is shown here to be embodied as a socket **1122a** and a socket **1122b** on device **1120** and a plug **212a** and a plug **212b** on device **1130,** whereas plug **212a** can fit into socket **1122a** and plug **212b** can fit into socket **1122b.** In some embodiments, information and/or electricity can be transferred by the connection of the two devices by mechanism **922,** from one device to the other and vice versa. Devices **1120** and **1130** may further have an additional indication mechanism, or a plurality thereof (e.g. one for each device), for indicating a connected state and/or a disconnected state of the device, respectively. Alternatively, mechanism **922** may indicate connection, such as by utilizing a switch in each socket, activated by a plug being inserted into each socket.

In some embodiments, device **1110** may provide more control functions than the control features of separated devices **1120** and **1130.** For example, as specifically shown in FIG. 11A, when separated from device **1130,** device **1120** may control a separate party **320a,** such as by indications of rotation transmitted to separate party **320a.** Similarly, when separated from device **1120,** device **1130** may control separate party **320b.** As specifically shown in FIG. 11B, when connected together, devices **1120** and **1130** may facilitate control of a separate party **320c,** in addition to separate parties **320a,b.** Rotation of section **112** of device **1120** in rotation directions **122a,b** may be for selecting any one of separate parties **320a-c** by browsing between the separate parties in corresponding directions **1112a,b** (i.e. generally clockwise and counter-clockwise in the figure) while rotation of section **912** of device **1130** may be for specifically controlling any one of separate parties **320a-b** that was selected by rotation of section **112** of device **1120.** Note that the connected devices may operate in the same way as a device having multiple rotatable sections (e.g. as described in FIGS. 10).

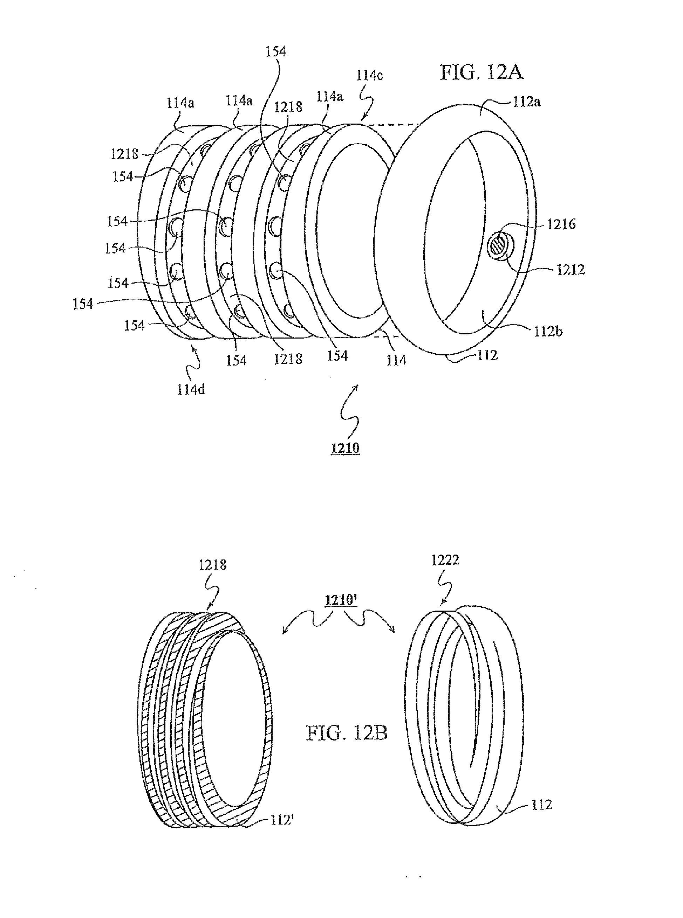

FIG. 12A shows a twenty first embodiment of a finger-worn device of the invention as a device **1210,** in which a rotatable section **112** is set to rotate on a helical track (i.e. a track shaped similarly to a screw-like groove). In FIG. 12A, device **1210** is shown to generally include a rotatable section **112** and a stationary section **114** that has a helical track **1218** curved on an external side **114a.** Accordingly, section **112** can be rotated along the curve of the track, towards a side **114c** or **114d** of section **114.** Device **1210** further includes an indication mechanism exemplarily including a plurality of indication locations **154** along track **1218,** each corresponding to a specific rotated position of **section 112,** and also utilizing a clicker **1212** on an internal side **112b** which can be "clicked" to any extent and can fit into any of the indication locations. In some embodiments, the clicker can be physically accommodated in each indication location (for the stations effect). Indications may be facilitated by clicker **1212** having a pressure sensing mechanism **1216,** which is utilized for the indication mechanism of the device, while each indication location may have a different depth from any other. Accordingly, when the clicker is accommodated in a certain location, it is pressed (i.e. clicked) to a different extent, wherein the extent is measured by the pressure sensing mechanism and indicated further.

Following the above, any connection mechanism **922** of a device of the invention may facilitate connection of two sections of the device, or two separate devices (ref. FIGS. 11A and 11B) by "screwing" them together, wherein a rotatable section is screwed on an open helical track **1218** of another section, while rotation on the track, and specific rotated positions, may be indicated by any indication mechanism **116.** For example, in an embodiment of a finger-worn device, shown as a device **1210'** in FIG. 12B, and similar to device **210,** a helical plug **1222** of a rotatable section **112** may be screwed manually in and out of an open helical track **1218** of a section **112'** (by rotating section **112** towards section **112'** or vice versa), as opposed to a plug **212** being installed inside a close straight track. Accordingly, the sections may be connected and disconnected by the screwing.

FIGS. 13A through 13E show a twenty second embodiment of a finger-worn device of the invention as a rotatable and tiltable device **1310.** As shown in FIG. 13A, a device **1320** generally includes a rotatable section **112** and a stationary section **114,** wherein section **112** can be rotated according to rotation directions **122a,b** and an indication mechanism **116.** As shown in FIGS. 13B, 13C and FIG. 13E, section **112** can be tilted relative to section **114,** such as to contact section **114** in either a contact location **1320a** (FIG. 13B) or a contact location **1320b** (FIGS. 13C and 13E). Specifically shown in FIG. 13B is a tilted position **414b** of section **112,** and in FIG. 13C a tilted position **414c** of section **112.** In some embodiments, section **112** can be rotated while not tilted, as specifically shown in FIG. 13D a rotated position **412d** of section **112.** Additionally or alternatively, section **122** can be rotated while tilted, as specifically shown in FIG. 13E a rotated and tilted position **416e.**

FIG. 13F shows a transponder mechanism **1316** as an exemplary passive indication mechanism for indicating tilt. Mechanism **1316** utilizes a transponder circuitry having an antenna **1318** (shown to be on a section **112**) and different passive transponders **1322** (shown to be on a section **114**). Similarly to the described for a passive indication mechanism **116a** in FIGS. 2C and 3C, each transponder may be an indication location for indicating contact of section **112** with section **114** specifically at that location, where section **112** is in a specific tilted position. Only one transponder may be connected to the antenna at each specific tilted position, thus only that transponder can respond to incoming signals when section **112** is tilted on it. Accordingly, detecting responses from a connected transponder-and-antenna facilitates obtaining an indication of the position of section **112.**

Note that while the described herein is for rotatable and tiltable devices having a rotatable section and a stationary section, it is clear that devices of the invention which include only a rotatable section may be tiltable (i.e. any rotatable section can be adapted to be also tiltable relative to any other rotatable section) and may attain all the features described herein for rotatable and tiltable devices. For example, referring to the described for device **220** in FIG. 2D, the device may be adapted so that section **112** can be tilted relative to section 112' and/or so that section **112'** can be tilted relative to section **112,** while tilt of any of sections **112** and **112'** may be indicated by any mechanism described herein for indicating tilt (e.g. transponder mechanism **1316**).

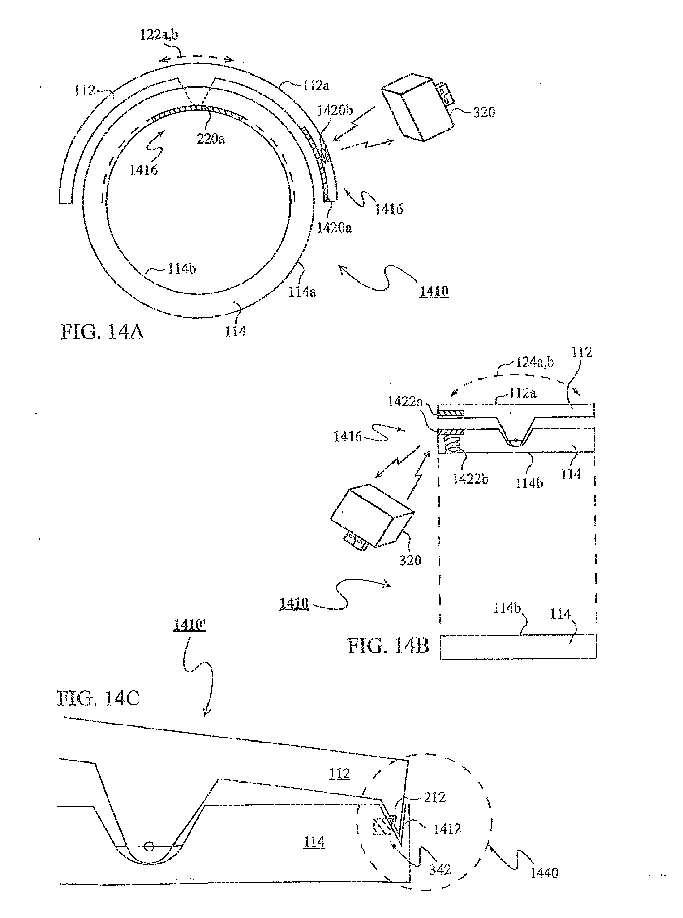

FIGS. 14A and 14B show a twenty third embodiment of a finger-worn device of the invention as a rotatable and tiltable finger-worn device **1410** similar to device **1310.** Device **1410** includes a rotatable section **112,** a stationary section **114** and a passive indication mechanism implemented as a resonance mechanism **1416.** Section **112** may be rotated relative to section **114** in rotation directions **122ab,** and may also be tilted relative to section **114** in tilt directions **124a,b.** In FIGS. 14A and 14B, mechanism **1416** is shown to include a coil-and-capacitor resonant circuit **1420** and a coil-and-capacitor resonant circuit **1422,** both of which can oscillate in response to stimulations from incoming signals, shown originating from a separate party **320.** Circuit **1420** includes a capacitor **1420a** connected to a coil **1420b,** while circuit **1422** includes a capacitor **1422a** connected to a coil **1422b.** Capacitors **1420a** and **1422a** are divided between section **112** and section **114** so that relative motion in directions **122a,b** and **124a,b** changes the capacity of capacitors **1420a** and **1422a,** respectively, and with it the resonant frequency of circuits **1420** and **1422.** In some embodiments, signals from party **320** cause circuits **1420** and **1422** to resonate, wherein the energy emitted by resonating circuits **1420** and **1422** has specific properties corresponding to the positions of section **112** relative to section **114.** The energy is accordingly indicative of rotated and/or tilted positions of section **112,** and may be detected by separate party **320,** as shown in the figures. Combinations of indications of rotated and/or tilted positions may be registered as specific input. In other embodiments, other compositions of coils and capacitors may be implemented to passively indicate tilt and/or rotation.

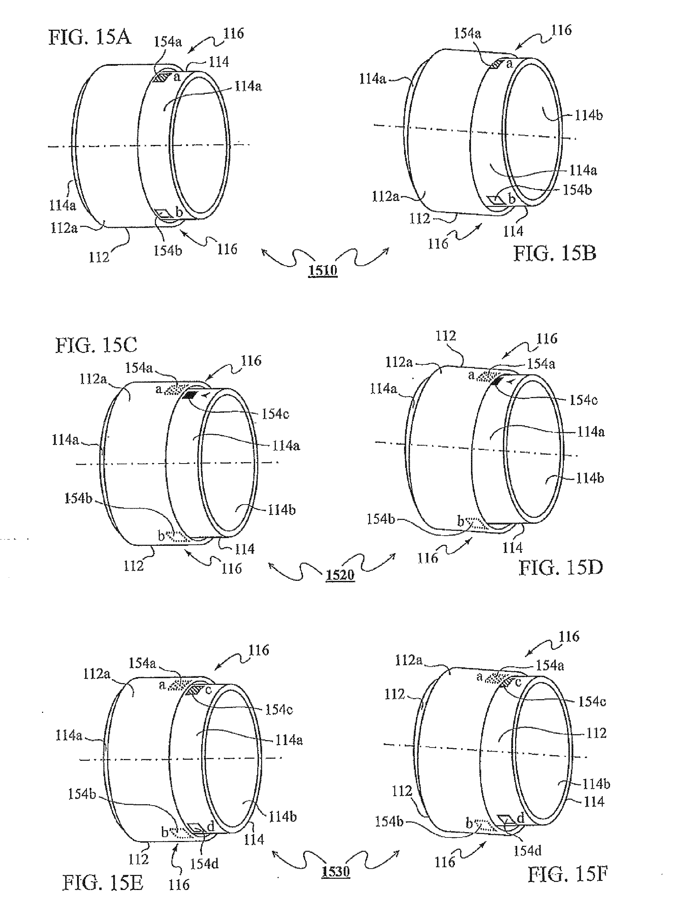

FIG. 14C shows a locking mechanism **1440,** which may be implemented in any device of the invention and which is described here exemplarily for device **1410'.** Similarly to the described for locking a rotatable section **112** in rotated positions and for blocking section **112** from rotated positions (see physical feedback mechanism **340** in FIGS. 3C and 3D), mechanism **1440** can lock a section **112** in tilted positions, and block section **112** from tilted positions. A mechanism **1440** is shown in FIG. 15C to be exemplarily implemented in a device **1410.** In the figure, a rotatable section **112** of device **1410** is shown having a plug **212** which is inserted into a socket **1412** when the section is tilted in a direction **124b.** In device **1410,** mechanism **1440** includes a pin **342** which can be actuated to lock plug **212** inside socket **1412.** Actuation may be deactivated, for releasing the plug and thus allowing for section **112** to tilt to a different position. The pin may be actuated when the plug is not inside the socket, thus blocking the plug from being inserted into the socket and accordingly preventing section **112** for being tilted to a corresponding tilted position.

FIG. 15A and FIG. 15B show a twenty fourth embodiment of a finger-worn device of the invention as a rotatable and tiltable device **1510** in which tilted positions of a rotatable section are indicated according to specific locations on a stationary section **114.** Device **1510** includes a rotatable section **112**, a stationary section **112** and an indication mechanism **116** utilizing indication locations **154a** and **154b** located on an external side **114a** of section **114.** Each indication location corresponds differently to contact with section **112,** for obtaining a different indication from each location. Note that the indication locations may be implemented by any description of such locations herein, or by any sensing and/or indicating mechanisms known in the art (e.g. a pressure sensing mechanism **1216** as described for device **1210** in FIG. 12A).

FIG. 15C and FIG. 15D show a twenty fifth embodiment of a finger-worn device of the invention as a rotatable and tiltable device **1520** in which tilted positions of a tiltable section are indicated according to a specific location on a stationary section **114** and according to specific locations on a rotatable section **112.** Device **1520** includes a rotatable section **112,** a stationary section **114** and an indication mechanism **116** which utilized indication locations **154a, 154b** and **154c.** Indication locations **154a** and **154b** are shown to be located on an internal side **112b** of section **112,** while indication location **154c** is shown to be located on an external side **114a** of section **114.** Indications are obtained by contact of indication locations **154a** and **154b** with indication location **154c.** For example, indication locations **154a** and **154b** include electrodes of different circuits which can be closed by contact of each electrode with electrodes included in indication location **154c.** Accordingly, contact of indication location **154a** with indication location **154c** (specifically shown in FIG. 15D) may close a certain circuit that provides a certain indication, while contact of indication location **154b** with indication location **154c** may close a different circuit that provides a different indication. Contact of either of locations **154a** and **154b** with any other location on external side **114a** is not indicated.

FIG. 15E and FIG. 15F show a twenty sixth embodiment of a finger-worn device of the invention as a device **1530** in which tilted positions of a rotatable section are indicated according to combinations of specific locations on a stationary section and specific locations on a rotatable section. Device **1530** includes a rotatable section **112,** a stationary section **114** and an indication mechanism **116** which utilizes indication locations **154a, 154b, 154c** and **154d.** Indication locations **154a** and **154b** are shown to be located on an internal side **112b** of section **122,** while indication locations **154c** and **154d** are shown to be located on an external side **114a** of section **114.** Indications may be obtained by contact of indication locations **154a,b** with indication location **154c,b** so that four different combinations of contact correspond to four different indications. For example, contact of indication location **154a** with indication location **154c,** such as shown in FIG. 15F, indicates a certain device state, whereas contact of indication location **154b** with indication location **154c** indicates a different device state. Similarly, contact of each of indication locations **154a** and **154b** with indication location **154d** indicates additional different device states.

In some embodiments, indication mechanisms **116** of devices **1510, 1520** and **1530** (i.e. the indication locations) may be able to indicate tilted rotation (i.e. rotation while in a tilted position) of the rotatable section of each, in addition to indicating specific tilted positions as states of the device. Indications of rotation (i.e. of use) may be combined with indications of contact of indication locations (i.e. of tilted positions, which may correspond to device states) for registering input corresponding to the combinations. For example, a rotatable section **112** of a device **1510** may be rotated while tilted on (i.e. in contact with) indication location **154a,** or on indication location **154b,** wherein the rotation on any location is for registering a different input than rotation on the other location. For a more specific example, in a device **1510,** indication of rotation of section **112** when it is in contact with a location **154a** on a section **114** may be registered as input for controlling a first interface element **1030.** Indication of rotation of **section 112** when it is in contact with location **154b** on a section **114** may be registered as input for controlling a second interface element **1030** (as described for an interface **1020** in FIG. 10E). Optionally, indication of rotation of section **112** when it is not tilted may be registered as input for controlling a third interface element **1030.** Optionally, a section **112** may include indication locations, so that rotation of the section while each of these locations is in contact with each indication location on a section **114** may be indicated for registering input corresponding to control a different interface element. The input may be registered at the device, such as in case the device further includes a processing unit receiving the indications, or may be registered at a separate party detecting the indications.

In general, device embodiments having tilt capabilities may include any number of indication locations configurations described above and tilting operations may provide any number of different indications described above. Note that indication mechanism 116 as described for devices **1510, 1520** and **1530** may be a passive indication mechanism (e.g. a passive indication mechanism **116a,** see FIG. 2C)

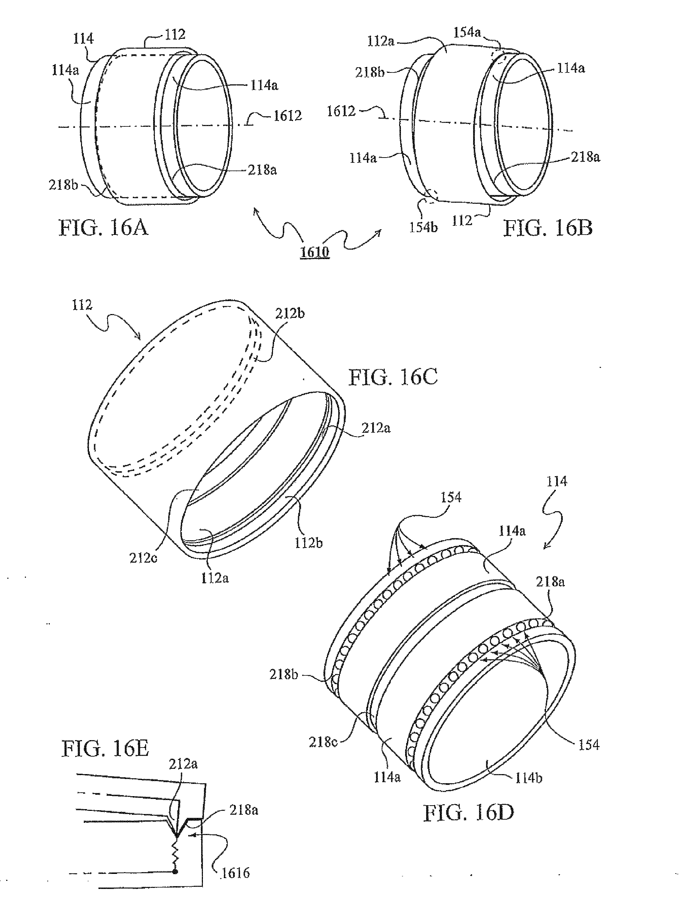

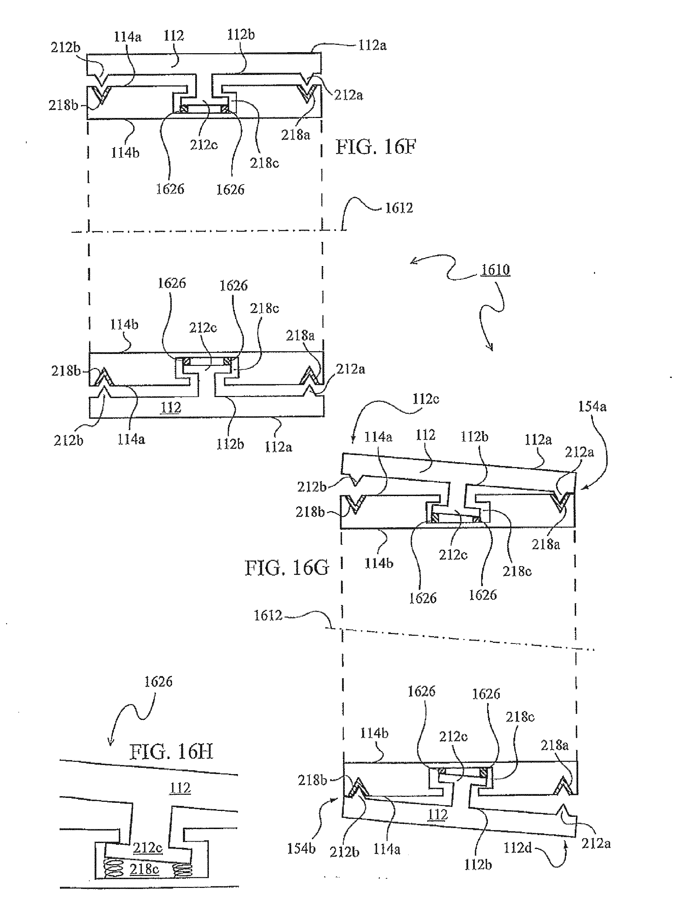

FIGS. 16A through 16G show a twenty seventh embodiment of a finger-worn device of the invention as a rotatable and tiltable finger-worn device **1610.** In device **1610,** a rotatable section **112** has an exemplary form of an external ring installed on a base ring shown as section **114.** Section **112** can be rotated relative to section **114** around a rotation axis **1612** and can also be tilted on section **114,** to reach tracks **218a** and **218b** on an external side **114a.** When section **112** is tilted, a rotation axis **1612,** around which section **112** rotates, is tilted accordingly by the same angle. Section **112** includes plugs **212a** and **212b,** extending from an internal side **112b,** which can interlock with tracks **218a** and **218b,** respectively. Plugs **212a** and **212b** are shown in FIGS. 16B and 16G interlocked at an indication location **154a** on track **218a** and at an indication location **154b** on track **218b,** respectively. In this embodiment, an indication mechanism is implemented by the tracks having a plurality of indication locations **154,** so that when the plugs of section **112** interlock at specific locations with the tracks, when section **112** is tilted on section **114,** the corresponding tilted positions of section **112** are accordingly indicated. Optionally, locations **154** may also facilitate indication of rotation of section **12** around axis **1612** (i.e. use of the device) when a plug of section **112** contacts an indication location (i.e. section **112** rotates while tilted). In some embodiments, when a plug is connected to a track (i.e. interlocked at any indication location), they form temporary current dividing mechanism, such as shown in FIG. 16E plug **212a** interlocked with track **218a** to form a current dividing mechanism **1616.** Mechanism **1616** (which may be included in the indication mechanism of device 1610) may facilitate indication of tilt by dividing a current differently for each indication location where a plug and a track interlock. Optionally, mechanism **1616** may further facilitate indication of rotation by further modulating the current as section **112** rotates while tilted on each indication location.

FIGS. 16C and 16D specifically show sections **112** and **114** of device **1610**, respectively, as separated from each other to better illustrate the elements between them.

FIGS. 16F and 16G show a cross-section of device **1610**. In FIG. 16F, section **112** is not in a tilted position, while in FIG. 15G, section **112** is in a tilted position **414**. External side **114a** of section **114** includes a track **218c**, while section **112** includes a T shaped plug **212c** extending from internal side **112b** and installed inside the track. Also shown to be included is a snap-back mechanism **1626** for balancing the rotation of section **112** when it is not tilted. If no force is holding section **112** tilted or if the plugs **212a** and **212b** are not interlocked with tracks **218a** and **218b,** snap-back mechanism **1626** causes section **112** to "snap-back" to its original un-tilted position (i.e. to return back to being aligned and concentric with section **114**, as specifically shown in FIG. 16E). For example, as specifically shown in FIG. 16H, mechanism **1626** may utilize springs designed to balance plug **212c,** and accordingly section **112*,*** in a non-tilted position, while still allowing for enough pressure to be applied on the section to tilt it. Note that snap-back mechanism **1626** may be implemented in any device of the invention for "snapping-back" any position of a rotatable section to another position, such as a certain rotated position to an original "un-rotated" position. "Snapping-back" may be facilitated by any number of mechanisms known in the art (see e.g. US patents 2696695 and 5269499 and 4430531). Similarly to a physical feedback mechanism **340,** such as described for device **310'** in FIGS. 3D and 3E, snap-back mechanism may be modulated, so that a "snapping-back" effect may be activated and deactivated.

In some embodiments, interlocking of the plugs and the tracks may be facilitated by a locking mechanism similarly to the (e.g. a locking mechanism **1440** as described for a device **1410** in FIG. 14C). In device **1610,** mechanism **1440** is exemplarily implemented on tracks **218a,b,** specifically at each indication location **154,** to sustain tilted positions of section **112** (i.e. hold section **112** tilted when no pressure is applied on the section to hold it tilted). Accordingly, plugs **212a** and **212b** and, respectively, tracks **218a** and **218b** may interlock to prevent section **112** from "snapping-back" to its un-tilted position by snap-back mechanism **1626.** Optionally, plugs **212a** and **212b** may be unlocked from tracks **218a** and **218b,** respectively, by applying enough pressure on an opposite side of section **112** from where the plugs and tracks interlock (e.g. by generally pressing on a side **112c** or a side **112d** of section **112.**

In some embodiments, certain locations on the tracks may be temporarily inaccessible for plug insertion, and accordingly corresponding tilted positions of rotatable section **112** are physically prevented. For example, a locking mechanism **1440** may lock certain locations on any of the tracks when a plug is not interlocked with it, for preventing any of the plugs from being inserted into it. Accordingly, this may facilitate "granting" or "denying" control of an operation which corresponds with specific locations, such as to physically block tilting on specific locations when their corresponding operations are not accessible. For example, a separate party may be out of range of communication with device **1610,** and so a tilted position of a rotatable section **112,** which in some cases correspond to controlling the separate party, may be locked to prevent a user from tilting the section to that position.

In some embodiments, indicating tilted positions may be facilitated by snap-back mechanism **1626.** Pressure sensors (e.g. a plurality of pressure sensing mechanisms **1216** as described for a device **1210** in FIG. 12A) may be coupled with the mechanism (such as "beneath" springs of the mechanism, as shown in FIG. 16H) and influenced by "unbalanced" angles of section **112** (i.e. any tilted position of the section) for generating indications corresponding to the pressure applied from the springs.

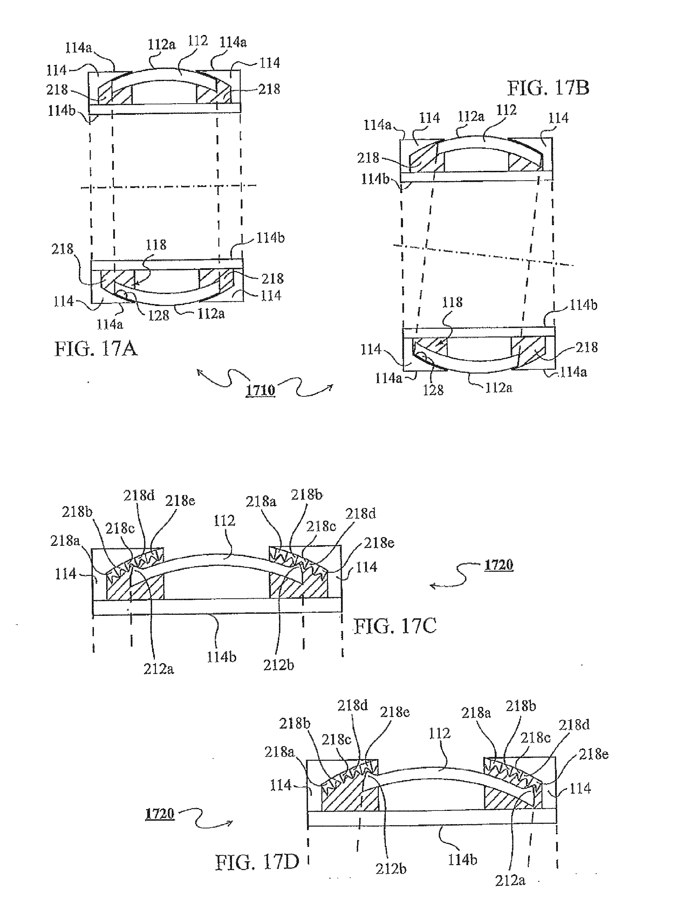

FIGS. 17A and 17B show a twenty eighth embodiment of a finger-worn device of the invention as a rotatable and tiltable finger-worn device **1710.** In device **1710,** a stationary section **114** encapsulates a rotatable section **112** in a track **218** formed between an external side **114a** and an internal side **114b** of section **114.** Section **112** is still exposed so that is can be rotated and/or tilted inside the track. Device **1710** further includes an indication mechanism for indicating rotation and/or tilt of section **112** relative to section **114.** In FIGS. 17A and 17B, indication is facilitated by an exemplarily sensing mechanism **118** for detecting relative movement (i.e. rotation and/or tilting) of section **112,** and relaying information that is indicative of the movement. In some embodiments, mechanism **118** may further indicate specific rotated and/or tilted positions. For example, mechanism **118** may including an optical sensing mechanism **128** (shown in the figures on an external surface **112a** of section **112**) similarly to the described for device **120,** wherein track **218** of device **1710** may include a pattern (e.g. a pattern **152'** as shown in FIG. 1I) of different features (e.g. features **152a-g** in FIG. 1I). The features may be distributed along the curve of rotation and on the curve of tilt, so that both relative repositioning of section **I**12 may be indicated.

FIGS. 17C and 17D show a twenty ninth embodiment of a finger-worn device of the invention as a rotatable and tiltable finger-worn device **1720,** in which specific tilt angles of a rotatable section **112** are accommodated and indicated. The specific tilt angles may also correspond to states of the device, so that when section **112** is at a specific tilt angle, the device is in a specific device state. In FIGS. 17C and 17D, device **1720** is shown to include a rotatable section **112** having plugs **212a** and **212b,** and a stationary section **114** having tracks **218a-e** (each shown as two separate slots from two sides of the section). Each of tracks **218a-**e can accommodate plug **212a** and plug **212b** (FIG. 17D shows plugs **212a,b** accommodated in track **218c**)*.* Accordingly, section **112** can be set to any one of five tilt angles corresponding to each of the five tracks, and can further rotate while at any one of the five tilt angles. The particular accommodation of any of the plugs may be indicated by an indication mechanism similar to sensing mechanisms **118a-c** as described for a device **220** in FIG. 2D (each sensing mechanism indicating accommodation in each track). An indication mechanism may additionally indicate rotation when section **112** is set to each of the angles (i.e. tracks), similarly to the described for a passive indication mechanism **116a** as described in FIG. 2C.

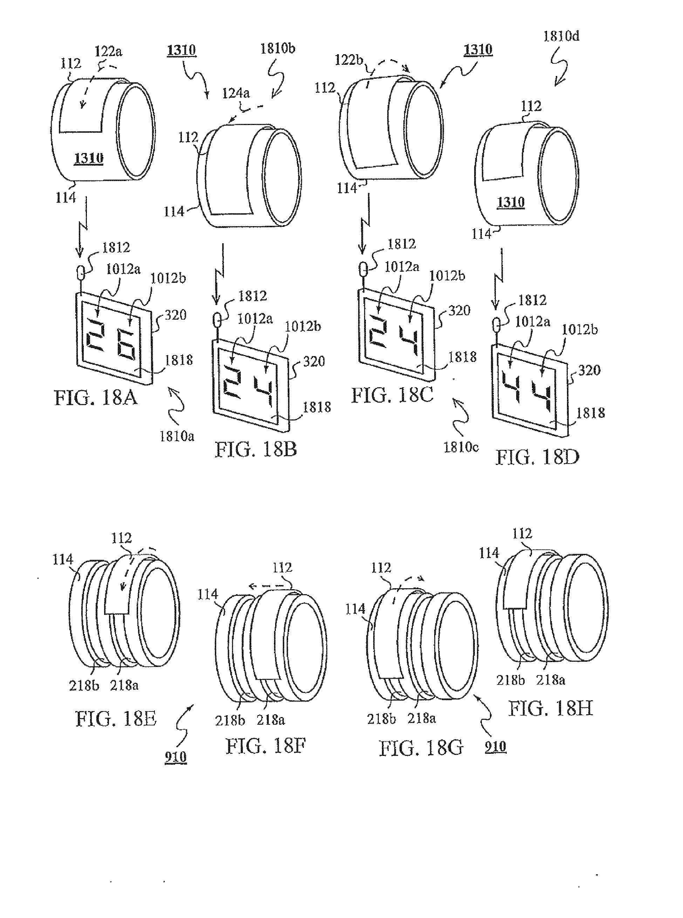

FIGS. 18A through 18D show an embodiment a sequence of operation steps **1810a-d** to control an interface **1020** of a separate party **320**, exemplarily shown using a finger-worn device of the invention. The operation is illustrated using device **1310** for convenience and as an example only, where it is understood that the same operations may be performed with other devices of the invention (see the description of FIGS. 18E-18H below). In FIGS. 18A through 18D, separate party **320** is shown to include a receiver **1812** and a monitor **1818** on which objects **1012a,b** are displayed as two separate digits. Rotation of a section **112** of device **1310** in specific tilted positions is for controlling the display. In some embodiments, each digit may correspond to a selection of an interface element (e.g. a selection **1032** of any of interface elements **1030a-c** as shown for an interface **1020** in FIG. 10D), while each element may be a series of digits from 0 to 9. Similarly to the described for controlling an interface **1020** in FIG. 10E, each selection corresponds to one digit selected at any given time from the digits of each element. Accordingly, each selected digit is displayed on monitor **1818.** In FIGS. 18A through 18D, controlling the selection of each digit is by rotating section **112** at a different tilted position, so that consequently rotation at each tilted positions changes the digits in objects **1012a,b.** This is exemplarily facilitated by indications from device **1310** being detected by receiver **1812**.

In FIGS. 18A though 18D, each consecutive figure is the result of the operation performed in the previous figure (i.e. of the previous step in the sequence of operation steps **1810a-d**). In FIG. 18A (step **1810a**), section **112** is rotated according to rotation direction **122a**, on its original un-tilted position, to browse through the digits of a first interface element corresponding to displayed object **1012b.** The rotation changes the digit in the display of the element (i.e. the corresponding displayed object) from 6 (in FIG. 18A) to 4 (in FIG. 18B). In FIG. 18B (step **1810b**), section **112** is tilted according to direction **124a**, to exemplarily set it to a rotation track which corresponds to controlling a second interface element, optionally by corresponding to an indicated state of the device. In FIG. 18C (step **1810c**), section **112** is rotated according to direction **122b**, to browse through the digits of the second interface element. The tilt plus rotation changes the digit in display of the element (object **1012a**) from 2 (in FIG. 18C) to 4 (in FIG. 18D).

FIGS. 18E through 18H show a sequence similar to that described for operation steps **1810a-d**, using a device **910** to obtain identical results. FIGS. 18E through 18H respectively correspond to FIGS. 18A through 18D.

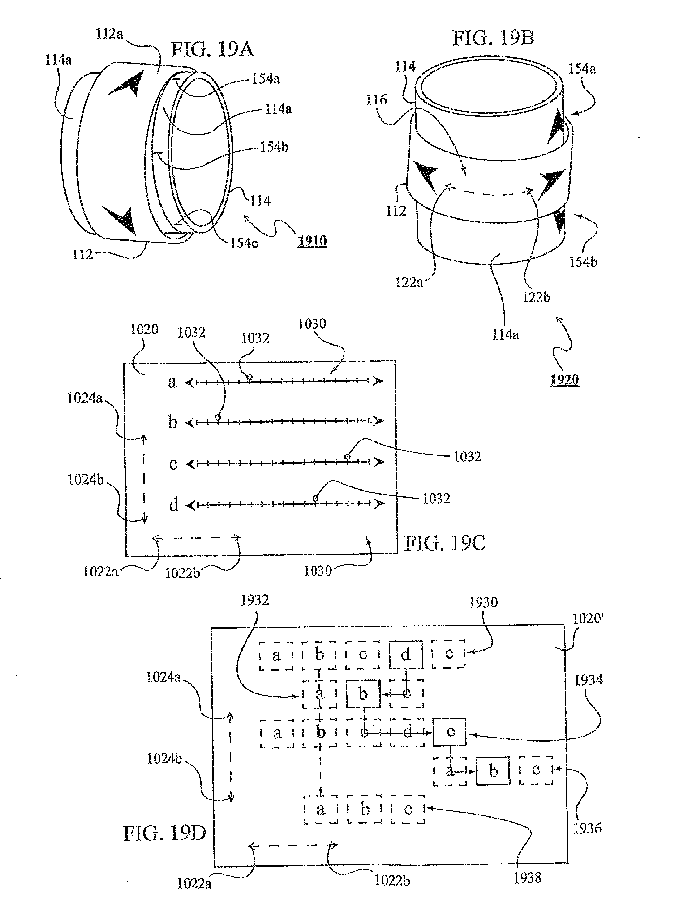

FIG. 19A shows a thirtieth embodiment of a finger-worn device of the invention as a rotatable and tiltable finger-worn device **1910** which generally includes a rotatable section **112** and a stationary section **114** having indication locations **154a-c** on an external side **114a** for indicating specific tilted positions of section **112** by contact with each of the location. Indication locations **154** are part of an exemplary indication mechanism for indicating rotation of section **112** while tilted on each of the locations. In FIG. 19A, section **112** is shown tilted on location **154a**. In some embodiments, device **1910** may be able to control an interface **1020** as shown in FIG. 10E. Each of locations **154a-c** respectively corresponds to each of interface elements **1030a-c** of interface **1020.** Tilting section **112** on a specific indication location and rotating section **112** may control a selection (e.g. a section **1032** in FIGS. 10E) of the element that corresponds to that location, wherein the two opposite rotation directions **122a,b** of section **112** correspond to moving the selection along each element, while the section is tilted on each specific location. In some embodiments, device **1910** may include any number of indication locations to facilitate controlling of interfaces that have any number of elements. For example, device **1910** may control a system having a plurality of separate parties and an interface of controlling each of them, wherein each indication location on external side **114a** corresponds to controlling a different separate party. In another example, device **1910** may have one additional indication location (to the indication locations shown on FIG. 19A) to facilitate control of an interface **1020** that is shown in FIG. 19C.

FIG. 19B shows a thirty first embodiment of a finger-worn device of the invention as a device **1920** which generally includes a rotatable section **112** and a stationary section **114** having indication locations **154a,b** (shown as arrow-heads in FIG. 19B) on an external side **114a,** specifically on either side of section **114.** The locations indicate tilt of section **112** on each of them, such as by sensing contact. Device **1920** further includes an indication mechanism **116** (exemplarily located between section **112** and section **114**), for indicating rotation. Device **1920** may further include a snap-back mechanism (e.g. a snap-back mechanism **1626,** ref. FIG. 16H) between the sections, so that section **112** returns to its untilted position (relative to section **114**) when any force applied on it is ceased. In some embodiments, device **1920** may control an interface **1020** as shown in FIG. 19C. In FIG. 19C, interface **1020** is similar to the interface described for FIG. 10E, while having more elements (shown interface elements **1030a-d** in FIG. 19C). Rotation directions **122a,b** of section **112** may correspond to directions **1022a,b** of interface **1020**. Accordingly, any rotation of section **112** in directions **122a,b** is for moving selection **1032** of each of the elements in directions **1022a,b** respectively. Additionally, browsing through the elements, such as for selecting which element to control at any given time, corresponds to directions **1024c,d** of interface **1020**. Accordingly, section **112** may be tilted on location **154a** to select the "next" element according to direction **1024a**, while the section may be tilted on location 154b to select the "next" element according to the opposite direction (direction **1024b**). Optionally, tilting of section **112** is not sustained so that after a tilt has been performed, section **112** "snaps-back" to its un-tilted position, by snap-back mechanism **1626**. This simulates a "feeling" of pressing or clicking a button or a switch when tilting section **112.**

In accordance with the above, another example of controlling an interface **1020** as described for FIG. 19C is by device **1720** as described for FIGS. 17C and 17D, wherein rotation of section **112** is for controlling a selection **1032** of elements **1030a-d** of the interface. Each of tracks **218a-e** of device **1720** may respectively correspond to elements **1030a-d** of interface **1020**, so that when plugs **212a,b** are accommodated by a track (i.e. section **112** of device **1720** is set to rotate on that track) rotation corresponds to controlling selection **1032** of the element corresponding to that track. For example, when plugs **212a,b** are in track **218a,** rotation of section **112** moves selection **1032** of element **1030a.** Further tilting of section **112** sets it to different tracks which correspond to different elements of the interface.

FIG. 19D shows a representation of an interface **1020** (shown as **1020'**) that is controllable by device **1920** and that has general directions **1022a,b** and **11324a,b**. In FIG. 19D, interface **1020** has a hierarchy of elements **1930, 1932, 1934** and **1936**, which may exemplarily be menus or folders. In some embodiments, rotation of section **112** of device **1920** may be for scrolling through each element, and tilting of the section may be for "opening" and "closing" any element that is controlled by the rotation of section **112** at any given time. Accordingly, rotating section **112** in directions **122a,b** may be for scrolling through any element in directions **1022a**,**b**, respectively, while tilting the section on indication location **154a,b** may be for switching to the "next" element (i.e. changing the element that is to be controlled by rotation), according to direction **1024a,b,** respectively. Specifically shown in FIG. 19D is an exemplary sequence of utilizing device **1920** for scrolling through and between element **1930, 1932, 1934** and **1936** (as exemplary interface elements **1030**). First, a user may rotate section **112** to choose a member **1930d** from element **1930**, wherein member **1930d** may represent element **1932** (other members of element **1930** may represent other "sub-elements") . Then, the user may tilt sections **112** on location **154b** to switch control to element **1932**, and may rotate section **112** in direction **122a** to choose a member **1932b** of element **1932**, wherein member **1932b** may represent element **1934**. Then, the user may again tilt section **112** on location **154b** to switch control to element **1934**, and may rotate element **112** in direction **122b** to choose a member **1934e** which may represent element **1936**, the control of which is switched to by further tilting of section **112** on location **154b**. Lastly, the user may rotate section **122** in direction **122b** to choose a member **1936b**. Alternatively to the last step, while control is set element **1936** (i.e. rotation of section **112** is for choosing a member of that element), the user may tilt section **112** on location **154a** to switch control back to element **1934.** Further tilting of section **112** on location **154a** may be for switching to "previous" elements (i.e. setting control to any of the elements that are "next" according to direction **1024a)**. Each member not chosen in the exemplary sequence may represent a "sub-element" other than elements **1930**, **1932**, **1934** and **1936** shown in the figure. For example, member **1930b** may represent an element **1938,** so that when scrolling through element **1930** to select member **1930b** (by rotation of **section 112**) and tilting section **112** on location **154b**, control is switched to element **1938,** so that further rotation of the section may be for scrolling through the members of that element. Note that the described above for elements **1930**, **1932**, **1934**, **1936** and **1938** also applies to any interface elements.

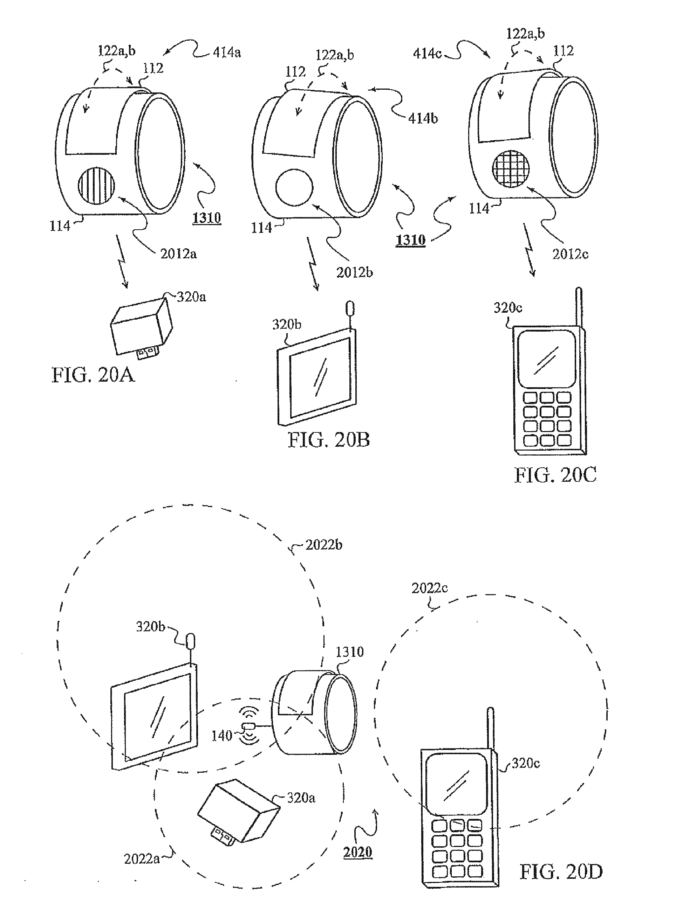

FIG. 20A through 20C show an exemplary utilization of a device of the invention, exemplarily device **1310**, to control separate parties **320a-c** which are exemplarily different devices which may be part of a network or joint system. In FIG. 20A through 20C, tilted positions **414a-c** (position **414a** shown as "untilted") of section **112** of device **1310** is for setting a state of a device for controlling separate parties **320a-c**, respectively, wherein each state correspond to each. As shown in FIG. 20A, rotation of section **112** while the section is in position **414a** is for controlling party **320a**. Similarly, as shown in FIGS. 20B and 20C, rotation of the section when it is in positions **414b** and **414c** is for controlling parties **320b** and **320c**, respectively. In some embodiments, rotation of section **102** in directions **122a,b** in each tilted position is for controlling an interface of each party.

In some embodiments, a device of the invention, exemplarily device **1310**, may Further include a visual output mechanism **142**, such as an LED, which may display visual feedback **2012a-c** corresponding to states of the device, and accordingly and respectively to which of separate parties **320a-c** control is set at any given time. For example, a multicolor LED included in device **1310** may change colors correspondingly to tilted position of section **112**, such as to green (shown as a circle and vertical lines for feedback **2012a**) when section **112** is in position **414a**, red (shown as an empty circle for feedback **2012b**) when section **112** is in position **414b** and blue (shown as a circle and crossed lines for feedback **2012c**) when section **112** is in position **414c**. The properties of light emitted by the LED may be Further modulated correspondingly to rotation of section **112** in each tilted position. In some embodiments, feedback of the states of device **1310** may be visually displayed by the separate parties. In other embodiments, feedback may be outputted in any other form, such as sound.

In some embodiments, similarly to the described for controlling separate parties, different elements of an interface (also "interface elements") may be controlled, as each tilted position may correspond to a different interface element while rotation may be for controlling that element. Optionally, each element was assigned to a different tilted position of the rotatable section (see method **4510** in FIG. 45).

FIG. 20D shows a system **2020** in which a device of the invention, exemplarily device **1310**, may facilitate remote controlling of separate parties **320a-c** by auto-connection, depending on the communication range of each party and/or of device **1310**. In system **2020**, device **1310** may include a communication mechanism **140** (shown as an antenna in the figure) for communicating with each of separate parties **320a-c**, when being in their respective communication ranges **2022a-c**. In some embodiments, mechanism **140** may be utilized to auto-connect device **1310** to a separate party when entering the party's communication range. The connection may alternatively be established by a communication mechanism of the party. When device **1310** is in a range of a separate party it optionally goes into a "virtual" state, such as a wirelessly connected state, which is not a physical state. When device **1310** is in at least two of communication ranges **2022a-c**, such as shown in FIG. 20D being in both ranges **2022a** and **2022b**, tilting of section **112** may be for switching between control of any of the parties in range (parties **320a** and **320b** in FIG. 20D).

In some embodiments, entering a communication range of a separate party may be visually indicated by a visual indication mechanism **142** of device **1310** or of the separate party. The visual indication may be temporary and replaced by a default display after a period of time. For example, when entering communication range **2022a**, a multicolor LED exemplarily utilized by mechanism **142** blinks a blue light, which may visually represent auto-connection to party **320a**, for a period of two seconds, and then may emit a steady green light, exemplarily corresponding to the tilted position of section **112** at that time.

In accordance with the above, visual feedback of communications may be obtained by any device of this invention having a visual output mechanism.

In some embodiments, a communication range as described above may not necessarily be the actual spatial range of signals reception, but a value of a distance variable determined for convenience. For example, a device of the invention may be utilized with systems of a so-called "smart-home", to control and/or communicate with multiple appliances, wherein it might be desired to limit the auto-connection range of each appliance in small homes.

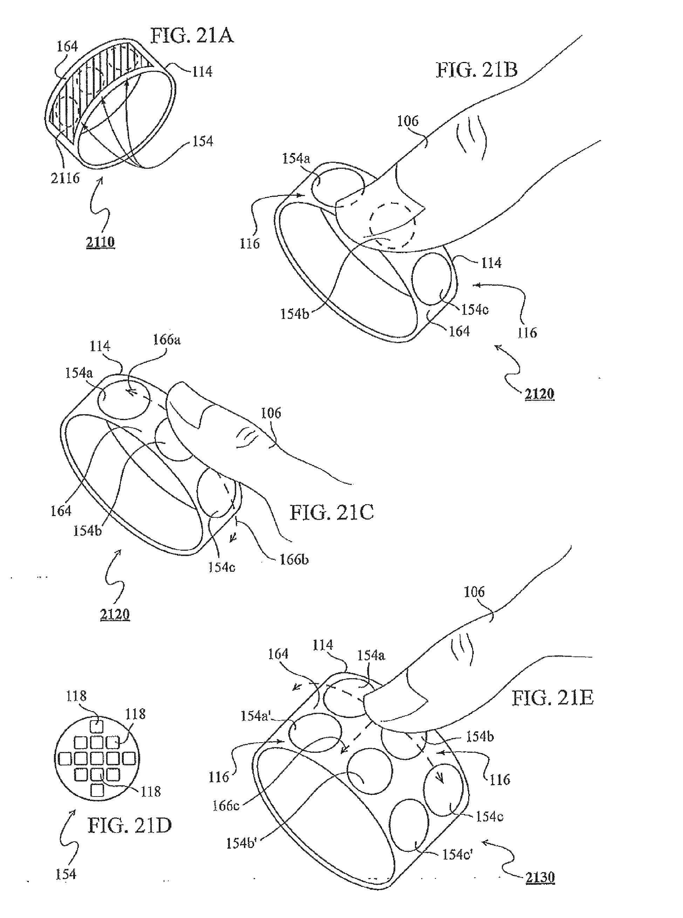

FIG. 21A shows a thirty second embodiment of a finger-worn device of the invention as a device **2110** which includes an stationary section **114** having a touch surface **164** thereon coupled with an indication mechanism for indicating touch and touch motion and pressure on surface **164**. In FIG. 21A, surface **164** includes a pressure sensing surface **2116** as an exemplary indication mechanism, which is shown generally located on surface **164,** or "beneath" surface **164** inside stationary section **114** (e.g. inside an enclosure). Sensing pressure may be facilitated by any number of pressure sensors or pressure sensing surfaces known in the art (see e.g. US patent 5943044). For device **2110**, pressure may be detected corresponding to any number of specific locations (shown three indication locations **154**), so that both the amount of pressure and the location at which pressure is applied may be indicated.

Touch surfaces of any of the following embodiments of a device of the invention may indicate touch and/or touch motion (also "sliding" or "dragging") and/or pressure. Preferably, touch and/or touch motion can be indicated corresponding to specific locations, as specifically described in FIGS. 21B through 21E. In some embodiment, pressure is not indicated, such as by utilizing sensing mechanisms which only sense touch and/or touch motion (see e.g. US Patents 4221975 and 5943044).

FIGS. 21B and 21C show a thirty third embodiment of a finger-worn device of the invention as a device **2120**, wherein touch may be indicated according to specific indication locations **154a-c**, and wherein touch motion may be indicated according to sliding a finger across the indication locations. In FIGS. 21B and 21C, device **2120** is shown to include stationary section **114**, a touch surface **164** and an indication mechanism **116** which includes indication locations **154a-c** on surface **164**, wherein each location can individually and differently indicate touch of a finger. In some embodiments, moving a finger (i.e. sliding a finger) across indication locations **154a-c** (a thumb **106** is shown in FIG. 21C sliding on surface **164**, across the locations, in sliding directions **166a,b**) in a certain sequence of locations, may provide directional information similarly to the described for obtaining directional information from indication of rotation. In a touch surface, directional information may be obtained by the finger sliding across at least two indication locations. Any touch motion sequence of two or more of location necessarily corresponds to one of directions **166a,b**. Directional information may be utilized similarly to indicated information about rotation, as described herein for devices including a rotatable section.

In some embodiments, each of the indication locations may have a plurality of sensing mechanisms **118** for sensing touch. FIG. 21D specifically shows mechanisms **118** for a particular location **154**, as an example. Because a finger operating device **2120** may be wider than each indication location (shown in FIG. 21B a thumb **106** wider than each location), obtaining indications from each location individually may be facilitated by a high resolution of mechanisms **118**, as shown in the figure. Each indication location **154a-c** may be designed to indicate only direct and complete touch of all the sensing mechanisms included in it. For example, partial touch of a thumb on each location (shown in FIG. 21B thumb **106** partially touching location **154a**) is not indicated, while complete touch of a thumb on each location (shown in FIG. 21B thumb **106** completely touching and covering location **154b**) is indicated. Accordingly, if a finger is completely touching a first indication location, while the touch slightly overlaps a second indication location, touch of the first location is indicated while touch of the second location is not.

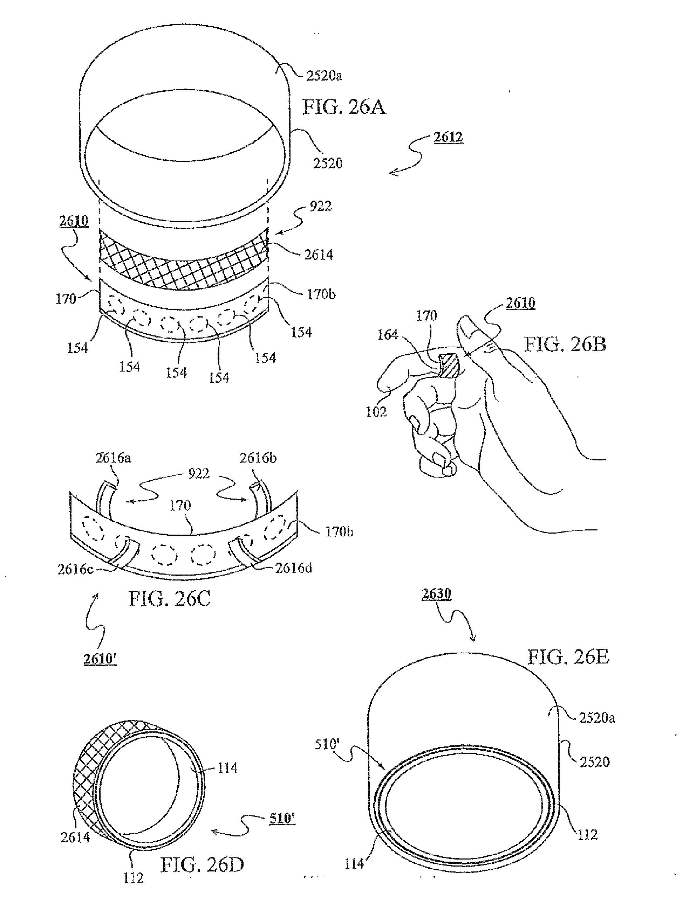

In some embodiments, sensing touch is facilitated by an array of sensing mechanisms **118** throughout touch surface **164**, while indication locations may be temporarily set (such as by a processing unit) to include any number and/or arrangement of mechanisms **118**. For example, an indication mechanism of device **2120** for indicating touch on surface **164** may includes six sensing mechanisms **118** in a sequence (such as shown for a device **2610** in FIG. 26A), while a processing unit may set a "virtual" state for device **2120**, in which every pair of mechanisms **118** form an indication location (i.e. individually indicating touch), thus the device **2120** consequently has three active indication locations (e.g. location **154a-c**). The processing unit may later set a different "virtual" state for the device, in which every three mechanisms **118** form an indication location, thus the device consequently has two active indication locations (at that time).

FIG. 21E shows a thirty fourth embodiment of a finger-worn device of the invention as a device **2130** similar to device **2120** having another set of indication locations. In FIG. 21E, device **2130** is shown to include a stationary section **114** and a touch surface **164** that is approximately and exemplarily twice the width of surface **164** of device **2120**. In device **2130,** surface **164** has thereon a first set of indication locations **154a-c** and a second set of indication locations **154a-c'**. Similarly to the described for device **2120**, thumb **106** may slide across either or both sets of locations, wherein each of the location may indicate touch when the thumb is touching it. In some embodiments, registration of specific input may correspond to sliding of thumb **106** from one set of locations to another set, such as in sliding direction **166c.** Similarly to the described above for an indication location **154** in FIG. 21D, indications may be obtains only for direct and complete touch of each location and not for any partial touch. For example, even if thumb **106** performs a slide across the first set of location, and while doing so it is partially touching locations of the second set, only the sliding across the first set is indicated. In some embodiments, sliding a finger across each set individually may correspond to different input registration, while sliding a finger across both sets may correspond to registration of additional and further different input.

In some embodiments, indications of touch and touch motion which includes directional information may be utilized similarly to indications of rotation. Accordingly, indications from any set of indication locations may be utilized similarly to indications from any rotatable section, so that indications from multiple sets of locations may correspond and indications from multiple rotatable sections may correspond to similar input.

According to the above, a device of the invention may have any number of indication locations that can sense touch and/or pressure, and any number of sets of indication locations, wherein indications of touch and/or pressure may also include, or may also be processed for, directional information.

In alternative embodiments, operations of a device of the invention may be temporarily suspended (e.g. indications may be prevented temporarily from being generated) by deactivation the indication mechanism or the sensing mechanism (any mechanism **116** and **116a** and/or mechanism **118**) of the device. In one example, when a device of the invention is not operated for a certain period of time, a sensing mechanism of the device enters a "stand-by" mode, wherein only specific further use reactivates the mechanism for further sensing (the mechanism may still sense use but does not indicate it, or the device does not respond to it). In case of a sensing surface, a rapid sliding of a finger back and forth in two directions may "restart" the sensing. The rapid sliding in two directions is distinguishable from incidental touch, such as by an adjacent finger to the finger wearing the device, or by objects accidently touching the surface while it is not desired for the device to be operated. Optionally, the rapid sliding may also be for stopping or pausing the sensing, or for prompting a "stand-by" mode of the sensing mechanism. In another example, a designated switch may activate and deactivate sensing. Any other elements or procedures of use of the device may be utilized for temporarily preventing and allowing operations or reactions of the device, or for deactivating and activating indication mechanisms or sensing mechanisms.

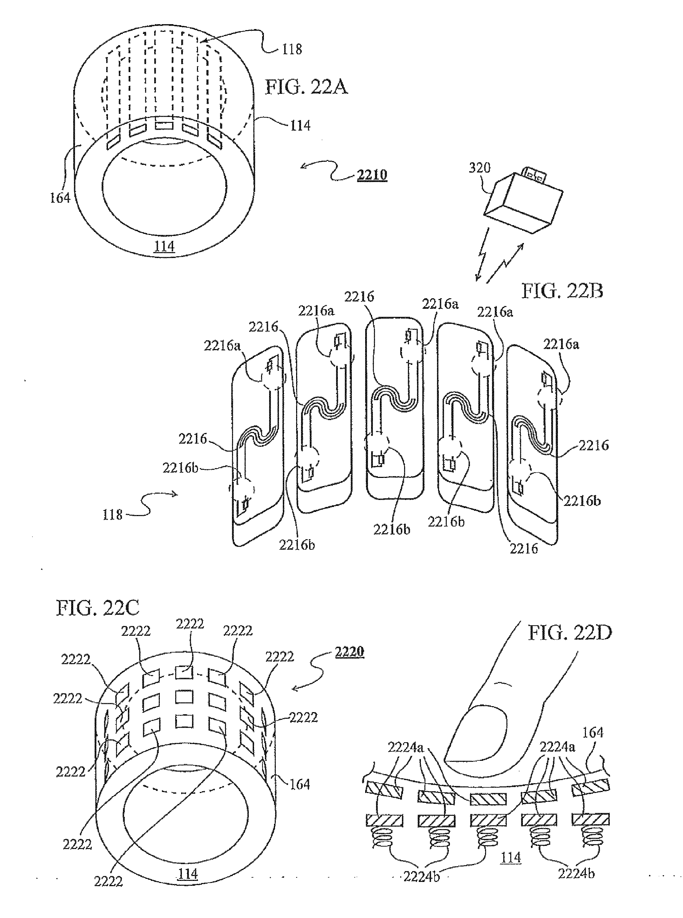

FIG. 22A shows a thirty fifth embodiment of a finger-worn device of the invention as a device **2210** which includes an stationary section **114** and a touch surface **164** and a sensing mechanism **118** included in and utilized by any indication mechanism of device **2210**. Mechanism **118** is shown in FIG. 22A as an array of sensing mechanisms distributed inside stationary section **114** and facing surface **164.** The array is specifically shown in FIG. 22B, wherein each sensing mechanism has a touch activated circuit **2216** which may be closed at a gap **2216a** and a gap **2216b** by a finger touching on surface **164**, approximately where the gaps are located. Multiple gaps in each circuit may be utilized as for indicating only complete and direct touch corresponding to each circuit, so that for example partial touch of a circuit which closes only one gap is not indicated. Device **2210** may optionally include a power source **2212** and a processing unit **2214**, shown inside stationary section **114** in FIG. 22A. In some embodiments, circuits **2216** may be transponder circuits (e.g. RFID circuits) which when closed can modulate incoming signals from a separate party **320**, while modulated signals can be detected back at separate party **320** as indications of touch. In such embodiments, mechanism **118** of device **2210** may be included in a passive indication mechanism.

FIG. 22C shows a thirty sixth embodiment of a finger-worn device of the invention as a device **2220** which includes an stationary section **114** and a touch surface **164** and a resonance mechanism **2222** (see FIGS. 14) as an exemplary passive indication mechanism, for indicating touch and pressure of touch. Similarly to the described for a resonance mechanism **1416** implemented in device **1410** in FIGS. 14A and 14B, circuits **2224** (shown having capacitors **2224a** and coils **2224b**) may be distributed inside stationary section **114**. As specifically shown in FIG. 22D, a finger pressing on surface **164** can influence capacitors **2224a.** A resonance detector (shown as separate party **320** in FIGS. 14A-B) may differentiate between each circuit, for locating the finger in addition to measuring the amount of pressure correspondingly to the influence on the capacitors, and accordingly to the resonant frequency of each circuit.

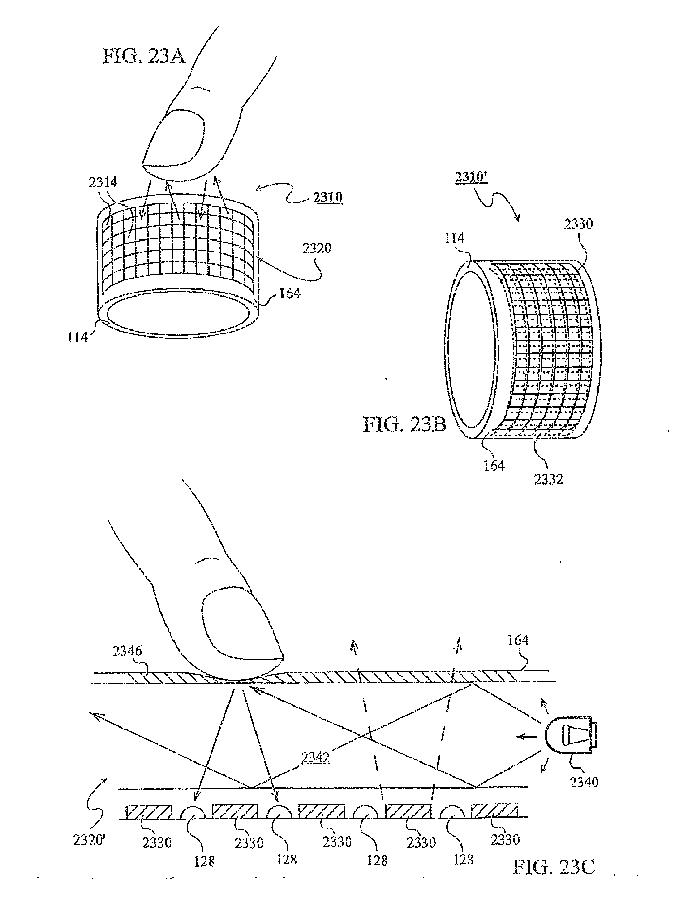

FIG. 23A shows a thirty seventh embodiment of a finger-worn device of the invention as a device **2310** which includes a transparent stationary section **114**, a touch surface **164** and a combination of a visual output mechanism and an indication mechanism, both implemented as an interactive display mechanism **2320**. In device **2310**, touch indication is facilitated by an array of bidirectional LEDs **2314** (also "multi-way LEDs") exemplarily distributed inside stationary section **114** facing surface **164**. The LEDs are bidirectional or multi-way as known in the art for being a light source and optical sensing mechanisms (see e.g. US Patents 5149962 and 7170606). Accordingly, the LEDs can be utilized for displaying visual output (such as for a visual output mechanism) and for sensing light reflected back at them (such as for an indication mechanism). In FIG. 23A, LEDs **2314** are shown to shine light on a finger almost touching surface **164** or coming in very close proximity to it, while the light is generally reflected back to the LEDs from the finger. The finger may also be touching surface **164** for the same effect.

FIG. 23B shows a thirty eight embodiment of a finger-worn device of the invention as a device **2310'**, in which visual output and touch indication generally correspond to the same touch surface (for an interactive display mechanism) Device **2310'** includes array of display pixels **2330** as an exemplary visual output mechanism, and transparent electrodes **2332** (see e.g. US Patents No. 5986391 and 7071615) on surface **164** overlapping the pixels, as an indication mechanism. The electrodes are shown in the figure as dashed rectangles. The electrodes facilitate sensing touch without blocking the display.

FIG. 23C shows another embodiment of an interactive display mechanism 2320 (shown as mechanism **2320'**) (see e.g. US Patent 4484179). In FIG. 23B, there is shown an infrared (IR) LED **2340** as an exemplary light source **132** that emits light inside a waveguide **2342** which may be an exemplary enclosure of a stationary section. Waveguide **2342** has total internal reflection, as known in the art, being for example an acrylic waveguide. In some embodiments, waveguide **2342** is covered by a pressure reactive polymer **2346** that can flex in reaction to different amounts of pressure. The external side of the polymer may be an exemplary touch surface **164**. Flexing of the polymer disturbs the internal reflection of light inside waveguide **2342** correspondingly to the amount and location of the pressure applied on it. Additionally shown in the figure are optical sensing mechanisms **128** which may exemplarily be photodiodes arranged in a sensing array. When a finger presses on polymer **2346**, as specifically shown in FIG. 23B, the light from LED **2340** reflected inside waveguide **2342** scatters off the finger toward the sensing mechanisms. The sensing mechanisms sense the amount and direction of scattered light to indicate the location of the finger and the pressure applied by it. In alternative embodiments, an optic sensing mechanism is located on the other end of the waveguide, to detect changes in light passing through the waveguide due to disturbances to reflection caused by pressure to the polymer. Shown in FIG. 23B, additionally to the above, are display pixels **2330** as an exemplary visual output mechanism, for displaying a visual output on the surface of the polymer or through it.

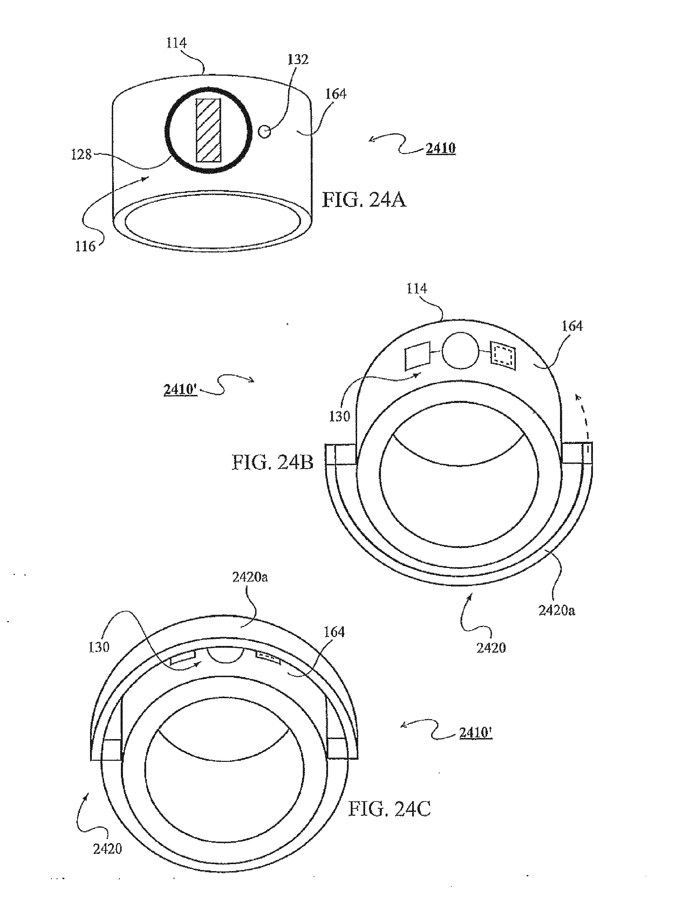

FIG. 24A shows a thirty ninth embodiment of a finger-worn device of the invention as a device **2410** which generally includes a stationary section **114** and a touch surface **164** having an optical sensing mechanism **128** included in an indication mechanism **116**. Sensing of touch motion is facilitated by sensing the change in the area of a finger overlapping location **154** during sliding of the finger across surface **164**. This sensing is similar to that described for device **110c** in FIG. 1E. In Device **2410**, mechanism **128** is sensing a finger operating the device (i.e. touching surface **164**) while in device **110c**, mechanism **128** is sensing a finger wearing device **110c.** Surface **164** is shown in FIG. 24A to further include a light source **132** for illuminating the surface of the ringer touching surface **164** of the device.

In other embodiments, an indication mechanism of device **2410** may include any number of optical sensing mechanisms for sensing touch and/or touch motion on surface **164**.

FIGS. 24B and 24C show a fortieth embodiment of a finger-worn device of the invention as a device **2410'** similar to device **2410**, wherein indicating touch and touch motion is facilitates by a recognition mechanism **130.** Similarly to that described for devices **110b**, **110d** and **110e** in FIGS. 1C, 1F and 1G, respectively, mechanism **130** can sense patterns and/or features in the surface of a finger, and may be adapted to sense a finger operating device **2410',** as opposed to sensing fingers wearing devices **110b, 110d** and **110e**. As referred to in the description of FIG. 1C, fingerprint sensing mechanisms known in the art can obtain information of motion and direction of a finger from a specific single location, such as an narrow opening on which the finger is moving for complete sensing.

In FIGS. 24B and 24C, device **2410'** is shown generally including a cover mechanism **2420** for preventing access to touch surface **164**. In FIGS. 24B and 24C, cover mechanism **2420** is shown for device **2410'** yet can be implemented for any device of the invention. For device **2410',** mechanism **2420** exemplarily includes a rotatable cover **2420a** for physically covering mechanism **130**. Cover **2420a** can block touch on surface **164** and make surface **164** accessible for touch. In alternative embodiments, this "temporary" covering of a touch surface of a device of the invention may be facilitated by any number of mechanisms known in the art, such as by an electronic lid that can be switched on and off. A cover mechanism such as **2420** may also be utilized to prevent access to any element of the device, such as to cover a rotatable section **112.**

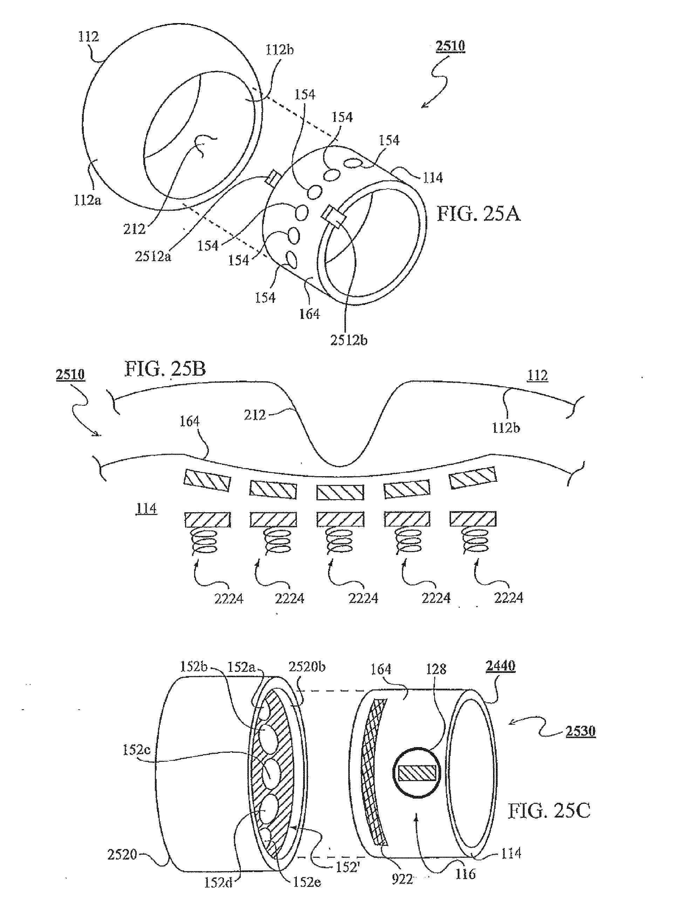

FIGS. 25A and 25B show a forty first embodiment of a finger-worn device of the invention as a device **2510** in which a touch surface and an indication mechanism is utilized for indicating touch and touch motions, as well as for indicating rotation and rotated positions of a rotatable section. In FIG. 25A, device **2510** is shown to include a stationary section **114** and a touch surface **164** having a series of indication locations **154.** Specifically shown in FIG. 25B, is a resonance mechanism of device **2510** similar to a resonance mechanism **2222** as described for device **2220** in FIGS. 22C, facilitates indication of pressure, wherein exemplarily each location **154** includes a coil-and-capacitor resonant circuit **2224**. The pressure may be applied by a finger. Device **2510** further includes a rotatable section **112** which can be mounted on surface **164**, and connected to section **114** by, for example, a connection mechanism **922** (exemplarily shown as clips **2512a,b** on the sides of stationary section **114).** The connection mechanism may be located on the stationary section or on the rotatable section. In some embodiments, section **112** may have a plug **212** protruding from an internal side **112b**. When section **112** is mounted on surface **164**, as specifically shown in FIG. 25B, the plug may influence the indication locations (shown are circuits **1420**, each included in an indication location **154**), similarly pressure from touch influencing the locations. Because the indication locations are distributed as a series on the curve of section **114**, when section **112** is rotated on surface **164**, the rotation may be indicated the same as sliding a finger along the surface. Specific rotated positions of section **112** may similarly be indicated when the section is not rotating. Accordingly, device **2510** may be operated by touch, when section **112** is disconnected from the device, and by rotation of a rotatable section, when section **112** is mounted on the touch surface.

FIG. 25C shows a forty second embodiment of a finger-worn device of the invention as a device **2530** having a ring **2520** which can be mounted on a touch surface **164** of a device **2440** (similar to device 2410 in FIG. 24). Ring **2520** is exemplarily shown in FIG. 25C having a visual pattern **152'** as described for device **120** (see FIG. 1I) on an internal side **2520b**, so that the pattern may be detected by an optical sensing mechanism **128** on surface **164*,*** to indicate rotated positions of the ring. The pattern is shown having features **152a-e**, wherein each feature, when detected, is visually indicative of a specific location on the pattern which corresponds to a specific rotated position of the ring. The ring may be any ring to which a pattern may be attached, wherein the pattern may have any number of distinct visual features at any number of locations. Accordingly, ring **2520** may be mounted on surface **164** of device **2410** and rotated, wherein rotation of the ring corresponds to touch motion on the surface, while specific rotated positions of the ring may be indicated as states of device **2530.** Also shown in the figure is a connection, mechanism **922** for facilitating attachment of ring **2520** to device **2440.**

Following the above, any ring may act as a rotatable section **112** in a device **2510** by attaching a plug **212** to the internal side of the ring. If the ring fits on the device, specifically on a touch surface **164**, it may be rotated to obtain indications similar to indications from touch of the surfaces.

FIGS. 26A and FIG. 26B show a forty third embodiment of a finger-worn device of the invention as a device **2610** which includes a flexible enclosure **170** having a touch surface **164** (opposite to a back side **170b** shown in FIG. 26A) and a connection mechanism **922** for being attached to a separate party, such as a ring **2520** (FIG. 26A) and a finger (FIG. 26B). Together with the ring, device **2610** (shown ready to connect to external side **2520a** of ring **2520)** is forming a device **2612.** Enclosure **170** is shown in the figures being a slim band. Alternatively, the enclosure may be of any shape which has a surface, for being operated by touch. In FIG. 26A, mechanism **922** is shown including an adhesive **2614** for being located on back side 170b. The adhesive can be any attachment mechanism known in the art, preferably for facilitating attachment to human skin (see e.g. US Patents 6572636, 4890608, 5462743, 5846559, 5350581 and 4856504). Indication of touch on surface **164** is facilitated **by** a plurality of indication locations **154,** each can exemplarily sense touch and/or pressure. When the device is attached to a finger or a ring, surface **164** is exposed for being operated while the device is attached. Locations **154** may include passive sensors, such as RFID touch sensors, indicating touch to a separate party which initiates communication.

FIG. 26C shows a forty fourth embodiment of a finger-worn device of the invention as a device **2610'** similar to device **2610,** in which connection mechanism **922** is implemented as clips **2616a-d**, so that enclosure **170** can mechanically be attached to a finger, a ring, a separate party or another finger-worn device.

FIG. 26D shows a forty fifth embodiment of a finger-worn device of the invention as a device **510'** similar to device **510** as described for FIGS. 5A through 5C, which has an adhesive **2614** covering the eternal side of rotatable section **112,** as an exemplary connection mechanism. In FIG. 26E, device **510'** is shown attached to the inside of an exemplary ring **2520,** forming a device **2630.** Attachment is exemplarily facilitated by adhesive **2614** taping section **112** directly to the inside of the ring. Accordingly, rotatable section **112** of the device is shown to be specifically attached to the ring, Stationary section **114** contacts a finger when the ring and the attached device are worn on the finger. When the ring is being rotated relative to the finger, section **112** rotates together with the ring and relative to section **114,** while section **114** remains stationary by its contact to the finger.

Following the above, a ring may be attached to any rotatable section of a device of the invention, which may further be tiltable in accordance with rotatable and tiltable devices of the invention as described herein. Accordingly, a ring attached to a rotatable section in a tiltable and rotatable device may be tilted for operating the device (e.g. for generating indications of tilt).

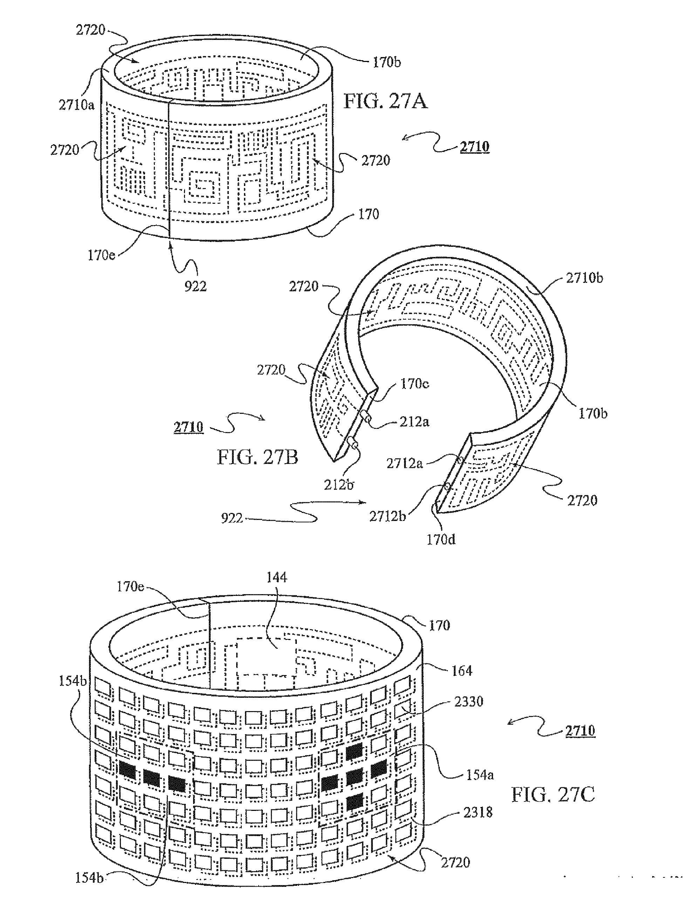

FIGS. 27A, 27B and 27C show a forty sixth embodiment of a finger-worn device of the invention as a device **2710** having either a ring shape **2710a** (FIGS. 27A and 27C) or a strip shape **2710b** (FIG. 27B). The device is shown having an enclosure **170** and a connection mechanism **922.** Connection mechanism **922** is shown to include plugs **212a** and **212b** on an end **170c** of enclosure **170,** and sockets **2712a** and **2712b** on another end **170d** of enclosure **170.** Plug **212a** can connect to socket **2712a**, while plug **212b** can connect to socket **2712b**. Accordingly, end **170c** can contact end **170d** to form a seam **170e**. In FIGS. 27A, 27B and 27C, the device is shown to further include circuitry **2720** inside enclosure **170**. Circuitry **2720** may serve as both an exemplary indication mechanism and as an exemplary visual output mechanism (i.e. circuitry **2720** being an interactive display mechanism) for indicating touch and for displaying visual output on surface **164** (shown in FIG. 27C opposite to seam **170e** when the device is in a ring shape). The circuitry may utilize any electronic sensing components and/or mechanisms that can sense touch through enclosure **170** (e.g. through a material of which the enclosure is made). The circuitry may further have electroluminescent areas, or light emitting components such as specific types of diodes or capacitors, while enclosure **170** may be transparent, so that light can be emitted through the enclosure.

FIG. 27C specifically shows device **2710** with circuitry **2720** having an array of display pixels **2330** (shown as evenly distributed rectangles in the figure) as an exemplary visual output mechanism, and an array of sensing pixels **2318** (shown as dashed rectangles in the figure) as an exemplary indication mechanism. The combination of pixels **2318** and pixels **2330** form an exemplary interactive display mechanism, similarly to the described for mechanism **2320** in FIGS. 23A-C. The display pixels may be electronic light emitting components as part of the circuitry, while the sensing pixels may be electronic sensors, also as part of the circuitry. Also shown in FIG. 27C is a processing unit **144** which may be a microprocessor or microcontroller or an arrangement of electronic transistors, as part of the circuitry. Display pixels **2330** form a + symbol and a - symbol, respectively "inside" indication locations **154a** and **154b** (shown as dash-dot rectangles surrounding an array of pixels **2718** and pixels **2330**). The indication location may be temporarily formed corresponding to the displayed symbols. In one example, touch indication locations **154a** may be touched for increasing audio volume, while touch indication location **154b** may be touched for decreasing audio volume. The volume may be of a separate party, for example of a media playing device communicating with device **2710** and receiving indications of touch from circuitry **2720.** In another example, sliding a finger on surface **164** from location **154a** to location **154b** (from the plus symbol to the minus symbol) may induce scrolling down an interface, while sliding a finger in an opposite direction (from the minus symbol to the plus symbol) may induce scrolling up an interface. The display of the symbols, as well as the formation of the indication locations, may change correspondingly to other operations of the device.

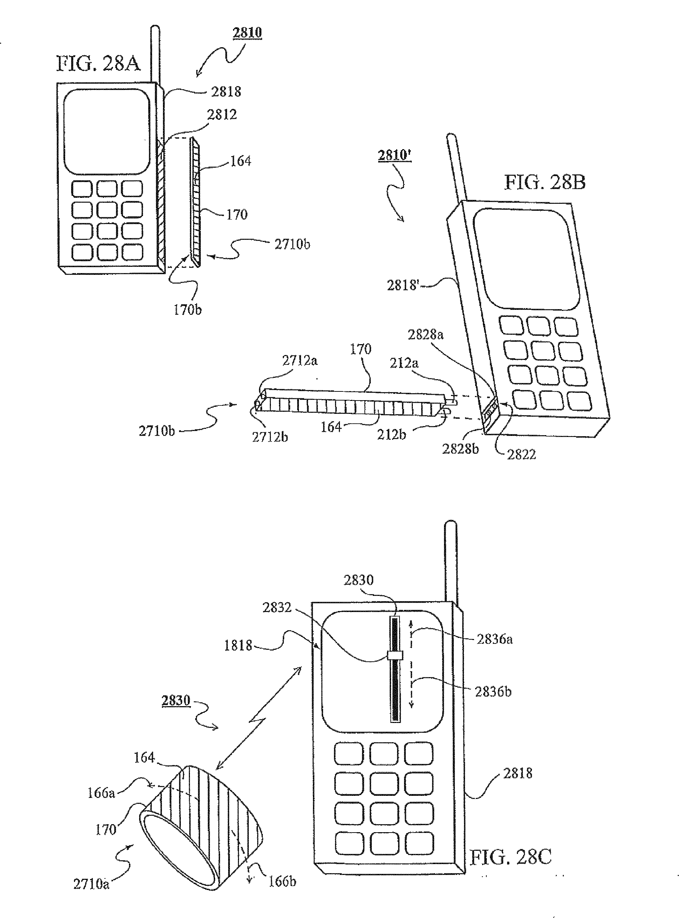

FIG. 28A shows an embodiment of a system **2810** in which a device **2710** (in a strip shape **2710b**) similar to the described for FIGS. 27A through 27C, is physically connected to a device **2818** (shown as a mobile phone). Device **2818** has a connection unit **2812** which facilitates connection to device **2710.** In some embodiments, device **2710** may be connected to device **2818** by attaching inner surface **142b** of enclosure **170** to unit **2812** when device **2710** is in strip shape **2710b,** so that touch surface **164** is exposed (i.e. facing outwards from the connection). In some embodiments, while device **2710** is connected to device **2818,** device **2710** may still be operated by touch and touch motion on surface **164.** Information and/or electricity may be transferred from one device to another through the connection unit if the connection includes electrical leads. For example, device **2710** may be connected to device **2818** for recharging a power source of device **2710.**

FIG. 28B shows another embodiment of a system **2810'** wherein device **2710** (also shown in a strip shape **2710b)** is connected to a device **2818'** having sockets **2828a,b** similar to sockets **2712a,b,** into which plugs **212a,b** of device **2710b** can be inserted. Also shown in the figure is a compartment **2822** (inside which are sockets **2828a,b).** In some embodiments, device **2710** may be inserted into compartment **2822,** such as for being stored inside device **2818'.**

FIG. 28C shows another embodiment of a system **2830** in which a device **2710** (being in a ring shape **2710a)** communicates remotely with a device **2818.** Device **2818** has a scrolling bar **2830** and a scrolling handle **2832** (as an exemplary element and selection, respectively) shown in the figure exemplarily displayed a monitor **1818** (see monitor **1818** of a separate party **320** in FIGS. 18A-D). The operation of controlling handle **2832** may be executed by sliding a finger on surface **164** of device **2710** in sliding directions **166a,b,** which correspond to scrolling directions **2836a,b,** as shown in FIG. 28C. Similar control of bar **2830** may be performed by sliding a finger on surface **164** of device **2710** when the device is in strip shape **2710b,** such as connected to device **2818.**

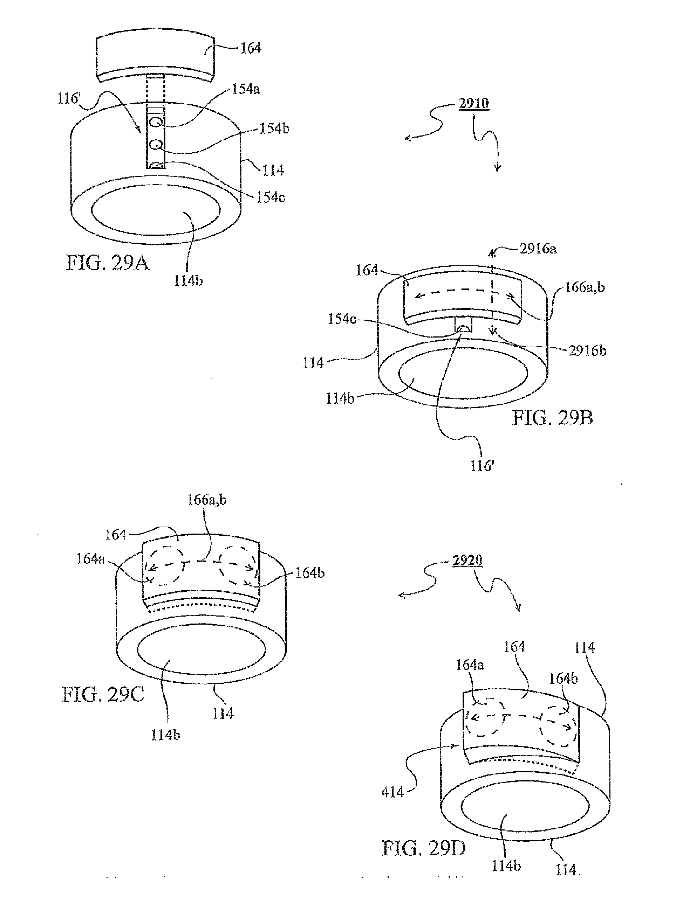

FIGS. 29A and 29B show a forty seventh embodiment of a finger-worn device of the invention as a device **2910** in which a touch surface may be repositioned for different states of the device. In FIGS. 29A and 29B, device **2910** is shown to generally include a stationary section **114** and a touch surface **164** coupled to an indication mechanism for indicating touch on the surface. Surface **164** may be set to any indication location **154a-c** and may be repositioned to any other indication location **154a-c.** Surface **164** may be physically accommodated by each location. Each location may indicate a device state as part of a second indication mechanism (shown as mechanism **116'** in the figure). Touch and touch motion may be indicated when surface **164** is set to any location, wherein the indication of touch and touch motion may also correspond to indication of a device state. In some embodiments, repositioning may be in repositioning directions **2916a,b,** which are generally perpendicular to sliding directions **166a,b** (the latter indicating touch motion).

FIGS. 29C and 29D show a forty eighth embodiment of a finger-worn device of the invention as a device **2920** similar to device **2910,** in which repositioning of surface **164** may be performed by tilting the surface. In device **2920,** surface **164** can be pressed (i.e. tilted) into stationary section **114** on each one of sides **164a,b** of surface **164.** For example, as specifically shown in FIG. 29D, surface **164** may be tilted on side **164b** into stationary section **114** in a tilted position **414,** exemplarily as a result of a finger pressing on side **164b.** Specific tilted positions or angles may be physically accommodated by a locking mechanism and may correspond to indication of different device states. Touch and touch motion may be indicated for each of the positions. In some embodiments, device **2920** may further include a snap-back mechanism such as mechanism **1626** (FIG. 16), which allows surface **164** to snap-back to its un-tilted position when released from pressure.

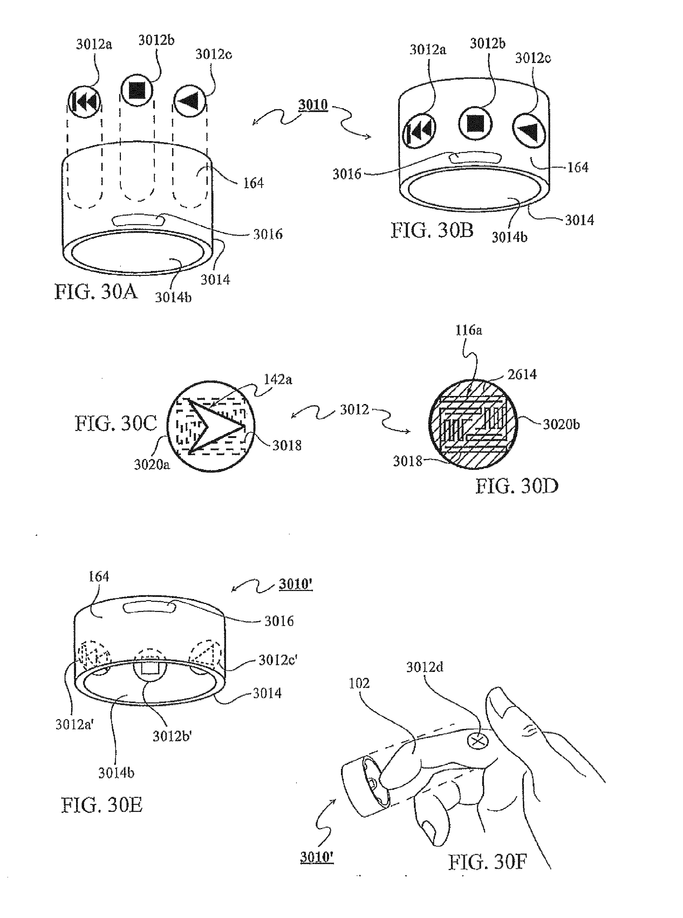

FIGS. 30A and 30B show a forty ninth embodiment of a finger-worn device of the invention as a device **3010** which includes an enclosure **3014,** a touch surface **164** and patches **3012a-c,** wherein each of the patches may be an indication location as described herein for indicating touch and/or pressure at specific locations. Accordingly, directional information may be obtained from an indicated touching sequence (i.e. touching any combination and/or order of patches). The patches can be attached to surface **164** (FIG. 30B) and detached from surface **164** (FIG. 30A) and can communicate with a transceiver **3016** (as an exemplary communication mechanism) located on enclosure **3014,** specifically for indicating touch and/or pressure to other elements of the device. In some embodiments, indication is facilitated by the patches passively indicating touch and/or pressure by modulating signals initiated by the transceiver. The transceiver can generate a continuous stream of interrogating signals which are modulated by each patch that is touched, or on which pressure is applied, and returned to the transceiver for detecting the modulations as touch and/or pressure indications.

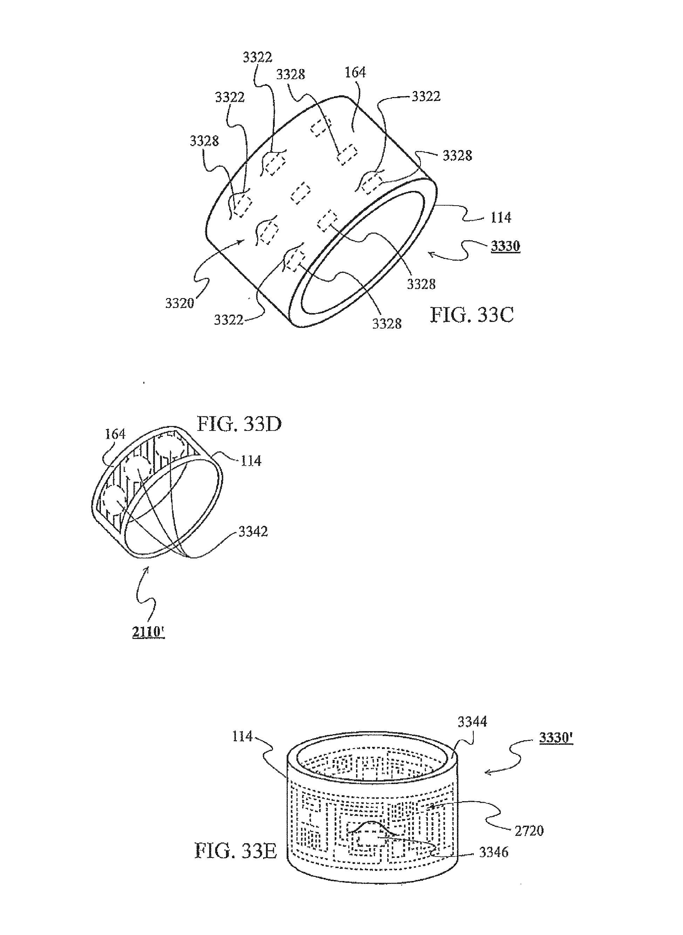

FIGS. 30C and 30D show an exemplary patch **3012** having a passive indication mechanism **116a** which can indicate touch and/or pressure on a front side **3020a** (FIG. 30C) of patch **3012** by passive sensing. Passive sensing may be facilitated by any number of mechanisms known in the art (see e.g. US Patent 6622567). Touch is indicated when front side **3020a** is touched. In some embodiments, as shown in the figures, mechanism **116a** may include a circuitry **3018** which facilitates sensing and indicating touch, such as by including self-powering switches (see self-powering switches **3342** in FIG. 33D). In FIG. 30D there is shown a back side **3020b** of patch **3012** where exemplarily circuitry **3018** is, and also an adhesive **2614** facilitating attachment to surfaces (as an exemplary connection mechanism). Further shown in FIG. 30C is a passive visual output mechanism **142a** (shown exemplarily displaying an arrow-head symbol) on front side **3020a.** Passively outputting visuals may be facilitated by any number of mechanisms known in the art which require energy only to change a display, and which does not require energy to sustain a display. For example, mechanism **142a** may be a bi-stable visual configuration (e.g. a pixels array) known in the art to facilitate maintaining an image without energy (see e.g. US Patents 6201633, 6034807 and 6404339). For another example, mechanism **142a** may be an electronic-ink remotely controlled display (see e.g. US Patent 6753830). Energy required to change the display (such as to alter the state of the materials in the display) may be obtained by circuit **3018** converting incoming signals to electricity. Alternatively, front side **3020a** of patch **3012** may be any printed image (e.g. a graphic symbol) which may visually represent an operation corresponding to indications of touch on the patch, such as an operation executed according to input registered from such indications. The combination of mechanism **142a** and the sensing features of circuit **3018** may facilitate an interactive display mechanism (see FIGS. 23A-C and FIG. 27C).

FIGS. 30E and 30F show a- fiftieth embodiment of a finger-worn device of the invention as a device **3010'** similar to device **3010,** in which patches **3012a-c'** are attached on an internal side **3014b** of enclosure **3014,** which can be rotated (such as being an exemplary rotatable section **112).** In device **3010',** each of patches **3012a-c'** can indicate contact with another patch, specifically with a patch **3012d** which is shown in FIG. 30F to exemplarily be attached on an index finger **102.** Device **3010'** can be worn on finger **102** specifically "on" patch **3012d** so that when the device is rotated on the finger, each of patches **3012a-c'** contact patch **3012d.** Accordingly, similarly to the described for touch indication from patches **3012a-c,** rotation of device **3010'** is indicated by sequential contact of each of patches **3012a-c'** with patch **3012d.** In some embodiments, patches **3012a-d'** may be able to indicate touch in addition to indicating contact with another patch, and may be detached from and attached to any surface, other than the described herein.

Following the above, any mechanism for indicating touch and/or touch motion and/or pressure on a touch surface **164** may be implemented on an internal side of a section of a finger-worn device, as opposed to the described for an external side (surface **164),** and to indicate influences from an element attached to a curve of a finger (such as shown in FIG. 30F patch **3012d** attached to finger **102).** For example, referring to a device **2510** as shown in FIGS. 25A and 25B, plug **212,** which is shown to be located on internal side **112b** of rotatable section **112** may be attached (e.g. by an adhesive) to a finger facing outwards. Additionally, surface **164** of stationary section **114** of device **2510** which can indicate pressure, may be implemented on internal side **112b** of section **112** (circuits **1420** may be included in section **112** facing side **112b** so that indication location **154** are generally located on side **112b).** Accordingly, section **112** can be mounted on a finger, specifically on plug **212** attached to the finger, so that the plug influences internal side **112b** as opposed to surface **164.** In such embodiments, similarly to the described for device **2510,** rotation and rotated positions of section **112** may be indicated when the section is directly worn on a finger. For another example, a pattern **152',** as described for a device **2530 in** FIG. 25C for being attached to a ring **2520,** may be attached around a curve of a finger (facing outwards), while an optical sensing mechanism **128** as described for device **2440** (in the same figure) may be located on the internal side of section **114** (facing inwards), thus by wearing section **114** "on" the pattern and rotating the section, as opposed to rotating the ring, can facilitate sensing rotation.

According to the above, any number of patches may be utilized as indication locations for device **3010.** The patches may be attached and/or operated in any order (e.g. sequence or array), position and location. In some embodiments, a touch surface **164** may include a connection unit (such as a connection unit **2812** as described for device **2818** in FIG. 28A) for facilitating physical attachment of patches on the surface. In some embodiments, physical attachment with a connection unit may facilitate obtaining indication from the patches without the need to transceiver **3016.**

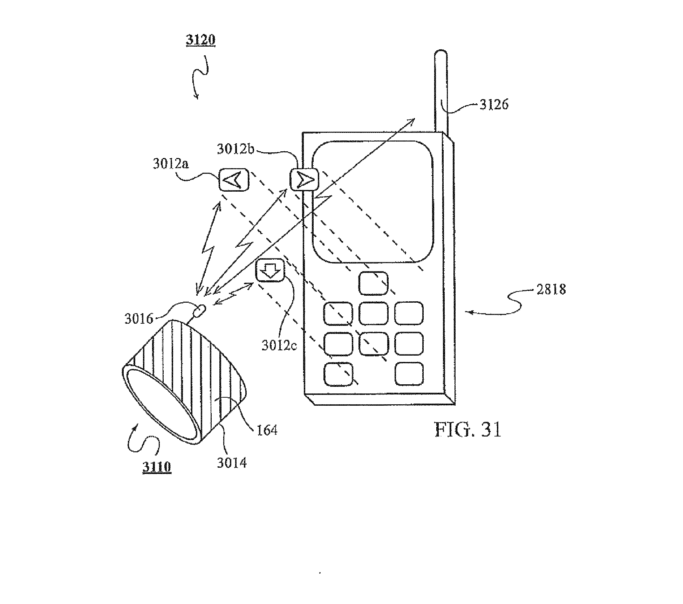

FIG. 31 shows a fifty first embodiment of a finger-worn device of the invention as a device **3110** similar to device **3010,** which includes an enclosure **3014,** a touch surface **164** and a transceiver **3016.** The device is similar to that in system **2830** (FIG. 28C), while transceiver **3016** can communicate with a device **2818** (shown as a mobile phone) having a transceiver **3126** and patches **3012a-c** (shown detached from party **3120).** The patches may be detached from separate party **3120** and attached to device **3110,** specifically to surface **164.** In some embodiments, transceiver **3016** of device **3110** may be able communicate with the patches to obtain touch indications. Additionally, transceiver **3016** may be able to communicate with device **2818,** specifically with transceiver **3126,** for relaying information of touch indications. In such cases, device **3110** acts as a mediator of communication between the patches and device **2818** to facilitate operating the patches (i.e. touching the patches for prompting an operation in device **2818)** on surface **164.** In one example, device **3110** augments the communication by enhancing modulated response signals from the patches, in case device **2818** is too far for them to directly send signals to it.

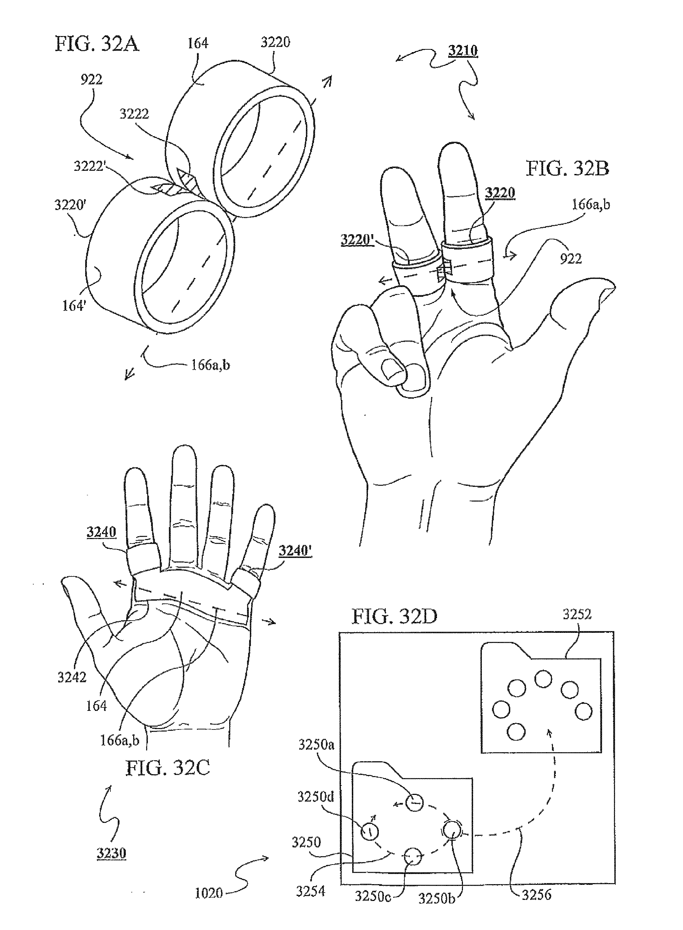

FIGS. 32A and 32B show an embodiment of a system **3210** in which multiple finger-worn devices of the invention are connected temporarily (i.e. they can be disconnected and operated separately) "side-by-side". In FIGS. 32A and 32B, system **3210** is shown to exemplarily include a device **3220,** a device **3220'** and a connection mechanism **922** including a connection unit **3222** of device **3220** and a connection unit **3222'** of device **3220'.** Contact of the connection units may be indicated by an indication mechanism, such as by having sensing mechanisms in each of the units, or such as by each unit including electrodes for closing a joint circuit. Connection may be indicated corresponding to a state of each device, different from an "unconnected" state. As specifically shown in FIG. 32B, devices **3220** and **3220'** may be "pressed together" for contact of unit **3222** with unit **3222',** e.g. by pressing together two adjacent fingers wearing the devices. Information and/or electricity may be transmitted from one device to another by mechanism **922.** In some embodiments, when connected, the devices may operate collaboratively, or may be operated simultaneously, such as by sliding a finger across both touch surfaces **164** and **164'** of the devices in sliding directions **166a,b.**

In some embodiments, a connection unit **3222** may be utilized to respectively connect a device of the invention to a separate party. For example, a unit **3222** may be an exposed surface (such as shown in FIGS. 32A and 32B) located on a finger-worn device facing the same direction as the open palm of a hand. The hand may be placed on a surface so that the exposed surface of the connection unit faces a separate party, such as an ATM or a "public information terminal", to exemplarily download information (e.g. electronic credit) from the separate party to the device. In another example, contact of a connection unit of a finger-worn device with a unit of a separate party may for recharging a power source (such as source **148** in FIG. 1G).

FIG. 32C shows an embodiment of a system **3230** in which any number of finger-worn devices (two such devices **3240** and **3240'** shown here) are connected to an extension section **3242** that has a touch surface **164** coupled with an indication mechanism for indicating touch and/or touch motion and/or pressure. In some embodiments, extension **3242** may be a sheet which may extend the touch surface of any device, so that touch and/or touch motion and/or pressure may be performed on a larger surface which may have more indication locations or more widely spread indication locations. As shown in FIG. 32C, a finger may slide on touch surface **164** of extension section **3242** in sliding directions **166a,b.** In some embodiments, the sliding of a finger on the touch surface of the extension may be for collaborative operations of the devices connected to the extension (e.g. devices **3240** and **3240'** in FIG. 32C). Note that an extension section of the invention may extend on any other operable element, such as an extension section for connecting to a rotatable section, to expend the external side of the rotatable section, or such as an extension section for connecting to two rotatable sections, for conveniently rotating both sections simultaneously.

FIG. 32D shows an interface **1020,** which may be controlled by multiple connected devices of the invention operating collaboratively. In some embodiments, a system **3210,** as described for FIGS. 32A and 32B, may facilitate controlling members in folders **3250** and **3252** which are exemplary interface elements. When devices **3220** and **3220'** are not connected, they may be operated for browsing inside folders **3250** and **3252,** respectively. Specifically, sliding a finger on surface **164** of device **3220** may browse between exemplary members **3250a-d** in browsing directions **3254** (e.g. sliding a finger on surface **164** in direction 166a may be for browsing in one direction while sliding in direction **166b** for browsing in an opposite direction) while sliding a finger on surface **164'** of device **3220'** may browse between any number of exemplary members of folder **3252.** When one of members **3250a-d** (e.g. member **3250b** in FIG. 32D) is selected by browsing, the selected member may be copied to folder **3252** in a copying direction **3256** by connecting devices **3220** and **3220'** as described above, and sliding a finger from surface **164** to surface **164'.** Similarly, when devices **3220** and **3220'** are connected, a selected member from folder **3252** may be copied from folder **3252** to folder **3250** (in an opposite copying direction), by sliding a finger from surface **164'** to surface **164.**

In some embodiments, system **3210** may be utilized to control an interface **1020** as described in FIG. 10E. Similarly to the described for multiple rotatable sections that can be rotated individually and simultaneously for different operations, sliding a finger on the touch surface of one of devices **3220** and **3220'** may control selection **1032** of element **1030a,** while sliding a finger on the touch surface of the other device may control selection **1032** of element **1030b.** Additionally, connecting devices **3220** and **3220'** and sliding a finger across both surfaces may control selection **1032** of element **1030c.** Note that the described above for folders **3250** and **3252** also applies to any interface elements.

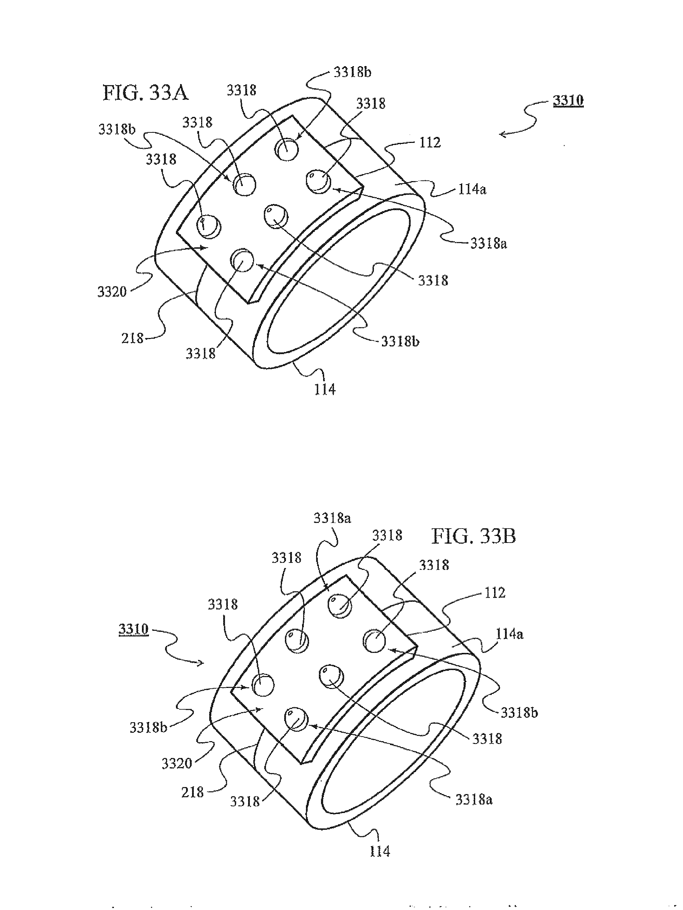

FIGS. 33A and 33B show a fifty second embodiment of a finger-worn device of the invention as a device **3310** having a tactile output mechanism **3320** for outputting tangible information. "Tangible" information may be feedback from operations of the device, or information received by the device from incoming signals. In FIGS. 33A and 33B, device **3310** is shown to generally include a stationary section **114,** a rotatable section **112** and a rotation track **218** on an external side **114a,** coupled with an indication mechanism for indicating rotation of section **112** on track **218.** Mechanism **3320** includes a plurality of tangible indicators **3318** located on a surface **112a** of section **112.** In some embodiments, each of the indicators may have any number of possible states, such as states **3318a** and **3318b.** These states are respectively embodied by a "popped-out" (i.e. protruding) pin (state **3318a)** and a retracted pin (state **3318b).** Combinations of different states of indicators in an array may form distinct tangible information. For example, Braille characters may be formed on surface **112a** by mechanism **3320,** for outputting meaningful messages in Braille language. FIG. 33A specifically shows indicators **3318** forming a first combination of states, while FIG. 33B specifically shows indicators **3318** forming a second combination of states. In some embodiments, a user may receive a tangible output during rotation of section **112,** for receiving tangible output while operating the device.

FIG. 33C show a fifty third embodiment of a finger-worn device of the invention as a device **3330** having a stationary section **114,** a touch surface **164** and a tactile output mechanism **3320** inside the enclosure and affecting the enclosure. In FIG. 33C, mechanism **3320** is shown to utilize tactile pixels **3328** as exemplary tangible indicators, which can influence the enclosure to exemplarily form bumps **3322.** Affecting the enclosure may be facilitated by any number of mechanisms known in the art, such as electromechanical (e.g. piezoelectric, see e.g. US Patent numbers 5440194 and 5982304) actuators, In some embodiments, tactile output mechanism **3320** may be adapted to indicate touch, specifically pressure, in addition to generating tactile output, by implementing any number of mechanisms known in the art (see e.g. US Patent number 6060811). For example, mechanism **116** may utilize piezoelectric transducers that may convert pressure to electric signals (for indication of pressure) and which may be activated by electrical signals to press on enclosure 170 from inside.

Following the above, pressure applied on a touch surface of a device of the invention may be converted to energy, similarly to the described for a power generating mechanism **616** implemented in device **610** shown in FIGS. 6A and 6B, as a mechanism which can convert pressure to electricity. Accordingly, a device **2110',** similar to device **2110** (see FIG. 21A), is shown in FIG. 33D having an exemplary power generating mechanism implemented as self-powering switches **3342** (see e.g. US Patent 6700310) on a touch surface **164,** wherein each switch may be an indication location of a passive indication mechanism of device **2110'.**

In some embodiments, as shown in FIG. 33E, which shows the fifty fourth embodiment of a finger-worn device as a device **3330',** the device may have an electroactive polymer **3344** (see e.g. US Patent 5977685) as an exemplary tactile output mechanism and as an enclosure of section 114, wherein reactions of the polymer may be facilitated by a circuitry **2720,** similarly to the described in FIGS. 27A-C. Similarly to the described in FIG. 27C for display pixels and sensing pixels as electric components of the circuitry, the circuitry may include electrodes (shown an electrode **3346** in the figure) which can induce a reaction in the enclosing polymer, as known in the art (see e.g. US Patents 6583533 and 6376971).

In some embodiments, a tactile output mechanism **3320** may influence an internal side of a section a device of the invention that comes in contact with the finger wearing the device, such as an internal side **114b** of a stationary section **114.** This facilitates feeling the tangible information (i.e. tactile output) by a finger wearing a device, as opposed to feeling it by a finger operating the device.

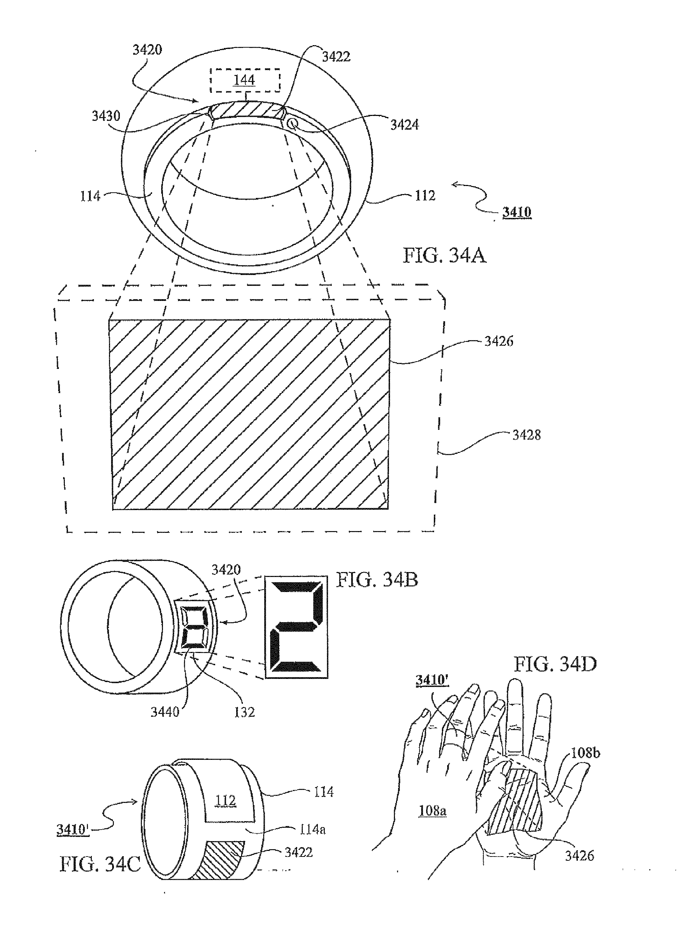

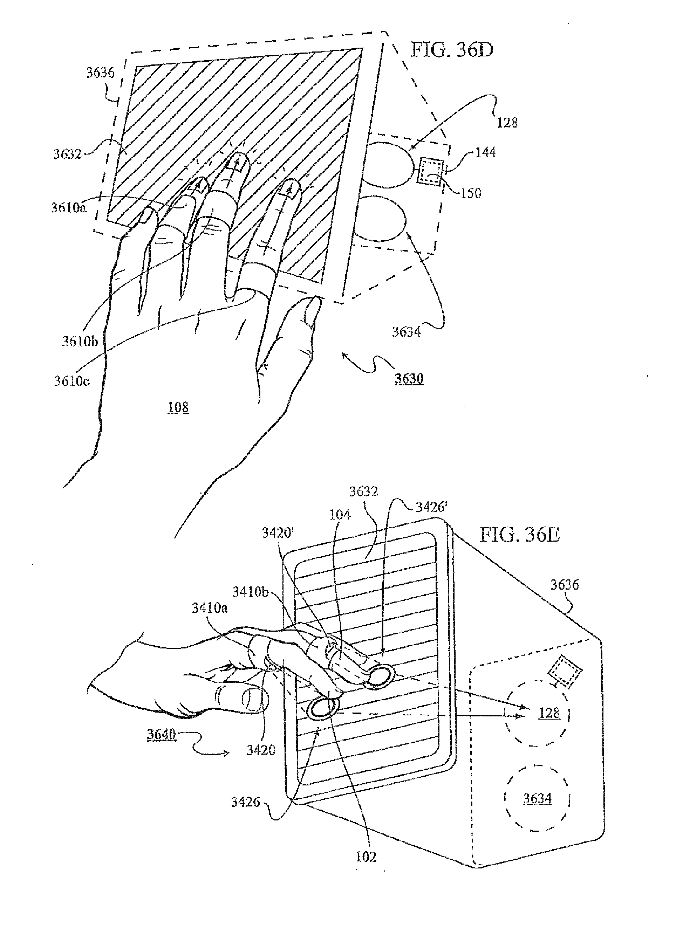

FIG. 34A shows a-fifty fourth embodiment of a finger-worn device of the invention as a device **3410** which includes a projection mechanism **3420** which can act as an indication mechanism for indicating use and/or states to a separate party (see system **3640** in FIG. 36E) In FIG. 34A, device **3410** is shown to further include a rotatable section **112** installed on a stationary section **114,** and an indication mechanism.

In device **3410,** mechanism **3420** is shown to utilize a projector **3422,** a detection mechanism **3424** and a projection adjusting mechanism **3430.** Projector **3422** may be a type of so-called handheld projector or "pico-projector" as known in the art (see e.g. US Patent Application 2003/0038927) to be implemented in portable devices. Alternatively, the projector may be any element which can project visual output on a surface, such as an array of small LEDs and a lens which focuses the emitted light. The output may be simple imagery, such as digits formed by a small LCD 3440, through which light may be projected from a single light source **132,** as shown in FIG. 34B. In FIG. 34A, projector **3422** is shown to project a visual output **3426** on a surface **3428.** Detection mechanism **3424** can detect properties of a surface (e.g. surface **3428)** on which visual output (e.g. output **3426)** is being projected, such as distance from projector **3422** and/or angle relative to the projector. Alternatively or additionally, detection mechanism **3424** can detect properties of the projected visual output. Projection adjusting mechanism **3430** can adjust visual output **3426** during projection, such as by modulating the angle of projector **3422** and/or the focal length. By utilizing detection mechanism **3424** and projection adjusting mechanism **3430,** projection mechanism **3420** can auto-calibrate the projection operation in real-time. This may be facilitated by any number of mechanisms or means known in the art (see e.g. US Patent 5742698). In some embodiments, mechanism **3424** is utilizing a processing unit 144 for auto-calibrating, such as by processing detections from mechanism **3424** and correspondingly controlling mechanism **3430.**

FIG. 34C shows a fifty fifth embodiment of a finger-worn device as a device **3410',** generally similar to device **3410,** in which a projection mechanism **3420** is generally located on an external side **114a** of a stationary section **144.** A projector of mechanism **3420** preferably faces the same direction as the front of a palm on a finger of which the device is worn. In some embodiments, projecting mechanism **3420** is designed to facilitate projecting visual output on a hand, specifically on a hand of a user wearing device **3410** on a finger of the other hand. In FIG. 34D there is shown device **3410'** worn on a hand **108a** while a visual output **3426** is projected on a hand **108b,** specifically on the front of the palm of thereof. This facilitates displaying visual output that is larger than the device (i.e. cannot be displayed on the device) and where there is no available surface on which to project the output. Displaying visual output on a hand is preferably intended for simple visual output and not for prolonged viewing. For example, a map may be projected on a hand when a user wishes to glance at it.

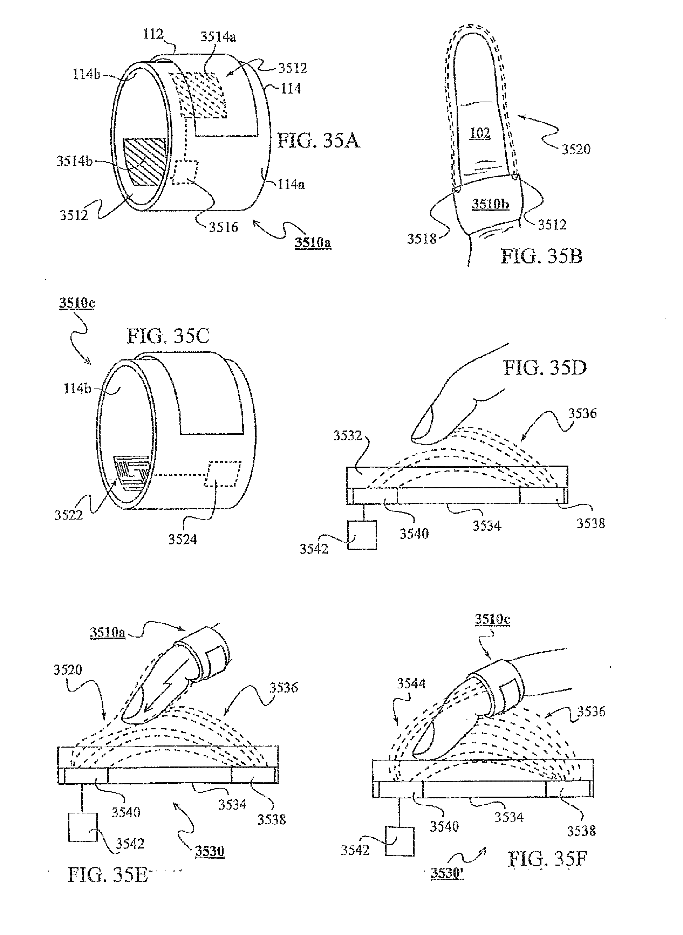

FIG. 35A shows a fifty fifth embodiment of a finger-worn device of the invention as a device **3510a** having a transmitter **3512.** Transmitter **3512** may be any transmitter known in the art to utilize the human body as a transmission medium (or conductor) or capacitive area (see e.g. US Patent numbers 5796827, 6211799, 6864780, 6771161 and 6754472). Accordingly, transmitter 3512 may be an exemplary communication mechanism of any device of the invention. As known in the art, specifically in the field of near-field communication (NFC) and personal area networks (PAN), the transmitter may generate very low currents or change the capacitive body field. Preferably, the transmitter generates an electric field coupled to the body of a user wearing device **3510a,** specifically generating the field "on" the finger wearing the device, or generating the field so that it is "carried" to the tip of the finger wearing the device, as known in the art. For device **3510a,** transmitter **3512** includes electrodes **3514a,b** (see e.g. US Patents 4653503 and 4067342) on an internal side **114a** of a stationary section **114,** for coupling the field to the body, and a field modulator **3516** which can modulate the field generated by the transmitter, for communicating information through modulation. The modulator may be a processing unit which can process indications of use and/or states of the device and correspondingly modulate generated fields. In FIG. 35A, device **3510a** is shown to further include a rotatable section **112,** a stationary section **114,** wherein rotation of section **112** may be indicated by an indication mechanism. Alternatively, **device 3510a** may include and be operated by any other elements.

FIG. 35B shows a fifty seventh embodiment of a finger-worn device of the invention as a device **3510b,** generally similar to device **3510** but also having a transmitter **3512** and a receiver **3518,** and exemplarily worn on an index finger. Electric field **3520** is shown generated "on" or "through" the finger by transmitter **3512** and received by receiver **3518.** Similarly to the following description for a system **3530,** receiver **3518** of device **3510b** may facilitate receiving information from a separate party by field modulations and influences

FIG. 35C shows a fifty eight embodiment of a finger-worn device of the invention as a device **3510c,** generally similar to device **3510,** but also having an antenna **3522** connected to a transponder mechanism **3524.** The antenna is located on the internal side of section **114** for contact with the finger.

FIGS. 35D through 35F show the utilization of a finger-worn device, as in FIGS. 35A through 35C, to communicate with a detection apparatus **3534** in a system **3530.** In FIG. 35D and 35E there is shown a-finger in proximity to a touch'surface **3532.** Alternatively, the finger may be touching the touch surface. Surface **3532** is a touch surface of apparatus **3534** which is an exemplary embodiment of touch and/or proximity and/or position detecting apparatus, as known in the art to utilize electric fields (see e.g. US Patents 5861875, 4071691, 6998856 and 6025726). In apparatus **3534,** an electric field **3536** is generated by a transmitter **3538** to a receiver **3540.** The field is measured by the receiver, such as by being converted to digital information, and processed at a processing unit **3542.** In some embodiments, when a finger approaches surface **3532,** as specifically shown in FIG. 35D, the field is disturbed as some of the field lines are shunted to ground and do not reach the receiver. Accordingly, the total capacitance measured at the receiver decreases. By measuring and processing changes in capacitance, touch and/or proximity can be sensed. As specifically shown in FIG. 35E (for system **3530),** device **3510a** may be worn on the finger approaching surface **3532.** The device may be operated to generate an electric field (e.g. field **3520)** that is carried by the body, thus reaching the tip of the finger and consequently to the receiver of apparatus **3534.** The electric field from device **3510a** is generated by transmitter **3512** of the device, while by modulating the field with modulator **3516** information may be transmitted to the receiver of the apparatus, which is already designed to measure electric fields. Processing unit **3542** may be adapted, such as reprogrammed, to register specific measurements of the receiver as input, in addition to registering measurements of touch influence, which has a certain threshold, as known in the art. Note that alternatively to the described for transmitter **3512** generating an electric field, the transmitter may generate transmissions or signals which may be transmitted or "carried" through or on the finger wearing device **3510a.**

FIG. 35F shows an embodiment of system **3530'** in which a device **3510c** can be utilized as an input-device. Similarly to the described for system **3530,** transmitter **3538** is generating an electric field (shown field **3536** in the figure). In FIG. 35F, device **3510c** is shown worn on a finger while the finger exemplarily touches surface **3532** of apparatus **3534.** Field **3536** generated by transmitter **3538** reaches antenna **3522,** such as by the device specifically being in the "near-field" region of the field, or by the field being "carried" through or on the finger wearing device **3510c.** Transponder mechanism **3524** is consequently powered-up for transmitting transmissions **3544** to receiver **3540** of apparatus **3534.** Alternatively, transponder mechanism **3524** may modulate disturbances (also "influence") to field **3538,** in addition to the disturbance of the finger, thus facilitating communicating information to the apparatus. Transmitting transmissions to receiver **3540** and/or influencing field **3536** by mechanism **3524** may utilize the physiological electric properties of the finger to maximize the effectiveness of such operations.

In some embodiments, similarly to the described for system **3530'** and device **3510c,** a passive indication mechanism (e.g. passive indication mechanism **116a** as shown in FIG. 3C) may be implemented in any finger-worn device of the invention as a transponder mechanism **3524,** to passively indicate use and/or states of the device

Note that any apparatus which utilizes electric properties sensing, specifically capacitance sensing, for obtaining touch input and/or fingers positions, may be influenced by a finger-worn device of the invention as described for devices **3510a-c.** Further note that the described herein for electric fields may similarly refer to electromagnetic signals or transmissions.

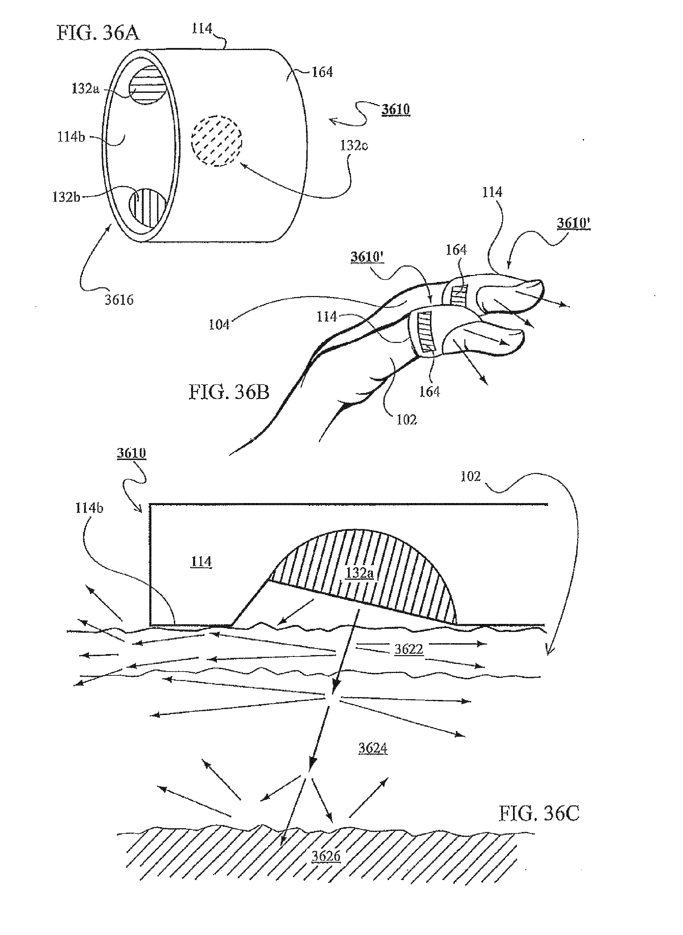

FIG. 36A shows a fifty ninth embodiment of a finger-worn device of the invention as a device **3610** which includes an illumination mechanism **3616** which facilitates generally illuminating a finger wearing the device, preferably by scattering and diffusion of light through epidermal, dermal and sub-dermal layers of the skin of the finger. The mechanism preferably facilitates illumination by light sources directed at the finger, such as light sources facing the skin of the finger. In FIG. 36A, device **3610** is shown to further include, exemplarily, a stationary section **114** and a touch surface **164** coupled with an indication mechanism. In device **3610,** mechanism **3616** exemplarily includes light sources **132a-c** on an internal side **114b** of stationary section **114,** the light sources generally facing the skin of a finger when the device is worn. In some embodiments, device **3610** may be worn on the intermediate phalanx (middle) section of a finger, for optimal transmittance of light to the tip of the finger (i.e. the distal phalanx). Sources **132a-c** may exemplarily be high intensity, super-luminous diodes or laser diodes, similar to diodes used for Low Intensity Laser Therapy (LILT), which are known in the art to facilitate light passing through dermal and sub-dermal layers. The light sources may emit any kind of light, the properties of which may be modulated by mechanism **3616,** such as for changes in wavelengths, intensities or detectable and measurable blinking rates. Light generated by mechanism **3616** and emitted from the tip of a finger wearing device **3610,** or from any section of the skin surface of the finger, may be modulated for optical communications, specifically for relaying information of operations of the device, such as indications of use and/or states, to be detected by any optical sensing mechanism. Diffuse glow from the finger may facilitate easy detection of visual output, such as of different colors. Additionally, detecting the location and/or tracking the motion of the finger in low lighting conditions may also be facilitated. In some embodiments, mechanism **3616** may illuminate a finger with non-visible wavelengths, such as IR light.

FIG. 36B shows a sixtieth embodiment of a finger-worn device of the invention as a device **3610'.** Two such devices are worn on fingers of a hand, wherein a first device is worn on index finger **102,** while a second device is worn on middle finger **104.** Light from the devices is generally emitted towards the tip of each finger, while the specific shape of stationary **section 114** of each device is designed to minimally obscure light scattering out of the distal phalanx section, and to maximize light propagation through the skin. Optionally, the stationary section may extend to the distal phalanx section, to facilitate light scattering out of the tip. Touch surface **164** of each of the devices is shown in FIG. 36B as generally being a rectangular area on the side the stationary section, to facilitate sliding of a thumb in two opposite directions.

FIG. 36C shows a cross section of device **3610** worn on finger **102,** wherein light from source **132a** is generally propagating through the layers of skin in the general direction of the tip (towards the left in the figure). In FIG. 36C, finger **102** is shown having an epidermis layer **3622,** a dermis layer **3624** and a subcutis layer **3626.** Most of the scattered light is propagated through layers **3622** and **3624.** A small amount is scattered from layer **3626** and the rest is absorbed. In some embodiments, internal side 114b of stationary section **114** is generally a highly reflective surface, for reflecting most of the light scattered back towards the device, to increase the effectiveness of illumination.

FIGS. 36D shows an embodiment of a system **3630** in which devices **3610a-c** (as a plurality of device **3610)** are worn on fingers of a hand **108.** Each of the devices is utilized for interacting with an optical sensing apparatus **3636,** where for each, mechanism **3616** acts as a communication mechanism for exemplarily communicating with apparatus **3636.** In system **3630,** apparatus **3636** is designed to detect touch on a screen **3632** by utilizing an optical sensing mechanism **128,** located behind the screen and facing it. Mechanism **128** may be able to measure different light properties (e.g. wavelength, intensity, etc.). In some embodiments, the sensing mechanism may be a camera for capturing images of anything touching the screen and thus creating shadows on the screen. In some embodiments, mechanism **128** may be coupled with a processing unit **144** and a recognition function **150,** for recognizing certain optical features sensed by mechanism **128.** Apparatus **3636** may be adapted to detect and recognize specific light properties, in addition to detecting touch optically. Accordingly, a mechanism **3616** of each device **3610** may illuminate the finger on which the device is worn, so that light emitted from the tip of the finger is detected by mechanism **128** and recognized, such as for registering a specific input corresponding to the recognition. For example, mechanism **128** may detect touch by sensing shadows formed when tips of fingers touch screen **3632.** When a mechanism **3616** of a device **3610** is illuminating the finger on which the device is worn with a certain color, that color may be detected and recognized. In some embodiments, different colors may correspond to different inputs registered in system **3630,** so that a device **3610** may be operated to optically relay information in the system, in addition to just touch being a source of input.

In alternative embodiments, optical sensing mechanism **128** of apparatus **3636** may be a near infrared (NIR) sensing mechanism, while screen **3632** may be a waveguide illuminated with NIR light which is totally reflected inside the waveguide. The total reflection may be disturbed by touch on the screen so that some of the light is scattered towards the sensing mechanism to detect touch on the screen. In such case, sensing mechanism 128 may be adapted to further be able to detect NIR light originating from the tip of a finger touching the screen, specifically different properties of that light. Such light may be generated by an illumination mechanism **3616** of a device **3610** worn on that finger. Mechanism **3616** may modulate NIR light emissions as informative signals which may exemplarily correspond to indications of touch from a touch surface **164,** or any other operable element of the device. Furthermore, by utilizing mechanisms **3616,** apparatus **3636** may distinguish between touch of a touch finger wearing a device **3610,** such as by assigning a different illumination color to each finger.

In some embodiments, apparatus **3636** may include, in addition to the described above, a projector **3634** for projecting visuals on screen **3632.**

FIG. 36E shows an embodiment of a system **3640** similar to system **3630,** in which devices **3410a,b** (as a plurality of device **3410)** having projection mechanisms **3420** and **3420',** respectively, are utilized for the same results as in system **3630.** In FIG. 36E there is shown a hand **108** interacting with an apparatus **3636** as previously described. An embodiment of a device **3410a** is worn on an index finger **102,** while an embodiment of a device **3410b** is worn on a middle finger **104.** A projection mechanism **3420** of device **3410a** is projecting visual output **3426** on screen **3632,** approximately where finger **102** is touching the screen, specifically "below" the tip of the finger. A projection mechanism **3420'** of device **3410b** projects visual output **3426'** on screen **3632,** generally where finger **104** is touching the screen, specifically above the tip of the finger. Device **3410b** is shown to be worn on the intermediate phalanx section of finger **104.** Accordingly, calibrating the visual output projected from mechanism **3420'** is not needed because the general distance between where finger **104** touches a screen and the location of the device is always the same, except for minor variations when the distal phalanx section of the finger folds during touch. Similarly to the described for system **3630,** apparatus **3636** may detect each visual output, and by recognition, corresponding input may be registered in system **3640.** Accordingly, projecting mechanisms **3420** and **3420'** may act as exemplary communication mechanisms. In some embodiments, similarly to illumination of a mechanism **3616,** visual output from a projection mechanism may be just light having specific detectable properties.

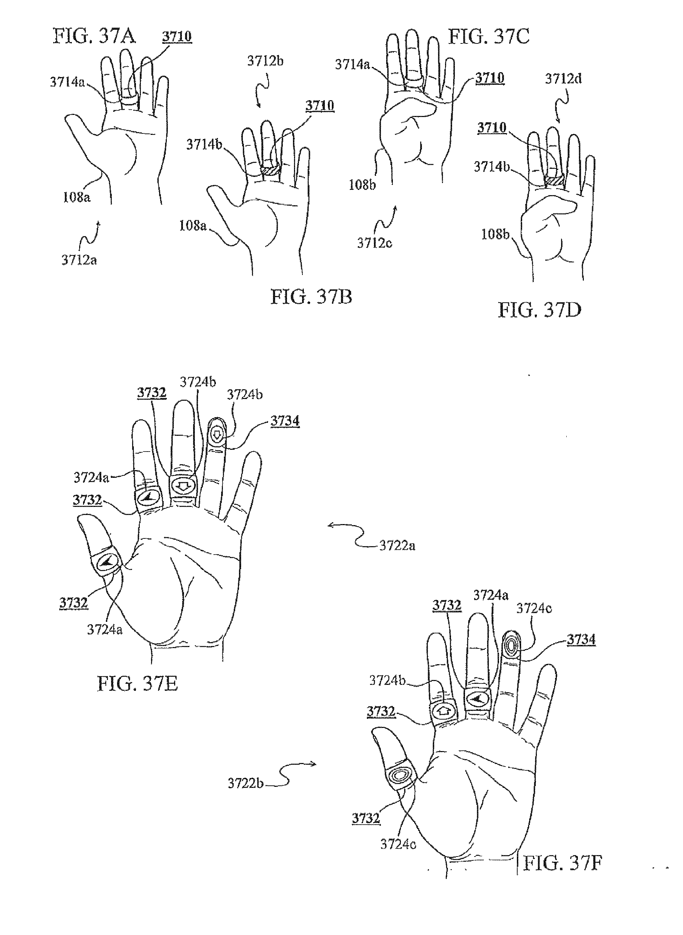

FIGS. 37A through 37D respectively show visual messages **3712a-d,** each including a visual output of an exemplary finger-worn device **3710,** and a hand gesture. Any visual output mechanism in device **3710** can generate visual outputs **3714a** (FIGS. 37A and 37C) and **3714b** (FIGS. 37B and 37D). Device **3710** is worn on a finger of a hand **108,** which can perform gestures **108a** (FIGS. 37A and 37B) and **108b** (FIGS. 37C and 37D). In some embodiments, the gestures may be meaningful visual messages, such as being recognizable in visual recognition mechanisms where interactions are facilitated by visually recognizing hand gestures. In some embodiments, the visual outputs of device **3710,** which may be indicative of states of the device, may be meaningful in visual interactions systems adapted to specifically detect output from the device, such as a system programmed to identify distinctly glowing colors approximately at detected hand gestures. Accordingly, different hand gestures and different visual outputs from the device worn on a finger of the hand performing the gestures may be combined for specific visual messages. Visual interactions systems may include a camera connected to a computer having a visual recognition application, wherein the application may be programmed to influence operations of the computer according to images captures by the camera.

FIGS. 37E and 37F show visual messages **3722a,b,** each including at least one of or a combination of visual outputs **3724a-c,** shown in the figures as graphic symbols. Each of the outputs can be displayed on a finger-worn device **3732** and by a device **3734** (shown to be displayed at the front of a palm, yet may be displayed at the back of a palm, in some embodiments). Device **3734** may be worn on a tip of a finger, as shown in FIGS. 37E and 37F. Setting device **3732** and device **3734** to display a specific output is by manually operating the devices, such as by setting a rotatable section of each device to a specific rotated position, or by other operations of the devices, such as responding to incoming signals. In some embodiments, each of visual outputs **3724a-c** may be detected and registered as specific inputs. Additionally, combinations of the outputs (e.g. message **3722a** shown in FIG. 37E and message **3722b** shown in FIG. 37F), may be detected and registered as further specific visual inputs. For example, output **3724a** may visually represent an element of an interface, wherein upon detection of the output, it is registered as input corresponding to that element of the interface. Similarly, each of outputs **3724b-c** visually represent elements of the interface, and so upon detection are registered as input that correspond to their respective interface elements. The outputs of the interface may exemplarily be applications that "open" according to corresponding input. The outputs may similarly be tool-bars or options-menus that "pop-up" as their corresponding input is registered. The outputs may alternatively be assigned folders that are "called-upon" by corresponding input as it is detected and registered.

In some embodiments, visual output from a device of the invention may facilitate detecting the direction the finger is positioned in (such as when the finger is performing a "pointing" gesture). For example, as shown for an output **3724b** (FIG. 37F), a device **3732** (shown in FIG. 37F to display output **3724b)** may display the output, which is generally shown as an arrow, pointing generally towards the tip of a finger wearing the device, while detecting the direction of the arrow (output **3724b)** may be faster for a visual recognition mechanism than detecting the direction of the finger (which might require a more complicated recognition algorithm).

In some embodiments, visual output may be utilized as responses. For example, a system having a visual sensing mechanism that can capture and recognize outputs **3724a-c** may further include an interface and a monitor for displaying visual output of the interface. Additionally, the system may display certain queries to a user wearing devices **3732** and **3734,** that can be answered or replied to by any of outputs **3724a-c,** and so the user may use any of devices **3732** and **3734** for displaying the element or the combination of outputs that correspond to the desired answer or reply. This procedure may be facilitated by the user sliding a thumb on any of the devices to browse through the outputs, and then presenting the display of the devices to the visual sensing mechanism of the system. Alternatively, the user may perform specific action for prompting a display of each of the outputs, such as a "double-tap" (pressing twice rapidly) to display outputs **3724a,** or touch on a specific area of a sensing surface for displaying. output **3724b,** a touch on another specific area of the sensing surface for displaying outputs **3724c.** Amounts of pressure on the sensing surface of each of the devices may also correspond to each of the outputs.

Combinations of outputs displayed on a device of the invention may be for more interaction features, such as for assigning values to a function of an interface. For example, displaying output **3724a** on one device and output **3724b** on another device may be for creating a random displayed object, while additionally displaying output **3724b** on yet another device may be for creating a displayed object having properties that correspond to that output. Alternatively, displaying output **3724a** in combination with output **3724c** may be for creating a displayed object having different properties.

Outputs displayed on a device of the invention may have multiple distinctive properties, such as colors or brightness. Additionally, the elements may be a static image or a sequence of images, such as an animation or video clip. Further additionally, the outputs may have a common semantic meaning, such as letters or digits, or preprogrammed semantic meaning, such as a combination of dots that may be recognized according to a protocol or syntax of dots combinations.

In some embodiments, outputs displayed by a device of the invention may be for communicating specific information to a separate party or to a visual recognition mechanism. For example, a device of the invention may display, according to use, personal information of the user of the device that uses the device to display the information if it is desired for the information to be detected by another device or as part of interactions in a system. The information may be an optical tag for retrieving certain information from a detecting device. In another example, the information may be an ID number whereas each digit of the number may be flashed for a brief moment, one after the other, enough to be detected and registered. The information may alternatively be a security code, a bar code, a visual encryption of values, a classification symbol, etc.

In some embodiments, a device of the invention may display output in response to signals received from another device, such as interrogation or query signals for extracting information stored on the device of the invention and displaying it on the device to be visually detected. The outputs may correspond or represent the information relevant to the signals.

In some embodiments, visual output displayed on finger-worn devices may be utilized by systems similarly to the above, for interactions that correspond to each finger wearing each device, so procedures or operations may be performed by each finger, separately or collaboratively. For example, displaying different outputs on each device worn on a different finger may be for distinguishing between the fingers so that each finger may control a separate cursor on a visual interface, or for tracking the motion of each finger separately, wherein each finger's motion may control a different interface element. In similar embodiments, the outputs are utilized by a system of multiple users wearing finger-worn devices, wherein the outputs may facilitate distinguishing between each user's interaction procedures or operations, such as in case each user is assigned a certain symbol to be displayed respectively on the devices of each user.

In some embodiments, any of devices **3732** and **3734** may be utilized in a system **3630** (ref. FIG. 36D). In one example, a device **3734** may display an optic tag as a visual output, so that the tip of a finger wearing the device may be pressed on a screen **3632** of an apparatus **3636,** wherein the tag may be detected by a sensing mechanism **128** and recognized by a processing unit **144** and a recognition function **150.** In a similar example, a device **3632** may display an output and may be worn on the proximal phalanx section of a finger, wherein detecting the output by sensing mechanism **128** may be facilitates by placing the entire palm of a finger, on which the device is worn, open on screen **3632.**

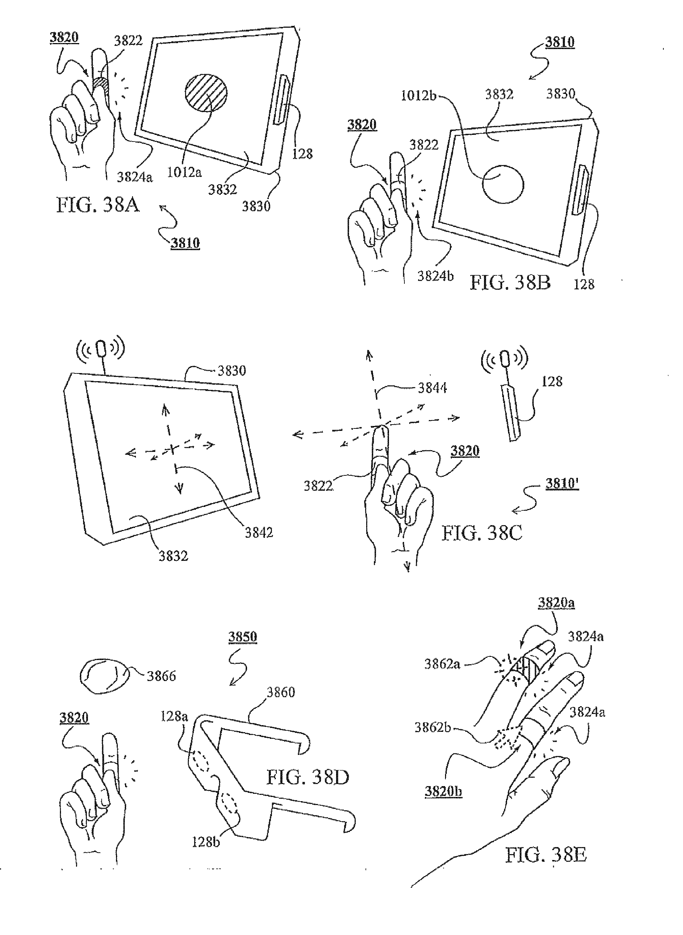

FIGS. 38A and 38B show an embodiment of a system **3810** in which a finger-worn device (shown as an exemplary device **3820)** with a light output mechanism **3822** (as an exemplary visual output mechanism) is utilized for interacting with a terminal **3830** (as an exemplary separate device). Terminal **3830** is exemplarily an electronic device having a display **3832** and an optical sensing mechanism **128** such as a camera. Mechanism **128** can sense light and/or detect light properties. In some embodiments, controlling mechanism **3822** is by operating device **3820,** specifically by touch. For example, a thumb may touch and/or slide on a touch surface of device **3820** to change the output of mechanism **3822.** In FIG. 38A, device **3820** is shown to be operated so that mechanism **3822** outputs light have a property **3824a.** In FIG. 38B, device **3820** is shown to be operated so that mechanism **3822** outputs light having a property **3824b.** The properties may be colors, intensities of light, or coded visual transmissions (for example by distinct blinking rates). Mechanism **3822** can modulate between different properties. Sensing mechanism **128** of terminal **3830** can detect light properties emitted (i.e, outputted) by mechanism **3822.** The terminal can recognize light properties for registering corresponding input. In FIGS. 38A and 38B, detection and recognition of properties **3824a** and **3824b** respectively prompts a display of a displayed object **1012a** (FIG. 38A) and a displayed object **1012b** (FIG. 38B), on display **3832.** Objects **1012a,b** may be further interacted with when they are displayed, such as by hand gestures which may further be detected by mechanism **128** and recognized by terminal **3830.** Alternatively, detection and recognition of light properties may prompt other operations of the terminal. For example, a registered input from detected and recognized properties may be "fed" as values for variables of a function.

FIG. 38C shows an embodiment of a system **3810'** similar to system **3810,** wherein optical sensing mechanism **128** of terminal **3830** is separate from display **3832** and is located "behind" a finger wearing the device (shown as index finger **102** wearing device **3820)** and facing the display, so that the finger is between the sensing mechanism and the display. The sensing mechanism exemplarily communicated wirelessly with the display. Also shown in FIG. 38C are virtual directions **3842** of the display on display **3832.** In some embodiments, virtual directions **3842** correspond to motion directions **3844** of finger **102,** so that when the finger generally moves in directions **3844,** the display of on display **3832** may change according to virtual directions **3844.** The motion of the finger (and/or similarly the position of the finger) may be detected by mechanism **128** detecting light from output mechanism **3822** of device **3820.** Detecting light from the device may facilitate tracking the movement of finger **102** wearing the device, and/or of the hand of the finger, such as in low lighting conditions.

In some embodiments, device **3820** may include an illumination mechanism **3616** (as described in FIGS. 36A-D as an exemplary light output mechanism, so that light may glow through a finger wearing the device which may facilitate detecting the position and motion of the finger (also "tracking the finger"). Additionally, illuminating the finger facilitates optical detection of the finger and/or of the device, such as when the device is obscured (i.e. not directly in line of sight of sensing mechanism **128)** yet the output from mechanism **3616** (i.e. light generally emitted from the surface of the finger) is "carried" to parts of the finger that are not obscured.

FIG. 38D shows an embodiment of a system **3850** in which a finger-worn **3820** is utilized for interaction with a head-up display device **3860** having optical sensing mechanisms **128a,b.** Device **3860** may be an "Eyetap" device (see e.g. US patent 6172657 and US patent application 002/0030637) that captures visuals and generates imagery for a "computer-mediated reality" or "augmented reality", as known in the art, wherein the user may see through the device, and may additionally see imagery created by the device, together or separately. Alternatively, device **3860** may be a "virtual-reality" device displaying only generated imagery and adapted to include optical sensing mechanisms to optically sense the real environment in front of a user wearing the device. Sensing mechanisms **128** can distinctly detect light output (specifically certain properties of the output, e.g. properties **3824a,b)** from device **3820.** This may facilitate interaction with generated imagery of device **3860.** In some embodiments, detections of light output from device **3820,** such as described for FIGS. 38A through 38C, may be registered by device **3860** as a specific input which is differentiated from the rest of the visuals captured by device **3860,** so that device **3820** may control specific interactions with device **3860.** In FIG. 38E there is shown a representation of a view of a user looking through device **3860.** Exemplarily, virtual cursors **3862a,b** are generated by a display of devices **3860** and following detected motion of devices **3820a,b,** respectively, each worn on a separate finger. Displaying the cursor corresponding to the motion of the devices (and accordingly of the fingers) may be facilitated by tracking light output from device **3820.** Similarly to the described for system **3810'** in FIG. 38C, virtual navigation (i.e. cursors movement) may correspond to actual fingers motion, thereby the cursors may be controlled by moving the fingers. Each cursor is displayed correspondingly to the detection of properties **3824a,b,** as shown in FIG. 38E, cursor **3862a** corresponding to property **3824a** (device **3820a),** and cursor **3862b** corresponding to property **3824b** (device **3820b).** A cursor may be utilized to point (i.e. gesture) to a real item **3866** (shown as a rock in FIG. 38D) in the real environment, or to point to a displayed object (e.g. object **1012a** shown in FIG. 38A) generated by the display, for interactions corresponding to detection of the real item, or corresponding to the displayed object. The "function" of the cursor may also change correspondingly to different properties of light output from device **3820,** such as having a "selecting" function (e.g. selecting an object according to a pointing gesture) when a property **3824a** (shown in FIG. 38A) is detected (by mechanisms **128a,b)** and having a "focusing" function (e.g. auto-focus of lenses of device **3860** according to a pointing gesture) when property 3824a (shown in FIG. 38B) is detected. In some embodiments, change in the output from device **3820** may be for changing between a mode of interacting with the real environment and a mode of interacting with the generated imagery.

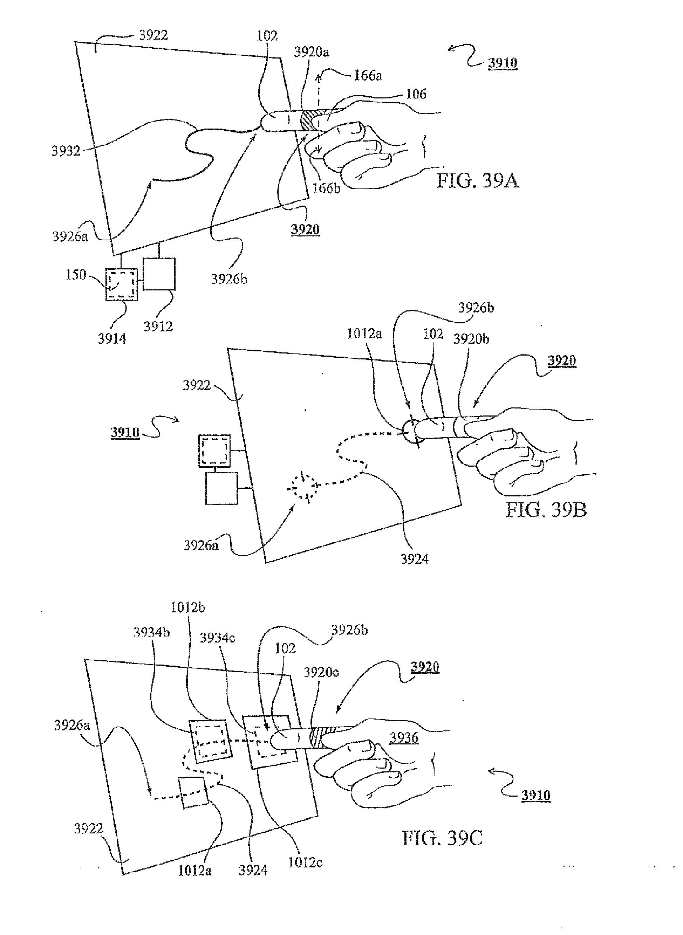

FIGS. 39A through 39C shows embodiments of a system **3910** in which a finger-worn device **3920** is utilized for different types of interactions. In FIGS. 39A through 39C, an index finger **102** is wearing device **3920** and is interacting with a display **3922** either by touch and touch motion or by gestures and gestures motion (shown in the figures finger **102** performing a pointing gesture towards the screen or touching the screen). Touch or gestures, and motion thereof, can be detected by a detection mechanism **3912** (shown in FIG. 39A connected to the display) which can be a visual recognition mechanism or any touch detection mechanism known in the art. Mechanism **3912** is shown coupled with a processing unit **3914** (shown in FIG. 39A connected to the display and to mechanism **3912)** for processing detections and interaction operations, such as for registering input from detections and displaying corresponding visual outputs on display **3922.** The detection mechanism or the processing unit may have a recognition function **150** for recognizing finger locations, motions and/or gestures, in case the interacting with the display is not by touch. Device **3920** may have one of states **3920a-c** at any given time, and may exemplarily be operated by touch, specifically touch motion for changing between states. Additionally or alternatively, a state is sustained by holding touch on the touch surface of the device. Alternatively, states **3920a-c,** as described for system **3910,** may be "uses" of the device **3920** which remain constant during an operation, such as holding touch on surface **164.** Device **3920** includes an indication mechanism for indicating the states.

In each figure, finger **102** performs a motion **3924.** The motion may be performed while the finger touches display **3922** or gestures towards the display. The motion starts at a location **3926a** and ends at a location **3926b** (to which the finger is shown to be pointing at in each figure).

Device **3920** is specifically shown in FIG. 39A as set to state **3920a** before motion **3924** is performed. When motion **3924** is performed, while device **3920** is set to state **3920a**, the motion corresponds to a "drawing" function, wherein a stroke **3932** is drawn on display **3922** according to the motion. The motion is showed in FIG. 39A as the stroke and in FIGS. 39B and 39C as a dashed line. For example, mechanism **3912** may detect state **3920a** for tracing any motion of finger **102** as a drawn stroke. By detecting motion **3924**, the path of the motion may be registered and accordingly traced as stroke **3932**. In some embodiments, sliding a thumb **106** on a touch surface of device **3920** in direction **166a** may be for increasing the thickness of stroke **3932**, while sliding the thumb in direction **166b** may be for decreasing the thickness. In other embodiments, sliding on a touch surface of device **3920** may be for changing other attributes of the stroke, such as colors.

Device **3920** is specifically shown in FIG. 39B as set to state **3920b** before motion **3924** is performed. When motion **3924** is performed, while device **3920** is set to state **3920b**, the motion corresponds to a "dragging" function, wherein a displayed object **1012a**, which was displayed at location **3926a** when the motion (and accordingly the function) started, is "dragged" to location **3926b**, along the path of the motion. For example, finger **102** may touch display **3922** where object **1012a** is displayed (location **3926a**), and perform motion **3924** while still touching the display. By detecting state **3920b** of device **3920**, a "dragging" function is executed correspondingly to the motion of the finger and correspondingly to an object the finger touches (object **1012a**), so that the object is dragged on display **3922** from location **3926a** to location **3926b**.

Device **3920** is specifically shown in FIG. 39C as set to state **3920c** before motion **3924** is performed, When motion **3924** is performed while device **3920** is set to state **3920c**, the motion corresponds to a "magnifying" function, wherein each of displayed objects **1012b-d**, located in the path of motion **3924**, is sequentially "magnified" on display **3922**, when finger **102** generally points to it. Optionally, the object nearest to the finger, such as object **1012d** as shown in FIG. 39C, is magnified the most, while the farthest object, such as object **1012b** as shown in FIG. 39C, is magnified the least. Accordingly, while motion **3924** is performed, the extent of magnification for each of objects **1012b-d** changes correspondingly to the distance of finger **102** from each. Further optionally, objects **1012b-d** may be magnified from their original sizes (shown sizes **3934c,d** of objects **1012c,d**, respectively) respectively, wherein the original sizes of the objects are their sizes when device **3920** is not set to state **3920c**, or when they are not in the range of the "magnifying" function, such as when finger **102** is distant enough from them. For example, the hand of finger **102** may be performing a "pointing" gesture **3936** towards display **3922** and performing motion **3924** while still pointing at the display. When mechanism **3912** detects gesture **3936** and state **3920c**, a "magnifying" function is executed where the finger is pointed at the display. Initially, the function applies to location **3926a** (before the motion), and during motion **3924**, the "magnification" follows the path of the motion to location **3926b**. Optionally, during the motion, a thumb touches and holds a touch surface (commonly referred to as "tap and drag" action) of device **3920**, to sustain state **3920c** of the device. When the "pointing" of finger **102** reaches location **3926b**, the thumb may be removed from the touch surface to change the state of device **3920** and accordingly end the "magnifying" function. Alternatively, state **3920c** is sustained without holding the touch of the thumb on surface **164** during motion **3924**, while sliding the thumb on the surface may influence the "magnifying" function, such as increasing the extent or range of the "magnification" by sliding in one direction and decreasing the extent or range of the "magnification" by sliding in an opposite direction.

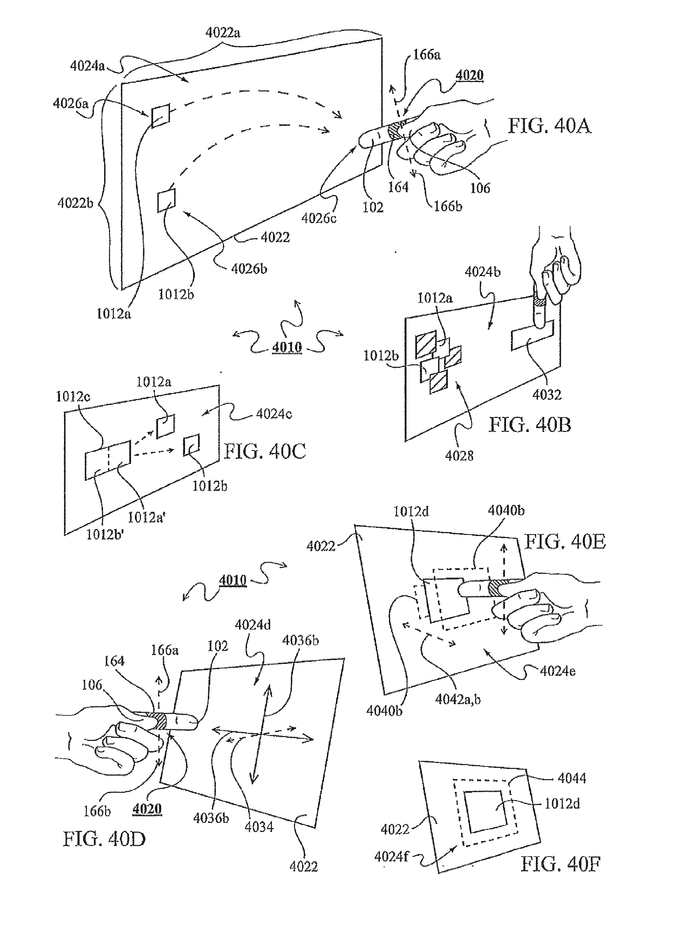

FIGS. 40A through 40F show an embodiment of a system **4010** in which directional information from an exemplary finger-worn device **4020** is utilized for interactions with a display **4022** which is similar to display **3922** and may be connected to a detection mechanism and a processing mechanism as shown in FIG. 39A for display **3922**. Directional information may be obtained from indications of use of the device. For example, indications of rotation of a rotatable section of the device may be detected by a detection mechanism (not shown) and processed by a processor for directional information. In FIGS. 40A through 40E, indications of a thumb **106** sliding in sliding direction **166a,b** are utilized as directional information in system **4010**. In FIGS. 40A through 40F, display **4022** is shown to have physical dimensions **4022a,b.**

FIG. 40A specifically shows device **4020** operated for interacting with a virtual environment **4024a** displayed on display **4022**. The display is shown displaying objects **1012a** and **1012b** at locations **4026a** and **4026b**, respectively. In some embodiments, sliding thumb **106** on surface **164** in direction **166a** may be for "attracting" the objects from locations **4026a,b** towards a location **4026c** where a finger **102**, which wears device **4020**, touches the display, or where the finger gestures towards (on the display). In some embodiments, the objects may have been previously "tagged", while the "attracting" function described above may be for "recalling" the objects for further interaction. In some embodiments, location **4026c** may be a general location on dimensions **4022a,b**, directly corresponding to a two dimensional (2D) display of virtual environment **4024a**, so that the object is displayed as being attracted on these two dimensions. In some embodiments, the objects may be located "off" the display, such as in case the virtual environment extends beyond the physical dimensions of the display. For example, objects **1012a,b** are items in a web-page shown on a web-browser on display **3922**, wherein sliding thumb **106** on surface **164** in direction **166a** is for scrolling the page towards the objects. Optionally, sliding the thumb in an opposite direction (i.e. direction **166b**) is for scrolling the web-page away from the objects.

In other embodiments, objects **1012a,b** may have a similar context and may each be "attracted" to a location **4026c** correspondingly to their context, such as in case it is desired to extract objects of the same context from a heterogeneous group. In one example, as shown in FIG. 40B for a virtual environment **4024b**, a collection **4028** of objects, such as images, may be scattered unorganized on display **3922**, wherein each object is associated with certain subjects (also "contexts"), such that each image having specific details appear in it. A subject **4032** may be displayed (as a visual representation, such as text or "icon") on the display at location **4026c**, while finger **102** touches the choice or points to the choice, such as to mark it. Additionally, thumb **106** may slide on surface **164** while the choice is marked, for "attracting" only the objects associated with that choice (objects **102a,b**), so to extract them from the group.

In other embodiments, locations **4026a,b** are virtual locations not corresponding, or partially corresponding, to physical dimensions **4022a,b**. In one example, similarly to the described for virtual environments **4024d** in FIGS. 40D, each of locations **4026a,b** has three virtual coordinates, two corresponding to physical dimensions **4022a,b** and another to a virtual depth **4034**. Accordingly, objects **1012a,b** may be "located" in a three dimensional (3D) virtual environment, such as a graphic simulation. In such cases, "attracting" the objects may correspond to the physical dimensions of the display (such as of a screen displaying the objects) and to the virtual depth, wherein the objects may be "pulled" to the actual plane on which finger **102** touches or to which finger **102** points,' to facilitate interaction with the objects. Optionally, the objects may be located "behind" other displayed objects, such as in a "windows" interface, wherein objects **1012a,b** may be partially or completely obscured by "open windows". In such cases, the "attracting" function may be for bringing the objects to the front of the display. Alternatively, the function may be for browsing through all the "open windows" or all objects, until the desired "window" or object is at the front.

In yet other embodiments, as shown in FIG. 40C for a virtual environment **4024c,** objects **1012a,b** may be two parts of one object **1012c** (shown including objects **1012a'** and **1012b'** in FIG. 40C). The two objects may be separated by sliding thumb **106** in direction **166a**, such as to facilitate individual interaction with each. Sliding thumb **106** on surface **164** in direction **166b** may be for combining the two objects into object **1012c**, such as to facilitate combined interactions. For example, object **1012c** may be an image document having multiple layers, such as a shadows layer and a colors layer, each being one of objects **1012a,b**. The layers may be separated, such as in case it is desired to edit them separately. The layers may be combined to form the image, such as in case it is desired to edit all of the layers together, or save the entire document.

FIG. 40D specifically shows device **4020** operated for interacting with a virtual environment **4024d** displayed on display **4022**. The environment is shown have a virtual depth **4034** and dimensions **4036a,b** corresponding to physical dimensions **4022a,b** (shown in FIG. 40A). In some embodiments, dimensions **4036a,b** may be interacted with directly, such as by touching or pointing anywhere along dimensions **4022a,b**. Interacting with the virtual depth, such as navigating a cursor on it, may be by sliding thumb **106** on surface **164** in directions **166a,b**, similarly to the described above. In some embodiments, virtual depth **4034** is any linear dimension

FIG. 40E specifically shows device **4020** operated for interacting with a virtual environment **4024e** displayed on display **4022**. The display is shown displaying an object **1012d**. In some embodiments, the object may be zoomed in and out according to zooming directions **4042a,b**, which correspond to sliding thumb **106** on surface **164** in directions **166a** (exemplarily as for zooming in) and in direction **166b** (exemplarily as for zooming out). As shown in FIG. 40E, object **1012d** may have a larger scale **4040a** when zoomed in and a smaller scale **4040b** when zoomed out.

In some embodiments, as shown in FIG. 40F for virtual environment **4024f**, object **4040** may be a "frame" in which a map **4044** is displayed, wherein larger scale **4040a** and smaller scale **4040b** may be different scales of the map. Accordingly, the scale of the map as displayed inside object **1012d** may be changed by the sliding of the thumb as previously described, while object **1012d** remains the same.

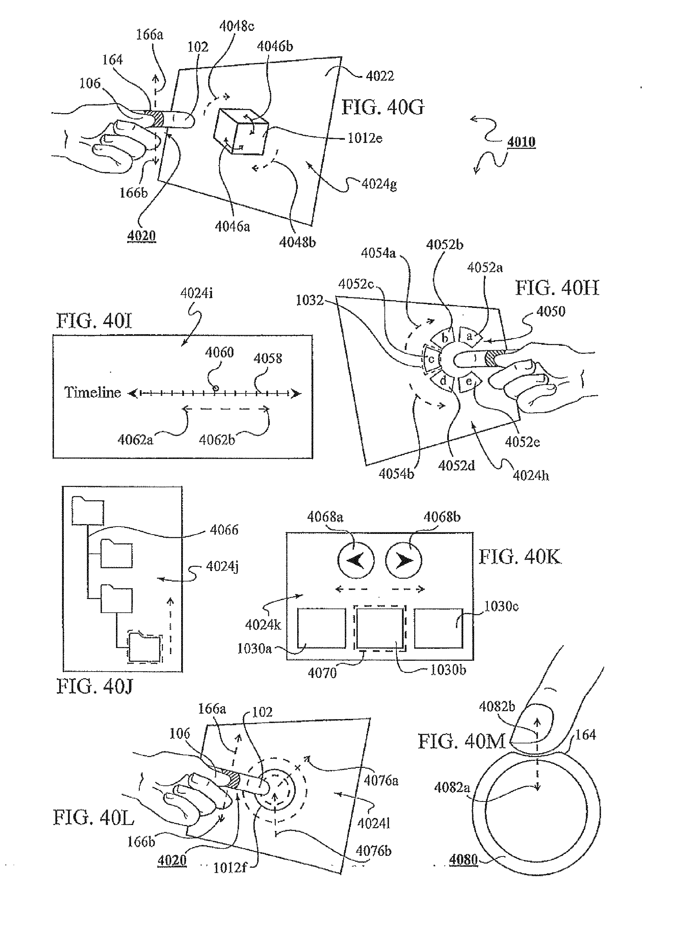

FIG. 40G specifically shows device **4020** operated for interacting with a 3D object **1012e** in a virtual environment **4024g**. Object **1012e** can be rotated in any of directions **4046a,b** by performing motions with finger **102.** For example, the finger may touch or point to the object (on display **4022**) and slide horizontally (along dimension **4022a**) to rotate the object in directions **4046a**, while sliding the finger vertically (along dimension **4022b**) may be for rotating the object in directions **4046b**. In environment **4024g**, object **1012e** can be rotated in a direction **4048a** by sliding thumb **106** in direction **166a** and in a direction **4048b** by sliding the thumb in direction **166b**, while touching or pointing to the object on the display.

FIG. 40H specifically shows device **4020** operated for browsing an exemplary menu **4050** in a virtual environment **4024e**. Menu **4050** may be a "pop-up menu" of options **4052a-**e that can be browse through by controlling a selection **1032**, similarly to the described for interface elements. In environment **4024h**, controlling selection **1032** (moving the selection from one option to the other) is by sliding thumb **106** on surface **164** of device **4020**. Sliding the thumb in direction **166a** may be for moving the selection in direction **4054a**, while sliding the thumb in direction **1661b** may be for moving the selection in direction **4054b**. Optionally, removing the thumb from surface **164** may be for selecting the option which selection **1032** is at (shown in FIG. 40H selection **1032** at option **4052c**).

FIG. 40I shows a virtual environment **4024i**, which can be interacted with by operating device **4020** in a way similar to that described above for other environments. Environment **4024i** includes a timeline **4058** which has a selected instance **4060** as an exemplary selection (e.g. selection **1032**). Timeline **4058** may be any track of time of an interface, while selected instance **4060** may be a moment along the timeline that is selected by interacting with the environment. For example, timeline **4058** may be a playback track of a media clip. Alternatively, timeline **4058** may be any series of chronological records, while instance **4060** may be any selected record. For example, timeline **4058** may be a list of dates in a backup-archive of documents, For another example, timeline **4058** may be a sequence of actions performed during an interaction session. Moving instance **4060** in directions **4062a,b**, for selecting a moment or a record on timeline **4058**, is by sliding thumb **106** on surface **164** of device **4020** in directions **166a,b,** respectively. For example, while editing a document, a user may "track-back" to previous actions performed in the document (or previous stages of the editing the document), such as with an "undo" function, by sliding a thumb on a touch surface of a finger-worn device in a certain direction. Additionally, the user may "track-forward" after returning to a previously recorded action, such as with a "redo" function, by sliding the thumb on the surface in an opposite direction.

FIG. 40J shows a virtual environment **4024j** which can be interacted with by operating device **4020**, similarly to the described above for other environments. Environment **4024j** includes a folders tree **4066**. Sliding thumb **106** on surface **164** of the device in direction **166a** is for moving to a higher level of folders, similar to an "up" function in browsing folders in a "windows" interface.

FIG. 40K shows a virtual environment **4024k** which can be interacted with by operating device **4028**, similarly to the described above for other environments. Environment **4024k** includes a "back" function **4068a** and a "forward" function **4068b**, such as for browsing through a history of web-pages in a web-browser. Similarly to the described for environment **4024i** in FIG. 40I, moving "back" is by sliding thumb **106** on surface **164** of device **4020** in a certain direction, while moving "forward" is by sliding the thumb in an opposite direction. In some embodiments, the "back" and "forward" functions are for -controlling a focus **4070** between interface elements **1030a-c** (shown in FIG. 40K focus **4070** on element **1030b**). Focus **4070** marks an element that is available for interaction at any given moment, or that any further interactions apply to, in a multiple elements environment. For example, in a "windows" interface, focus **4070** is always on the application which is interacted with, while other applications may be open.

In the virtual environments described in FIGS. 40A through 40K, operating device **4020,** specifically by sliding thumb **106** on touch surface **164,** is preferably contextual to where finger **102** touches on the display or to where finger **102** points to on the display. For example, any function described, which is influenced or controlled by the sliding of thumb **106**, is performed on the object or element on which the finger touches or to which the finger points. For a more specific example, "tracking-back" and "tracking-forward" in environment **4024i** may be performed correspondingly to sliding of the thumb only when finger **102** touches or points to a displayed object or element which represents timeline **4058.** Alternatively, operating the device corresponds to a previously assigned object or element or function. For example, timeline **4058** may be assigned for being controlled by sliding of the thumb, so accordingly sliding the thumb moves selected instance **4060** regardless of the location of finger **102**. For another example, separating object **1012c** to objects **1012a,b'** in environment **4024c** may be performed only when finger **102** touch or points to object **1012c**, however, combining objects **1012a,b'** back to object **1012c** may be performed regardless of the location of finger **102,** because the separated object may have automatically been assigned to the sliding of the thumb when the objects were separated from object **1012c.** Optionally, when an object of element or function is assigned to the device it may not be displayed on display **4022.** Further alternatively, operating the device may correspond to any object or element of an interface, which is selected at any given time, such as any application which an operated system is focused on, in common graphic operating systems.

FIG. 40L shows a virtual environment **40241** in which device **4020** is operated similarly to the previously described environments, for an alternative to touch-screens "pressure" interactions. In FIG. 40L, display **4022** may specifically be a pressure sensitive touch-screen, wherein touching the display creates an object **1012f** correspondingly to the pressure applied on the screen, such as the higher the pressure the larger the object. Alternatively, display **4022** may lack the pressure sensing feature, wherein sliding thumb **106** on surface **164** of device **4020** may be for determining the side of object **1012f** as it is created from touch of finger **102**. For example, when finger **102** touches display **4022**, a default sized object **1012f** is created (i.e. displayed where the finger is touching). While still holding the touch of finger **102**, sliding the thumb in direction **166a** may be for increasing the size of the object (correspondingly to direction **4076a**), while sliding the thumb in direction **166b** may be for decreasing the size of the object (correspondingly to direction **4076b**). This may be preferable to the aforementioned pressure sensing feature as the size of the object may be controlled in both directions (i.e. for increasing or decreasing), while in pressure sensitive touch-screen, the highest pressure applied on the screen is the final size of the object.

FIG. 40M shows a sixty first embodiment of a finger-worn device of the invention as a device **4080** which has a pressure sensing touch surface **164** which may be operated for some interactions in the environments described in FIGS. 40A through 40K. For such interactions, the amount of pressure applied on surface **164** corresponds to directions **4082a,b** (direction **4082a** exemplarily being for more pressure and direction **4082b** for less), as shown in FIG. 40M, which act as alternatives to sliding directions **166a,b**. For example, in environment **4020e**, a thumb may press on surface **164** of device **4080**, whereas when reaching a certain amount of pressure such as the average amount (between no pressure and the highest amount detectable by the device), a zooming function on object **1012** as shown in FIG. 40E, is initiated, wherein pressing harder is for zooming in and pressing softer is for zooming out. Optionally, to end the zooming function, another finger may touch the object.

In other embodiments, directions **4082a,b** (as pressure amounts) are utilized collaboratively with direction **166a,b**. For example, in environment **4024g**, a thumb may press on surface **164** of device **4080**, and slide the thumb in direction **166a,b**, to rotate object **1012** as shown in FIG. 40G. The higher the pressure applied to the surface (corresponding to direction **4082b)** during sliding, the faster the object rotates.

In yet other embodiments, pressure applied on surface **164** of device **4080** is utilized alternatively to a touch sensing feature of a touch-screen. For example, a display **4022** may specifically be a touch-screen that is not pressure sensitive. By touching the screen with finger **102** and by simultaneously applying pressure to surface **164** with a thumb, an input may be registered which corresponds to the location of the finger and to the amount of pressure applied to the surface. For example, in environment **40241**, the size of object **1012**, as shown in FIG. 40L, may correspond to the amount of pressure applied to surface **164** when a finger wearing device **4080** touches display **4022**, alternatively to a finger wearing device **4020**.

Similar results may be achieved by other embodiments of a device of the invention, for example, a device **1920**. Similarly to the described for FIG. 19B and to how the device may be utilized in for controlling interfaces in FIGS. 19C and 19D, a user may touch display **4022** with a finger wearing device **1920**, to create a default sized object. Holding the touch and tilting the rotatable section of device **1920** in one direction may be for increasing the size of the object, while tilting in an opposite direction may be for decreasing the size of the object. Because the rotatable section is "snapped-back" to its un-tilted position when releasing the pressure applied on it, tilting it again may be for further increasing or decreasing the size of the object.

FIGS. 41A and 41B show an embodiment of a system **4110**, wherein a device **4120** is utilized with a virtual environment, similar to the virtual environments described above. In system **4110**, an exemplary environment is shown displayed on a display **4022** which similarly to the described for display **3922** may be coupled with a detection and processing mechanisms, as shown in FIGS. 39A. Device **4120** is shown in FIG. 41C as a sixty second embodiment of a finger-worn device of the invention. Device **4120** includes a display surface **4122** and touch surface **164** that can indicate touch similarly to any previously described touch surface. FIG. 41C shows surface **4122** exemplarily opposite to surface **164**. In FIGS. 41A and 41B, device **4120** is worn on a finger **102** and may be operated by a thumb **106**. Further shown in FIGS. 41A and 41B is finger **102** touching display **4022** where an object **1012a** is displayed, or pointing to where the object is displayed. Object **1012a** may correspond to an element **4112**, as specifically shown in FIG. 41D, which is an element of an interface of the system. Element **4112** may be any part of an interface, such as a folder of files, a function tool or a menu, while object **1012a** may visually represent element **4112**. When performing a certain operating with or on device **4120**, such as by sliding thumb **106** on surface **164**, the operation is indicated to the system and object **1012a** may be "transferred" from display **4022** (FIG. 41A) to display surface **4022**, as an object **1012b** (FIG. 41B). Alternatively the operation does not include the device, such as an operation where finger **102** "double-taps" (presses twice rapidly) on object **1012a** or performs a certain gesture towards the object. Object **1012b** may be a smaller version of object **1012a**, such as a "thumbnail", or any other representation of object **1012a** or of element **4112**. For example, object **1012b** may be a visually meaningful "icon", such as a graphic symbol of a music note in case element **4112** is an audio file or an audio playing application. In the same example, object **1012a** may be a visual control-desk of the audio playing application or of an application playing the audio file.

In some embodiments, a certain operation may be performed, with or on device **4120** or without device **4120**, for assigning element **4112** to device **4120** or to finger **102**, such as to be controlled by the device of such as to correspond to actions of finger **102**. Optionally, similarly to the described above, object **1012a**, which correspond to element **4112**, may be "transferred" to surface **4122** as object **1012b**, in addition to the assigning. Alternatively or additionally, an object **1012c** (FIG. 41B) may be displayed on display **4022** according to the "assigning" operation, such as instead of object **1012b** displayed on surface **4122** as a result of the operation.

In one example, element **4112** may be a "deletion" function, while objects **1012a** and **1012b** may be a large and small tool symbols, respectively, corresponding to the function. Accordingly, when object **1012b** is displayed on surface **4122** of device **4120** after a certain operation is performed, any touch or pointing of finger **102**, as part of an interaction with display **4022,** may execute the "deletion" function, such as deleting any object to which the finger is pointing or on which the finger is touching.

In another example, element **4112** may be the audio volume of system **4110**, wherein assigning element **4112** to device **4120**, either with or without a visual "transferring" of objects, may facilitate controlling the audio volume of the system with device **4120**, such as increasing the volume by sliding thumb **106** on surface **164** in one direction and decreasing the volume by sliding in an opposite direction.

In yet another example, element **4112** may be a media playing application in a system exemplarily utilizing a device **1310** (alternatively to device **4120**). The entire application may be assigned to device **1310,** or different member of the application may be assigned to different tilted positions of the device, wherein rotating section **112** of the device in a tilted position may be for controlling a specific member assigned to that position. Specifically, similarly to the described for device **1310** in FIGS. 20A-C, rotating the section while it is in a tilted position **414a** (shown as un-tilted in FIG. 20A), may be for controlling the volume of the media, while rotating the section while it is in tilted positions **414b** and **414c** may be for browsing through media files and for controlling the play-back (or "track"), respectively.

In yet another example, element **4112** may be a function in progress, such as a "downloading" function represented by object **1012a** which may be a progress-bar of the downloading. When finger **102** touches the bar (object **1012a**), as an exemplary assigning operation which does not include device **4120**, the bar disappears from display **4022** and object **1012b** appears on surface **4122** of device **4120**. Object **1012b** may be a simpler version of the bar, such as formed in a low resolution with fewer pixels, while during the downloading the simpler version changes (e.g. "fills-up") on the display of surface **4122**. Alternatively, object **1012b** may be a different visual representation of the progress-bar, such as a changing brightness of a certain color, in which the more the downloading progresses, the brighter the color displayed on surface **4122**. Optionally, when downloading is complete (i.e. the "downloading" function ends), the color may be blinking, as a feedback for the user.

In some embodiments, a certain operation, either with or on device **4120** or without including the device, may be for removing object **1012b** from the display of surface **4122**, and/or for ending the assignment of element **4112** to device **4120** or to the actions of finger **102**. For example, following the example for a "downloading" function, when downloading is complete and a color is blinking on surface **4122**, finger **102** may "double-tap" on display **4022** to "open" the downloaded content, such as to display the files that were downloaded by the function on display **4022**. Optionally, object **1012b** is transferred to display **4022** as object **1012a**, similarly to object **1012a** being transferred to surface **4122** as object **10121b**.

In another example, device **4120** is utilized for a common "cut-paste" function in system **4110**, wherein by assigning element **4112** to device **4120** by a certain operation, object **1012a** is "cut", temporarily appearing on surface **4122** as object **1012b**. An additional operation may "paste" object **1012a**, and accordingly element **4112**, at a different location, such as where finger **102** is pointing during the additional operation. More specifically, element **4112** may be a file, such as an image file, while object **1012a** may be the image as displayed on display **4022**. By touching the display with finger **102** where the image is displayed, and sliding thumb **106** on surface **164**, the image (object **1012a**) may disappear from display **4022** and an icon (object **1012b**) of the file (element **4112**) may appear on display surface **4122**. Finger **102** may "double-tap" on a different location on the display from where the image was displayed, for the image to reappear there and for the icon to disappear from surface **4122**. Alternatively, the icon is still displayed on the surface, while the finger may "double-tap" a second time for displaying a second copy of the image on display **4022**.

In some embodiments, locations on the display correspond to locations on a memory unit **4116** of system **4110**, so that the "cut-paste" function described above, and similar functions, may be for cutting, pasting, copying, deleting and/or moving element **4112** correspondingly to memory locations. For example, cutting and pasting object **1012a** from and to locations on display **4022** may correspond to cutting and pasting element **4112** from and to locations on unit **4116**.

In some embodiments, device **4120** may include, in addition to the described above, a memory unit **146**, while in accordance with the described above, element **4112** may be copied or moved to unit **146** and from unit **146**, and deleted from unit **146**. Accordingly, unit **146** may act as a "clipboard" buffer in common interfaces. Optionally, element **4112** may be manipulated while on memory unit **146**, such as compressed. Further optionally, element **4112** may be stored on memory unit **146** and copied or moved to another system.

In some embodiments, interface elements or information of interface elements may be controlled by device **4120** separately from system **4110**. For example, similarly to the described for a memory unit **146** of device **110e** in FIG. 1G, an interface element may be a media file, while device **4120** may include, in addition to memory unit **146,** a processor and a media playing application, thus media files can be copied to memory unit **146** by interacting with system **4110**, and played by device **4120** communicating with any output apparatus, even when not interacting with system **4110**.

In FIGS. 41E and 41F, device **4120** is utilized to display a cursor **4114**, as an exemplary object **1012b**, on surface **4122**, as specifically shown in FIGS. 41E and 41F. This is similar to a mouse cursor changing appearance correspondingly to functions and operations in a common GUIs (as an exemplary virtual environment),. Cursor **4114** may change, such as to a different cursor shape, correspondingly to certain operations as described above. For example, element **4112** may be a function tool, such as a "selection" function tool, while object **1012a** may be a button activating the tool. When cursor **4114** is displayed on surface **4122** of the device (shown as an arrow symbol) and finger **102** presses on object **1012a** on display **4022** (FIG. 41E), cursor **4114** changes to a different cursor (shown a cursor **4114'** as a hand symbol), while object **1012a** changes to a "pressed" button (shown as an object **1012d** in FIG. 41F). When finger **102** further presses on objects on display **4022**, it is for electing these objects, such as for copying them. Alternatively, cursor **4114** may be displayed on surface **4122** and may change automatically, correspondingly to operations of system **4110** that may not include device **4120** and/or fmger **102.** For example, cursor **4114** may be a generic arrow cursor (as shown in FIG. 41E), while when a certain process of system **4110**, such as compression of a file, is in progress, the shape of the cursor may change from a generic arrow to a common sand-clock cursor or any other "wait" symbol.

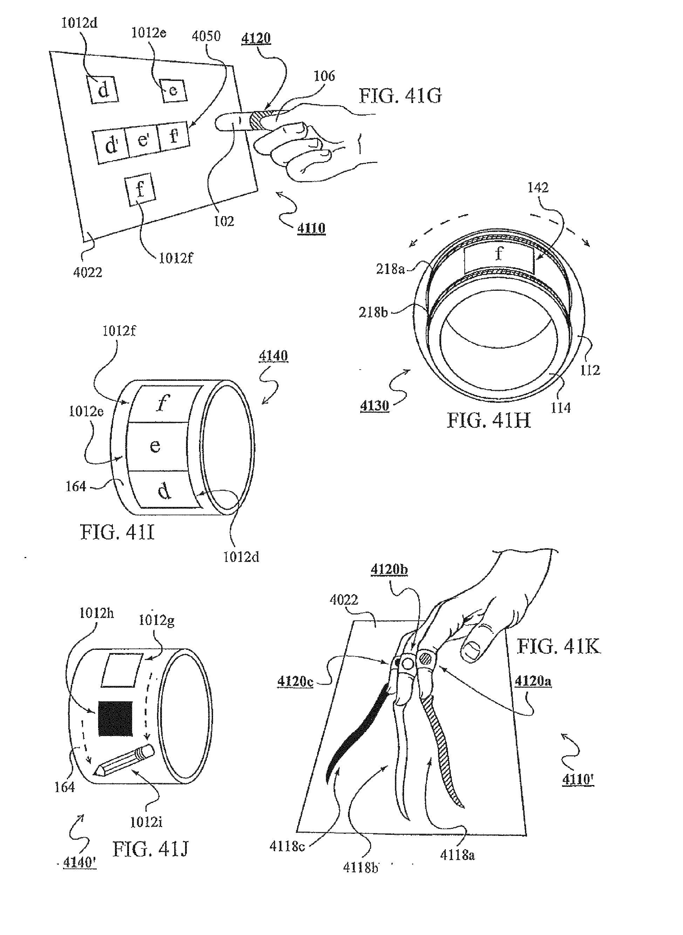

FIG. 41G shows a display **4022** displaying object **1012d-f** and a menu **4050** (as described for virtual environment **4024h** in FIG. 40H), wherein menu **4050** includes objects **1012d-f** arranged in a series. Similarly to the described above, any number, in any combination, of objects **1012d-f** may be "transferred" to display surface **4122** of device **4120.** Additionally or alternatively, any number, in any combination, of interface elements which correspond to the objects, may be assigned to device **4120,** similarly to element **4112** being assigned to the device as described above. When multiple elements are assigned to the device, selecting one element to correspond to an operation of the device or to an action of finger **102** may be by operating the device. For example, sliding thumb **10fi** on surface **164** of device **4120** may be for browsing between the elements, and/or for browsing between object **1012d-f** as displayed on surface **4122**.

FIG. 41H shows a sixty third embodiment of a finger-worn device of the invention as a device **4130**, which includes a visual output mechanism **142** and two tracks (tracks **218a,b**) on which a rotatable section **112** (shown as a transparent section installed on a stationary section **114**) can be rotated, such as by tilting the section on either track. Objects **1012d-f** were exemplarily "transferred" from display **4022** to being displayed by mechanism **142,** wherein only one object may be displayed by the mechanism at any given time. Accordingly, elements corresponding to the objects may be assigned to the device. By rotating section **112** on track **218a**, a user of the device may browse through the elements, while when any element is selected at a given time, its corresponding object is displayed by mechanism **142** at that time (shown object **1012e** displayed by mechanism **142**, in which case an element corresponding to object **1012f** is selected). Optionally, by rotating section **112** on track **218b**, other operations may be performed, specifically operations corresponding to a selected element, such as if object **1012d** corresponds to a playback track of an audio file (as an exemplary element) and object **1012e** corresponds to an audio volume, when object **1012d** is displayed by mechanism **142** (by rotating section **112** on track **218a** until object **1012d** appears), rotating section **112** on track **218b** may be for controlling the playback, and when object **1012e** is displayed, rotating section **112** on track **218b** may be for controlling the volume.

FIG. 41I shows a sixty fourth embodiment of a finger-worn device of the invention as a device **4140** similar to device **4120**, in which a touch surface **164** is also a display surface, such as for an implementation of an interactive display mechanism as described for devices **2310** (in FIGS. 23A-23C) and **2710** (specifically in FIG. 27C). In FIG. 41I, surface **164** is shown displaying objects **1012d-f** which were exemplarily "transferred" from display **4022**. In some embodiments, elements which correspond to the objects were assigned to device **4140** so that by touching surface **164** where an object is displayed (as an exemplary indication location, such as objects **1012d-f** acting as locations **154a-c** of device **2120** in FIGS. 21B and 21C), the element which corresponds to that object may be utilized. For example, object **1012d** may correspond to a "deletion" function and object **1012e** may correspond to a file. When a thumb presses on surface **164** specifically where object **1012d** is displayed, any action of a finger wearing device **4140**, such as a "pointing" gesture towards a displayed object on display **4022**, is for deleting. When a thumb presses on surface **164** specifically where object **1012d** is displayed, any action of the finger corresponds to the aforementioned file, such as if the finger touches a "trash-can" symbol on display **4022**, the file is deleted from a memory unit of device **4140**, or such as if the finger touches a folder on display **4022**, the file is copied to that folder.

According to the above, "sliding" operations (sliding a finger on surface **164**) may be utilized with "transferred" objects, such as in cases where directions between elements assigned correspondingly to the objects, and/or the order with which they were assigned, are relevant to an interface. For example, as specifically shown in FIG. 41J, an "increase brightness" function, a "decrease brightness" function (shown corresponding to a white square and a black square, being objects **1012g** and **1012h**, respectively) and a stroke function (shown corresponding to a pencil symbol being an object **1012i**), were assigned to a device **4140'**, which represents a sixty fifth embodiment of the finger-worn device of the invention. Similarly to the described for system **3910** in FIG. 39A, a user may touch and hold the touch on object **1012i** and perform a motion with a finger wearing the device, to draw a stroke. After releasing the touch, by touching object **1012g** and sliding the touch to object **1012i**, the brightness of the stoke increases, while the user may repeat this action to further increase the brightness of the stroke. Similarly, by touching object **1012h** and sliding the touch to object **1012i**, the brightness of the stroke decreases. Alternatively, surface **164** is displaying only objects **1012g** and **1012i**. By sliding touch from object **1012g** to object **1012i**, the brightness of the stroke increases, while by sliding touch from object **1012i** to object **1012g** (i.e. in an opposite direction), the brightness of the stroke decreases.

In some embodiments, "transferring" of multiple objects between displays and/or assigning multiple elements to a device of the invention may be performed in a certain order so that the objects and/or the elements may be browsed through in that order. For example, objects **1012d-f** may be "transferred" to be displayed on a device of the invention in an order of object **1012d**, then object **1012e** and finally object **1012f**, by performing a "transferring" operation first on object **1012d**, then on object **1012e** and finally on object **1012f**. Accordingly, browsing between the objects, and/or their corresponding elements, may be in the same order. Alternatively, the objects are displayed in that order on the device.

Similarly, a group of multiple objects, such as menu **4050** as a group of objects **1012d-f**, may be "transferred" to be displayed on the device, while elements corresponding to the objects in the menu may be assigned to the device. Accordingly, the objects in the group (e.g. menu **4050**) are arranged and may be browsed through by their order in the group, so while all the objects in menu **4050**, as an example, as displayed on display **4022**, in some devices of the invention only one object may be displayed at any given time and any other objects may be displayed by browsing between the objects in the aforementioned order.

FIG. 41K shows a system **4110'** in which each of devices **4120a-c** (as a plurality of device **4120**) are worn on a different finger, and in which each of objects **1012g-i** (shown as a circle with lines, an empty circle and a black circle, respectively) are displayed on each of devices **4120a-c**, respectively. Each of the objects exemplarily corresponds to a different color swatch, as exemplary elements. Accordingly, each of the color swatches is assigned to each of the devices, and specifically to the action of touch of each finger on display **4022**. In some embodiments, when each finger performs an action as part of an interaction with system **4110'**, such as touching display **4022** and performing a certain motion while touching the display, the reaction corresponds to the color swatch with is assigned to the device worn on the finger. For example, as shown in FIG. 41K, when each finger performs a touch motion on display **4022**, the path of the motion is detected and traced as a stroke (shown a stroke **4118a** for the finger wearing device **4120a**, a stroke **4118b** for the finger wearing device **4120b** and a stroke **4118c** for the finger wearing device **4120c**), similarly to the described for system **3910** in FIG. 39A.

Distinguishing between different fingers wearing devices (such as between touch of each finger on a touch-screen) may be facilitated by mechanisms described herein, such as an illumination mechanism **3616** as described for a device **3610** and a system **3630** in FIGS. 36A-D, or such as a projection mechanism **3420** as specifically described for a system **3640** in FIG. 36E. In another example, utilizing a transmitter **3512** or a transponder mechanism **3524** with an apparatus **3534**, as described for system **3530** in FIGS. 35E and 35F, may achieve similar results (distinguishing between fingers), by detecting which device is worn on a touching finger, from receiving output (field **3520**, transmission **3544** or influences on field **3536**) from that device.

In some embodiments, the described above for objects and elements may alternatively be for time sequences or a series of stages or instances, wherein specific moments or stages or instances may be assigned, such as described for a virtual environment **4024i** in FIG. 40I, wherein a timeline **4058** may be composed of previously assigned instances (such as specific stages during an interaction session), and wherein a device of the invention may be utilized to browse through previously assigned instances, such as to "go back" to previous stages of an interaction session. In one example, a user may be watching a video clip on a screen and can "double-tap" on a touch surface of a finger-worn device to "anchor" the current frame or scene of the video clip (when the surface was "tapped"), such as to later rewind the clip to that specific frame or scene. In another example, actions performed by a user in an application may be registered in a sequence for an "undo" function, wherein the user may operate a finger-worn device to scroll back to previous stages of the sequence. In a similar example, the user may "tag" certain stages during a work process, to be "recalled" at a later time.

In some embodiments, a display of a finger-worn device is utilized for visual feedback in interactions, in response to occurrences in an interface, or in response to interacting with a system. In one example, a user may be interacting with displayed objects on a touch-screen, wherein some objects are restricted for interaction. Accordingly, touching a restricted object with a finger on which the device is worn may prompt a blinking red display on the device, as an exemplary feedback representing restriction. In another example, a user may be playing a game by interacting with a touch-screen, wherein the finger wearing the device is sliding on the screen and must not cross a certain border (on the display, corresponding to the physical dimensions of the screen). Accordingly, as the finger increasingly approaches the border (moves on the screen towards the border displayed on the screen), a red display blinks faster.

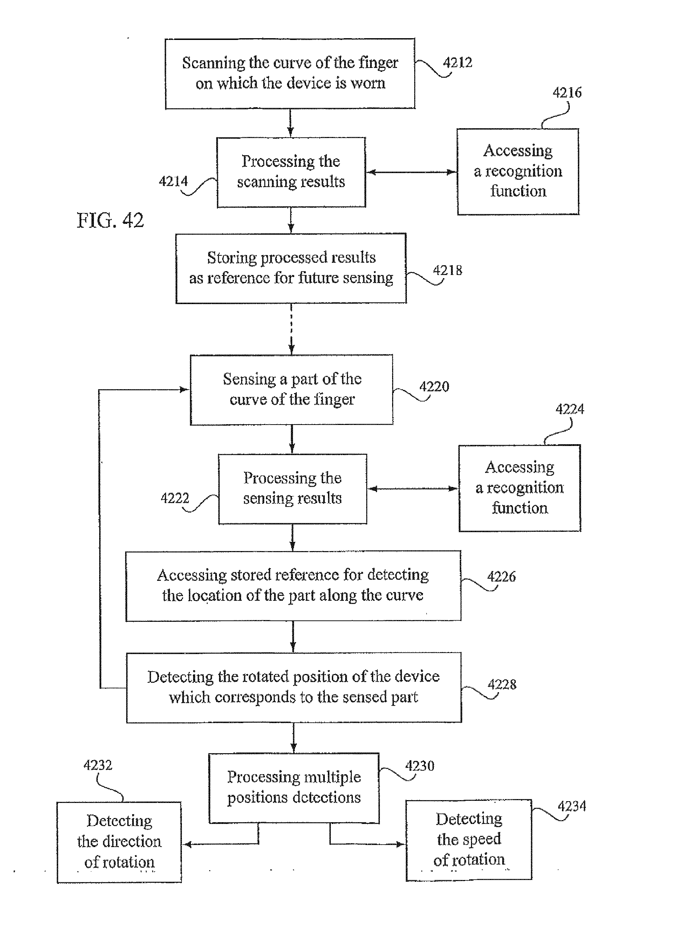

FIG. 42 shows a flowchart of a method for detecting rotated positions of a finger-worn device around a curve of a finger, and for detecting rotation direction and speed. The curve refers to a fun or partial circumference at the surface of the finger where the device is worn (see a curve **126** in FIG. 1B). At a step **4212**, a sensor (or any sensing mechanism) scans the entire curve of the finger wearing the device. The sensor is generally directed at the surface of the finger. The sensor may be any sensor which can distinguish between different parts along the curve, such as by sensing a pattern along the curve and/or distinct features of each part of the curve. Accordingly, the sensor may be any sensor adapted for fingerprint recognition (as the curve exhibits a pattern of skin crevices similar to fingerprints at the tips of fingers). The sensor can sense a different part of the curve of the finger at each rotated position. Accordingly, different sensed parts of the curve correspond to different rotated positions of the device. Scanning is facilitated by rotating the device around the curve during a sensing operation, so the sensor can sense all parts of the curve in a sequence. This is similar to fingerprint scanning where an opening (here as a sensor) can sense a part of the tip, and where by moving the finger the entire tip can be sensed (see e.g. US patent 5195145). At a step **4214**, the results of the scanning in step **4212** are processed. For example, signals from the sensor during the scanning, which correspond to a sequence of different parts of the curve, are sent to a processor. During the processing at step **4214**, a recognition function may be accessed at a step **4216**. For example, the scanning may be processed in accordance with a recognition algorithm. At a step **4218**, processed results from step **4214** are stored as a reference for future sensing. For example, a map of the sequence of each part of the curve (see a map **126b** in FIG. 1D), or of the entire pattern of the curve, may be sent to a memory unit for future access. At a step **4220**, a part of the curve (which was scanned at step **4212**) is sensed. After steps **4412-4418**, the device may be operated at any later time, starting from step **4220**. For example, after steps **4212-4218** are executed, the device is rotated to a position around the curve of the finger, where correspondingly the sensor of the device is facing a part of the curve, which is sensed at step **4220**. At a step **4222**, results from the sensing at step **4220** are processed. During the processing at step **4222**, a recognition function may be accessed at a step **4224**, which may be the same function as in step **4216**. At a step **4226**, the result from step **4218** (i.e. the stored reference) is accessed, and the location of the paint sensed at step **4220** along (or "on") the curve is detected, such as by recognizing the part out of all the parts, thus obtaining its position in the sequence of parts. The accessing may be performed during the processing of step **4222**, such as signals from the sensor (step-**4220**) are directly compared with the reference. At a step **4228**, detection of the rotated position of the device, which corresponds to the location on the curve of the sensed part, is achieved. Because in each rotated position of the device the sensor can sense a different part of the curve, recognizing and/or locating that part from the sequence of parts along the curve facilitates detection of the rotated position.

In some methods, steps **4220-4228** may be executed multiple times so that multiple detections of rotated positions may be processed at a step **4230**. By processing multiple positions detections, a detection of the direction of rotation of the device (i.e. directional information or relative motion) is achieved at a step **4232**.

In some methods, detection of the speed of rotation may be achieved at a step **4234**. For example, the distance between the parts that are sensed during multiple executions of steps **4220-4228**, in case the sensing is performed between specific time intervals, may be obtained by locating the parts as described above, while dividing the distance with the time intervals may obtain the speed of the rotation.

In alternative methods, the aforementioned sensor can sense different features or reactions of the finger, such as sensing sub-dermal layers, alternatively to sensing the curve. The features may exhibit a pattern or differences between different parts of the curve, while in the case of reactions, when the finger-worn device is rotated around the finger, different reactions may be sensed for different rotated positions of the finger-worn device, such as different physiological reactions.

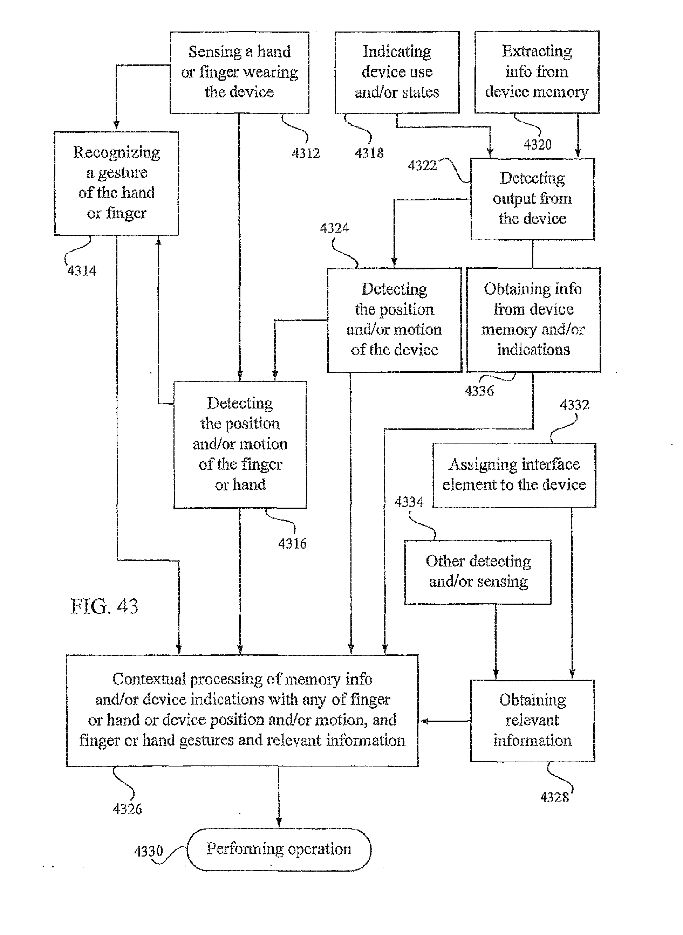

FIG. 43 shows a flowchart of a method for utilizing a finger-worn device in finger or hands interactions. At a step **4312**, the hand or finger wearing the device is sensed. Sensing may be any sensing known in the art, such as visual sensing (capturing a visual image of the hand or finger) or electronic sensing (e.g. as described touch and/or proximity sensing for an apparatus **3534** in FIGS. 35D-F).

In some methods, at a step **4314**, a hand or finger gesture is recognized (see e.g. US patents 6256033, 5543591 and 11/232,299 and US Patent application 2006/0066588 A1). In some methods, the gesture is a static gesture, such as a "pointing" gesture or a sign a hand is making, in which case the gesture may be recognized from the sensing of the hand or finger (step **4312**). In some methods, the gesture may be a motion gesture, such as making a "scribbling" gesture or a common "double-tap" action (see e.g. US patents 7305630 and 5943043) in which case detecting the motion of the hand or finger (see step **4316**) is required to recognize the gesture (at step **4314**). Recognizing the gesture may include obtaining any number of different parameters of the gesture, such as direction (e.g. the pointing direction of a "pointing" gesture) or speed of a motion gesture.

In some methods, at a step **4316**, a position and/or motion of the finger or hand is detected from the results of the sensing (step **4312**). The position may be, for example, the coordinates of touch on a touchpad or touch-screen. Alternatively, the position may be in any detectable location, such as in a spatial environment that is sensed for interactions. "Motion" may refer to a sequence of positions. The sequence may form a path similarly to how a motion forms a path. Accordingly, any references to motion (also in other methods described herein) may similarly describe a sequence of positions. For example, referring to detection of a motion (such as for step **4316)** may also describe detection of a sequence of positions which form a path. For a specific example, detecting a motion of a finger at step **4316** may be described as multiple executions of steps **4312** and **4316**, in which multiple positions (in a sequence) are detected.

Detecting a position and/or motion, may be facilitated by any number of mechanisms known in the art, such as visually evaluating the position of the finger in case the sensing (step **4312**) is visual, or mechanically sensing the motion of the hand in case the sensing (step **4312**) is by an accelerometer apparatus (exemplarily held by the hand which is also wearing the finger-worn device). For example, a user may touch a touchpad with a finger at a certain position and slide (i.e. move while touching) on the touchpad horizontally, in which case positions of the finger during the sliding are may be sensed by the touchpad, while the horizontal motion may be detected from processing multiple sensing of positions. For another example, a user may be wearing on a hand, or holding with a hand, a motion detecting apparatus (see e.g. US Patent number 7042438), so while performing a motion with the hand the motion may be detected at step **4316** (in which case sensing of the hand at step **4312** is directly sensing the motion of the hand).

In other methods, detection of a general position and/or motion of a hand or finger wearing the device may be facilitated by detection of the position and/or motion of the device (see step **4324**).

At a step **4322**, output from the device is detected. The output may include indications of use and/or states of the device which may be indicated at a step **4318**. Alternatively or additionally, the output may include information which may be extracted from a memory (also "memory unit") of the device at a step **4320**. The information and/or indications are obtained at a step **4336** from the detection of the output (step **4322**).

In some methods, at a step **4324**, a position and/or motion of the device is detected at a step **4324** from detection of output from the device (step **4322**). For example, signals (or "transmissions") from the device are detected for obtaining indications and/or information, and for evaluating (also "measuring") the distance of the device from a detection mechanism (e.g. a receiver). For another example, visual output from a visual output mechanism of the device may be captured (step **4322**) by a camera as an image, while the image may be processed for detecting the position of the device (step **4324**), such as the distance of the device from the camera, while the output may also include information and/or indications which can be obtained (step **4336**) by processing the image (e.g. recognizing a color outputted from the device as indication of a rotated position of a rotatable section, as described herein). In some methods, as described for step **4316**, detecting the position and/or motion of the device (step **4324**) may be for detecting the general position and/or motion of the finger or hand wearing the device (see e.g. US Patent 6757068). Because the position and motion of the device is generally the same as the position and motion of the finger and the hand (specifically for certain interactions which do not require high precision or high accuracy of position or motion detection), detection of the position and/or motion of the device may facilitate step **4316** (detecting the general position and/or motion of the finger or hand).

In some methods, the device may be operated simultaneously to moving the finger or hand wearing the device, and/or simultaneously to performing a gesture with the finger or hand. Similarly to the described for a system **3910** in FIGS. 39A-C, the finger wearing the device may move along a display in a certain motion, while a thumb may touch or slide on a touch surface of the device. Alternatively, the device may be operated before or after performing the motion and/or gesture, For example, the device may be set to a state before a finger interaction, after which a user may perform finger gestures (while the device is in that state).

At a step **4326**, information from the memory of the device and/or indications of use and/or states of the device (which are obtained at step **4336**) are processed correspondingly (also "contextually") to a detected position and/or motion, or plurality thereof, of the hand or finger or device, and/or correspondingly to a recognized hand or finger gesture, or plurality thereof. Additionally or alternatively, the hand or finger or device position and/or motion, and/or the hand or finger recognized gesture, may be processed at step **4326** contextually to information and/or indications obtained (step **4336**) from detected device output (step **4322**). Accordingly, information and/or indications from the device may be processed contextually to any combination of results from steps **4314, 4316** and **4324,** and also results from a step **4328** as will be described. In some methods, contextually may refer to having common variables or corresponding variables in a processing operation (step **4326**). For example, the processing at step **4326** may include two variables which are computed together and which one is determined by indications from the device and the other is determined by a recognized gesture, of the hand wearing the device. In some methods, contextually may refer to the results of step **4336** setting a context for the processing of the results of any of steps **4314, 4316** and **4324,** or vice versa (the results of any of steps **4314, 4316** and **4324** setting a context for the results of step **4336.** For example, obtained indications of a state of the device (step **4336**) may set a mode (as an exemplary context) for an interface, while any further detections of positions of a finger wearing the device may be processed correspondingly to that mode. In a similar example, a gesture recognized at step **4314** may be registered as input which may be stored until output from the device is detected at step **4322,** while upon detection of the output it is also registered as input (such as by obtaining indications from the detected output), and both inputs are processed in the same procedure at step **4326.**

At a step **4330,** an operation is performed as a result of the processing at step **4326.** Accordingly, the operation corresponds to output from the finger-worn device and to any of a hand or finger position and/or motion and/or gesture (and/or a device position and/or motion. In one example, output from the device may be detected (step **4322**) once, such as a signal indicating a state of the device is sent and detected, while no output is sent from the device until the state of the device is changed. The state indication may be obtained at step **4336** and processed at a first execution of step **4326** for registering a context for processing gestures. The context may be a commands scheme for interpreting gestures as specific commands, as opposed to other commands schemes (for other states of the device) in which the same gestures may be interpreted as different commands. While the device is in the state detected at step **4322,** a user may be performing gestures which are recognized at step **4314.** The recognized gestures may be processed at additional executions of step **4326** (each gesture in each execution) correspondingly to the command scheme set by the state of the device. The results of the processing are commands (exemplary operations performed at step **4330**) which are determined by both the indication from the device and the gestures. For a specific example, performing a "printing" gesture while a rotatable section of the device is rotated in a certain direction is for increasing the size of a displayed object (as an exemplary operation performed at step **4330**). Performing the same gesture while the section is rotated in an opposite direction is for decreasing the size of a displayed object (as a different operation performed at step **4330**). Accordingly, the recognized "pointing" gesture may be processed differently at step **4326**, the difference being contexts set by device states (as different results of step **4336**).

In some methods, information, relevant to the operation (step **4330**) or to the contextual processing (step **4326**) may be obtained at a step **4328**. The information may be of anything relevant to interaction. For example, a user may be operating the finger-worn device while performing gestures, for interacting with a certain interface, while the mode of the interface, such as which application is in "focus" during interaction, is relevant for the interaction, thus information of the mode may be obtained at step **4328**.

In some methods, relevant information may be obtained (step **4328**) from an assigning of interface elements to the finger-worn device (see the method described with reference to FIG. 45), at a step **4332**. Relevant information being information of an interface element generally assigned to the device may be processed contextually at step **4326**, similarly to the described above for contextual processing. For example, an interface element may be assigned at step **4332** to a certain state of the device (see a step **4528** in method **4510**), in which case obtaining indication of that state (step **4336**) from detected device output (step **4322**) may prompt a contextual processing (step **4326**) in the element assigned to the state may set a context for any further processing of hand or finger positions and/or motions and/or gestures.

In some methods, relevant information may be obtained (step **4328**) from any detecting and/or sensing other than described for steps **4312**, **4316**, **4322** and **4324**. The additional detecting and/or sensing are performed at a step **4334**. For example, the finger wearing the device may be pointing to a real item (e.g. a real item **3866**, FIG. 38D). The item may be captured (i.e. sensed visually at step **4334**) for obtaining relevant information (step **4328**) about what the finger is pointing at. For another example, a user may be interacting with a system which has a visual recognition mechanism and a receiver. By performing a gesture and operating the finger-worn device, the user may command the system to execute an operation (step **4330**) which corresponds to the gesture, as sensed at step **4312** and recognized at step **4314**, and also to indications from the device. The operation may also correspond to obtained relevant information (step **4328**), such as information of a profile the user is logged into in the system. Alternatively or additionally, the command may correspond to information from other sensing (step **4334**) and recognition, such as biometric sensing and recognition in case the identity of the user may be recognized by sensing the facial features (visual biometric identification) of the user. For yet another example, a user may be operating the finger-worn device and simultaneously operating a remote control. The user may set the finger-worn device to a certain state, after which the user performs gestures with a hand on which the finger-worn device is worn, and operates the remote control with another hand, wherein the state of the device (indicated at step **4318** and detected as device output at step **4322**) and the gestures and output from the remote control (detected at step **4334**) are all relevant for specific interactions. For yet another example, the user may be operating a plurality of finger-worn devices, the output of which (of each device) may be relevant for interaction.

Following the above, the same output from a finger-worn device is shown in the method of FIG. 43 to facilitate detecting the position and/or motion of the device and/or the general position and/or motion of the finger or hand wearing the device, and detecting information and/or indications of use and/or states of the device. For example, when a camera of a system is capturing images (as a sensing operation), the images may be utilized to obtain information and states indications from the device and the position of the finger wearing the device at the time each image is captured. For another example, a user wearing the device on a finger may set the device to output a certain message, while performing a "hello" gesture (e.g. waving a palm back and forth) with the hand of the finger. The certain message may include an identification (ID) code which is extracted from a memory unit of the device (step **4320**). In addition to detecting the ID code, the same output from the device (e.g. radiofrequency signals) may facilitate detecting the motion of the device (step **4324**) and consequently the general motion of the hand (step **4316**), so that the back and forth "hello" gesture may be recognized (step **4314**). Upon recognition, the gesture may be processed contextually to the detection of the ID code. Accordingly, the corresponding operation at step **4330** may be a logging-in operation, from interpreting the "hello" gesture as a log-in command, specifically to the personal user-profile of the user, which is accessed by identifying the user from the output of the device. In a similar example, security authorization information in a network, as an exemplary relevant information (step **4328**), may additionally be processed (step **4326**) for executing the log-in, in case the user may or may not be authorized to log into the profile. For yet another example, similarly to the described for system **3530** in FIGS. 35E and 35F, a device of the invention may be utilized with position detecting apparatuses (e.g. touch and/or proximity detected apparatuses), wherein the apparatuses may detect the position of the finger wearing the device, such as touch coordinates of the finger on a touch surface, by detecting output from the device (specifically shown a field **3520** as output of device **3510a** in FIG. 35E and transmissions **3544** as output of device **3510c** in FIG. **35F**)**.** A processing unit **3542** of an apparatus **3534** may be set to detect the influence of field **3520** (generated by device **3510a**) on receiver **3540**, specifically the influence of the region of the field that is at the tip of the finger wearing the device, in which case a transmitter **3538** of apparatus **3534** may not be needed. The processing unit may further be adapted process detected influences for obtaining information and/or use and states indications from the devices (devices **3510a** and **3510c**), in addition to detection of the position of the touching finger. In such cases, the devices may be utilized both as input devices in system **3530** and as elements facilitating detection of the position of fingers wearing the devices. For yet another example, it may be desired to detect the general position of a hand wearing the device from a distance, wherein accuracy of the detection is not an important factor. In such cases, detecting an electric field generated by the device, or detecting modulations (also "influences") of the device on a generated field, may facilitate detecting the general position of the hand, while the detected field or modulations may additionally include information from the device.

For yet another example, as described for visual output from the device, the device may output visuals which include information of states of the device (e.g. light reflections by an interferomeric reflection mechanism **816** as described for device **810** in FIGS. 8A-D), while by the same detection of output (step **4322**), states information may be obtained (step **4336**) and additionally the position and/or motion of the device (step **4324**) may be detected. Note that detection of positions and/or motions from visual (or optical, or light) output is well known in the art (see e.g. US patent 5850201), similarly to other methods and mechanisms of detections of positions and/or motions, such as by electric fields. Further note that any reference to visual output and visual sensing and detecting, and visuals in general, also refers to any interactions involving non-visible light or non-visible wavelengths, such as infrared (IR) communications.

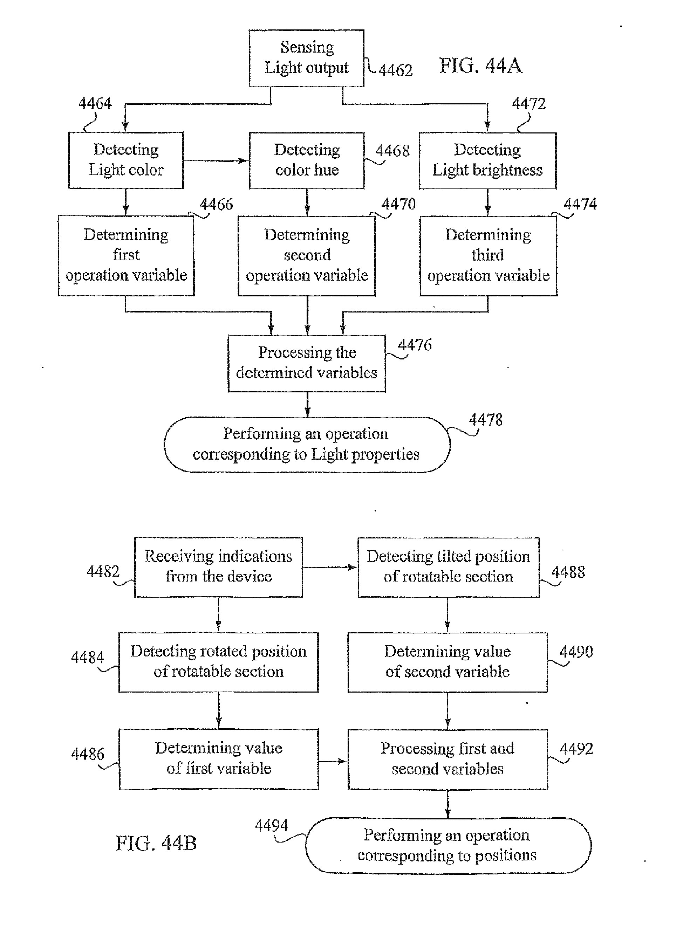

FIG. 44A shows a flowchart of a method for color detection interactions with a finger-worn device. At a step **4462**, output of light from the device is sensed. Specifically, the device is operated to output light with specific properties (e.g. properties **3824a,b** as described for system **3810** in FIGS. 38A and 38B). At a step **4464**, the color of the light is detected. For example, a recognition function may be accessed to recognize colors in light sensed by an optical sensing mechanism. At a step **4466**, a first operation variable is determined from detection of the color (step **4464**). For example, detection of a certain color may set a certain value for the variable, while detection of a different color may set a different value for the variable. The setting of values may correspond to interface elements assigned to device outputs (see step **4522** in FIG. 45 and steps **4332** and **4328** in FIG. 43). Similarly, at a step **4468,** the hue of the color of the light is detected, determining a second operation variable at a step **4470.** Accordingly, hues, being exemplary light properties, may be detected for setting different values for the second variable. Further similarly, at a step **4472,** brightness of the light sensed at step **4462** is detected, determining a third operation variable at a step **4474.** As with hues, different levels of brightness of light, as exemplary light properties, may be detected for setting different values to a variable. In some methods, any or all of steps **4464, 4468** and **4472** may be executed as a single step, such as in case multiple properties (color, hue and/or brightness) may be detected in a single operation (e.g. a recognition function). In some methods, detection of different types of light properties may influence any number of variables. For example, a value of a variable may be determine by detection of a color, while detecting the brightness of the light of that color may change the value of the same variable.

In some methods, other light properties, such as polarization, may be detected for determining or influencing variables, so that by modulating these properties in output of the device, communication is facilitated. Optionally, the properties may be dependent on other factors, such as a time factor in case a modulated property is a blinking rate, or in case a color outputted from the device changes in hue at a certain speed.

At a step **4476,** determined operation variables (results from any or all of steps **4466, 4470** and **4474**) are processed for a corresponding operation performed at a step **4478.** The processing (step **4476**) may be of a procedure or function or program which is executed according to the variables from any or all of the first, second and third variables. Accordingly, the resulting operation (step **4478**) correspond to output of light from the device, so that modulating the output may be for controlling the resulting operation and/or for executing different operations.

In some methods, different types of light properties may determine or influence different aspects of the resulting operation, such as in case each variable (determined or influenced by detection of a property) is assigned to an aspect of the operation. For example, a detected color determines which function is to be performed as the resulting operation, such as in case detection of a green color is for a first function and detection of a red color is for a second function. Additionally, a detected brightness may determine the extent by which a function is to be performed. Specifically, the first function may be a "drawing" function while the second function may be a function for controlling audio volume. Accordingly, the brighter the detected output, the thicker a stoke that is drawn by the drawing function, while for the second function the brighter the output, the higher the volume is set. Further accordingly, the device may be used (a rotatable section may be rotated) to increase or decrease the brightness of the output to increase or decrease the thickness of a stroke or the audio volume.

FIG. 44B shows a flowchart of a method for utilizing a rotatable and tiltable device. At a step **4482,** indications from the device are received. The indications may be sensed, for example, by a separate party. At a step **4484,** the tilted position of a rotatable section of the device is detected. For example, the section may be set to a tilt angle corresponding to a track of rotation (see tracks **218a-e** in FIGS. **17C** and 17D). For another example, the section may be tilted on an indication location which indicates the contact with the section (see indication location **154a** in FIG. 15B). At a step **4486,** a value for a first variable is determined by the detection of the tilted position (result of step **4484**). At a step **4488**, the rotated position of the rotatable section is detected, while the detection determines a value for a second variable at a step **4490**. For example, in accordance with the described for resonance mechanism **1416** in FIG. 14A and 14B, rotated and tilted positions of the device may be indicated (separately by mechanism **1416**) to a separate party **320**. In other methods, a value of the same variable is influenced by the detections of rotated and tilted positions. At a step **4492**, the first and second variables (or the same variable influenced by both rotated and tilted positions) are processed for an operation to be performed at a step **4494,** which corresponds to the tilted and rotated position of the rotatable section of the device.

Following the above, any combination of positions of rotatable sections of devices of the invention, and/or any other states or uses of the devices, may be utilized for different operations. For example, directional information of sliding a finger of a touch surface **164** of a device **2910** (see FIGS. 29A and 29B) may set a value of a first variable of an operation, while an indication location to which the surface is set (from locations **154a-c**) may set a value of a second variable of an operation, for performing a specific operation (or different operations for different combinations of directional information and indications from locations **154a-c**). For another example, in a method similar to the method in FIG. 44B, an operation which correspond to a specific alignment of two rotatable section (see e.g. sections **112** and **912** of device **1010** in FIGS. 10A-10C) may be performed by detecting the rotated position of each section.

FIG. 45 shows a flowchart of a method for assigning interface elements to a finger-worn device, such as generally described in FIGS. 41A through 41K. Assigning an element may refer to any sharing of an element, a plurality thereof, or any part of, with the finger-worn device. Assigning may involve any number of finger-worn devices (see e.g. FIG. 41K). At a step **4512,** a hand or finger interaction is detected. The hand or finger is preferably wearing the device. The interaction may be any action of the finger or hand as part of an interaction (see e.g. US Patent application 2007/0097151 A1 and 2005/0277470 A1), such as a positioning and/or a motion, and/or a gesture, while the position and/or motion of the finger may be detected at step **4512,** and/or the gesture recognized also at step **4512** (described as "detected" for this method). The interaction may be performed on or with a separate party which includes the interface (having the element which is to be assigned), or which is part of a system which includes the interface. Alternatively, the interaction may generally be performed, during which or after which it is sensed by a separate party, or by any number of sensing mechanism. In one example, a user may be interacting with a computer (as an exemplary system having an interface) by operating a keyboard or a remote controller (as an exemplary separate party). The computer may be "running" the interface (e.g. an operating system (OS)) of which elements may be assigned to the device. Accordingly, the finger or hand interaction may be a command typed with the keyboard, or a motion performed with the controller, such as a motion detection controller detecting the motion (as an exemplary interaction). In another example, a user may be interacting with a touch-screen (separate party) by touching it with a finger (finger interaction) which is preferably wearing the finger-worn device. The touch-screen may be connected to a network (system) on which there is an interface with "assignable" elements. Alternatively, the touch-screen may be a mobile device having its own interface. In yet another example, a user may be interacting with a gestures-recognition system (e.g. an electronic apparatus including a display, a camera and a processing unit with a visual recognition function, such as described for a system **3630** in FIG. 36D) by performing a gesture (as an exemplary interaction) with a finger on which the finger-worn device is worn (as an exemplary hand or finger interaction), while the gesture may be detection of the gesture may be facilitated by utilization of the finger-worn, device (e.g. utilizing a device **3610a** in system **3630** to illuminate the finger). At a step **4514,** output from the finger-worn device is detected. For example, a user may rotate a rotatable section of the device, to set the section to a specific rotated position as a state of the device which is indicated (exemplary output) to a separate party (where the output is detected). For another example, a user may press on a button or on a touch surface of the device to prompt an emission of output. For yet another example, information from a memory unit of the device may be processed into signals which are transmitted as device output, such as a code stored on the unit being sent to the interface as an assigning command. At a step **4516,** an interface occurrence is influencing an assigning operation. The influence, being a result of the step, may be variables set by the occurrence and utilized for an assigning operation. The occurrence may be prompted by processes or operations of the interface. For example, an interface element may become activated, accessible or may receive the "focus" of the interface, by which the element may automatically be assigned. The occurrence may be from an external influence or source. For example, an incoming video-conference call may be received in the interface, while an "answer" command may be assigned to the device, such as to allow a user to answer the call by operating the device.

Any of steps **4512, 4514** and **4516,** or any combination thereof, may be for prompting an assigning of an interface element, or plurality thereof, to the device. For example, just operating the finger-worn device may achieved an assigning of a certain element, such as assigning any element in "focus" (when the device is operated) in the interface to the device. For another example, simultaneously using the device and performing an interaction with a finger wearing the device may achieve the same, or may achieve assigning of a different element than in the previous example. For yet another example, an occurrence in the interface, such as an application being "opened", and an interaction of a finger, such as "double tapping" on the application icon, may be for assigning the application to the device, such as displaying information of the application on the device (see step **4534**).

In some methods, at a step **4518,** relevant information is obtained, such as described for previous methods. For example, other input may be received (in the separate party or the system) which may influence the assigning of an element. For a specific example, relevant information may be which displayed object a finger is touching, in case the interaction of the finger (step **4512**) is touch on a touch-screen, or which real item (e.g. a real item **3866** in FIG. 38D) the finger is pointing to, in case the interaction of the finger (step **4512**) is pointing to a real item, while both the item and the finger may be captured visually and are relevant for the assigning of an interface element. For another specific example, a user-profile which the interface is logged into during the assigning may determine which element is to be assigned when a certain finger interaction is detected (step **4512**).

At a step **4520,** results from any or all of steps **4512, 4514, 4516** and **4518** are processed. In one example, detected indications, of use of the device (step **4514**) may be processed for registering corresponding input which prompts an assigning of an element. In another example, detected indications of a state of the device (step **4514**), in addition to detected touch position (step **4512**) and information about which object is displayed at that position (step **4518**), may be processed together (e.g. contextually, as described above) for copying an interface element which corresponds to the object to a memory unit of the device (see step **4530**). In yet another example, an error occurs in the interface (as an exemplary interface occurrence at step **4516**), in which case object representing the error (e.g. an error message) may appear on an interactive display of the device (e.g. an interactive display mechanism **2320**) as an exemplary assigning (the error message may automatically be assigned to the device), where a user may operate the interactive display to respond to the message.

The result of, or results of multiple executions of step **4520,** is any of the following steps, or any combination thereof, each of which describing an assigning of an interface element to the device, or part of an assigning.

In some methods, an interface element may specifically be assigned to a device output at step **4522,** in which a certain output from the device influences (or modulates or controls) the element. For example, a command in the interface (as an exemplary interface element) may be assigned to "green output" from the device, so that when detecting a green color outputted from the device (such as green light from an LED), the command may be executed by the interface upon detection of the output. For another example, a code, as an exemplary interface element being assigned to the device, may be copied from a database first system (which includes the interface) to a memory unit of the device (see step **4530**). The code may be a specific blinking rate which can be outputted by a visual output mechanism of the device, while the code may be extracted from the memory unit when interacting with a second system, for the output mechanism of the device to blink at that rate. The second system may recognize the code from the blinking, for executing a corresponding operation.

In some methods, an interface element may specifically be assigned to a finger or hand wearing the device, at a step **4524.** The element may specifically be assigned to a hand or finger interaction. For example, interface element may be a function, while by being assigned to a finger wearing the device the function may be performed upon detection of a position or gesture of the finger. The function may be performed at a "location" in a virtual environment (e.g. inside a files folder) which corresponds to the detected position or gesture of the finger, such as performed on another interface element (e.g. a file) which is displayed where the finger is touching or to where the finger is pointing (as an exemplary gesture). For yet another example, a user may be wearing a first finger-worn device on a first hand and a second finger-worn device on a second hand, while a different interface element may be assigned to each hand, so that motion detection of each hand may correspond to a different assigned element. For yet another example, an interface element may be assigned to both an interaction of the finger (step **4524**) and to a state of the device (see step **4528**), wherein for controlling the element, the finger must perform the interaction while the device is at that state.

In some methods, an interface element may be assigned specifically to an element of the finger-worn device, at a step **4526.** The element of the device may be a section of the device, such as a rotatable section, or a mechanism of the device, such as an interactive display mechanism (see FIGS. 23A-C, FIG. 27C and FIGS 41I and 41J). For example, the device may include multiple rotatable sections, while a different interface element may be assigned to each section, so that a different element may be controlled by rotation of each section. Optionally, the elements assigned to the section may correspond to each other by operating the sections correspondingly to each other, such as described for a device **1010** in FIGS. 10A-C for alignment of rotated positions and displayed objects. For another example, an interface element may be assigned to a visual output mechanism and a touch surface of the finger-worn device, in which touching the surface where an object (or plurality thereof) representing the element is displayed (see step **4534**) may be for controlling the element, such as controlling an audio volume by touching a - symbol and a + symbol, as described for device **2710** in FIG. 27C.

In some methods, an interface element may be assigned specifically to a state or use of the finger-worn device, at a step **4528.** The state of the device may be a physical state or a "virtual" state (i.e. mode of the device). For example, an element may be assigned to the setting of a rotatable section to a certain track, as an exemplary state of the device, while another element may be assigned to the setting of the same rotatable section, or another rotatable section, to another track (as described for multiple rotatable sections and multiple tracks of a device **920** in FIG. 9C). This example may also describe a case where interface elements are assigned to device elements (the tracks or the rotatable section). Use of the device (to which an element is assigned) may be any operation performed on the device, such as rotating a rotatable section or sliding on a touch surface. For example, browsing a tool-bar (the browsing or the tool-bar being an exemplary interface element) may be assigned to the rotation of a rotatable section. Specifically, browsing in certain direction (in the order of the tools) may be assigned to a certain rotation direction, while browsing in an opposite direction may be assigned to an opposite rotation direction. The browsing may also be assigned to a state of the device, such as a tilted position of the rotatable section, so that other tilted positions may be assigned other elements. This may also describe a case where an interface element (the tool-bar or the browsing of the tool-bar) is assigned to device element (the rotatable section) and to use of the device (rotating of the section), as a combination of steps **4526** and **4528.** For another example, a "drawing" function may be assigned to a touch surface (device element) of the device, while different uses of the surface are assigned different "drawing" options. Specifically, increasing or decreasing the brightness or the color of a drawn stroke may be assigned to sliding on the touch surface, while increasing the thickness of the stroke may be assigned to the amount of pressure applied on the surface (more pressure for increasing the thickness). Alternatively, controlling the thickness may be assigned to sliding on the surface while controlling the brightness or color may be assigned to the amount of pressure on the surface.

In some methods, an interface element, or information related to an interface element, may be copied to a memory unit of the finger-worn device, as an assigning of the element to the device, at a step **4530.** For example, a file may be copied to a memory unit of the finger-worn device from a database of the interface (or of a system which includes the interface). For another example, an "undo" function may be assigned to the device, while "undo stages" (a sequence of stages of an interaction session, such as stages of editing of a document) may be automatically be stored on a memory unit of the device. Alternatively, by operating the device during an interaction session, such as in case the "undo" function is also assigned to a state and/or use of the device (step **4528**), a user may choose which stages of the interaction to store, for allowing to user to "track-back" specifically to those stages. For a similar example, a user may watch a video clip and "tag" certain frames in the clip (e.g. screenshots) which may be copied to the memory unit, while the interface element assigned to the device may be the video clip and/or the "tagging" function. For yet another example, a common "cut-paste" function may be facilitated by the method described with reference to FIG. 45, in which operating a virtual-reality device (e.g. a head-up display device **3860**) to choose an file element, such as by controlling a virtual cursor (FIG. 38E) with a finger, as an exemplary combination of step **4512** (the positioning of the finger) and step **4518** (information about the cursor), the file element may be chosen and copied (also "cut") to a memory unit of the device (step **4530**). Optionally, the cursor may be further controlled for copying (also "pasting") the file element back to the virtual reality device (see step **4538**), as an exemplary re-assigning of the file element (see step **4536**).

In some methods, at a step **4532**, feedback of the assigning is prompted. The feedback may be generated by the finger-worn device or by a separate party, preferably the party (or a party in the system) which includes the interface. For example, a display of the finger-worn device may be blinking as feedback of the assigning, and/or a change of display may occur on a display with which a user wearing the device is interacting, such as in case an "assigning button" (as a displayed object corresponding to an "assigning" function) changes to a "pressed assigning button", when an interface element which corresponds to the button is assigned to the device. Optionally, when the element is re-assigned (step **4536**) to the interface from the device, the "pressed assigning button" changed to an un-pressed "Assigning button" (see step **4542**).

An assigning feedback (step **4532**) may be visual or any other type of output, such as tactile (as described for devices **3310** and **3330** in FIGS. 33A, 33B, 33C and 33E) or audible (e.g. a sound cue from a speaker apparatus in the device or from a speaker apparatus in the separate party which includes the interface).

In some methods, an interface element may specifically be assigned to a display of the finger-worn device, at a step **4534.** For example, visuals corresponding to the assigned element may be "transferred" to a display of the finger-worn device. For a specific example, a displayed object (displayed on the separate party with which a user wearing the device is interacting with) may represent an interface element, so that when the element is assigned to the device (such as specifically assigning control of the element to a rotatable section of the device), the displayed object may appear on a display of the device (the object exemplarily being specifically assigned to the display), and may optionally "disappear" from being displayed on the separate party, in which case different parts of the elements are differently assigned to the device (the control of the element assigned to the rotatable section of the device and the displayed object assigned to the display of the device). The reverse operation may be performed when the parts of the element are re-assigned to the interface (step **4536**), in which case the object may "disappear" from the display of the device and appear on the display of the separate party (while control is generally "returned" to the interface of the separate party). For another example, a cursor may be assigned to the finger-worn device in which a visual representation of the cursor appears (in accordance with step **4534**). When the interface goes into a "stand-by" mode (also "sleep" mode), such as automatically after a period of time of not being interacted with, the cursor, as displayed on the device, may change shape, such as to a "half-moon" symbol representing the "sleep" mode. For a similar example of a cursor element, a finger on which the device is worn may point to a "hyperlink" on a display, while when the finger is pointing to the "hyperlink", the shape of the cursor may change, such as from an arrow symbol to a hand symbol. This may be an example of the cursor, as an interface element, being specifically assigned to the finger wearing the device (step **4524**) and to a display of the device (step **4534**), in which certain interactions of the finger (such as the pointing to the "hyperlink") correspond to change in the appearance of the cursor as displayed on the device.

A display of the finger-worn device, when referring to step **4534**, may be any visual output which can be implemented in the device, such as an array of pixels (e.g. display pixels **2330**), an illumination mechanism (e.g. an illumination mechanism **3616**) or a projection mechanism (e.g. a projection mechanism **3420**). For example, a projection mechanism of the device may project visuals corresponding to an element assigned to the device.

In some methods, the device may display visuals that represent assigned interface elements by limited, symbolic and/or partial representations of the elements or of original visuals of the elements (e.g. displayed objects corresponding to the elements as displayed on a separate party). For example, a media playing application may be assigned to the device, the original visuals of which are a full control-desk for controlling media playing, while when the application is assigned to the device, the device may display an icon of the application, or a certain part of the control-desk, such as just the playback track. For another example, a paragraph of text may be copied to a memory unit of the device, while before being copied the text may be colored green (automatically by the interface or manually by a user). Accordingly, the device may illuminate (e.g. by an illumination mechanism) a finger wearing the device with a green color after the text is copied. Optionally, other paragraphs may also be copied to the device, each being colored a different color, while operating the device may be for browsing between the paragraphs such that the colors illuminating the finger may change during browsing. A user may select a paragraph by browsing to the paragraph's corresponding color, for further interactions related to that paragraph, such as to paste it in a text document (see step **4538**).

In some methods, an interface element, or part of an element (e.g. a representation of the element as a displayed object) may be operable when assigned to a display of the device (step **4534**), such as by an interactive display mechanism of the device. For example, a function, as an exemplary interface element, may be assigned to positioning of a hand wearing the device (step **4524**) and to an interactive display mechanism of the device (step **4526**), wherein a displayed object corresponding to the assigned element (i.e. function) is displayed on a touch surface. A user may activate the function by positioning the hand as part of interaction, and by touching the touch surface of the device specifically where the corresponding object is displayed.

Following the above, an interface element may be re-assigned from the device at a step **4536**. Consequently, information of the element (or the element itself) may be copied from a memory unit of the device, at a step **4538,** and/or a re-assigning feedback may be prompted at a step **4540** (similarly to the described for step **4532**), and/or a change of a display of the device and/or of the interface may be prompted at a step **4542** (similarly to the described for step **4534**). For example, when a memory unit of the device is empty, "double-tapping" (step **4512**) on a file icon (as an exemplary displayed object representing a file) may prompt a process (step **4520**) in which the file is copied to the memory unit (step **4530**), while when a file is stored on the memory unit, "double tapping" (another step **4512**) on a files folder may prompt a process (step **4520**) in which the file is copied from the memory unit (step **4538**) to that folder. For another example, a displayed object assigned to a display of the device (as a result of step **4534**) may be re-assigned to its original interface when a certain interface occurrence happens (step **4516**), such as the element which corresponds to the displayed object becomes inaccessible, thus the display of the device may change (the object may "disappear" from that display) and the interface display may change (the object may appear on the separate party displaying visuals of the interface), as an exemplary step **4542.**

All patents and patent applications mentioned in this specification are herein incorporated in their entirety by reference into the specification, to the same extent as if each individual patent or patent application was specifically and individually indicated to be incorporated herein by reference. In addition, citation or identification of any reference in this application shall not be construed as an admission that such reference is available as prior art to the present invention.

While the invention has been described with respect to a limited number of embodiments, it will be appreciated that many variations, modifications and other applications of the invention may be made.

The present disclosure relates to:
1. A finger- worn user input device which includes a first stationary section 114 adapted to fit on a human hand finger and comprising: a) a first rotatable section 112 at least partially overlapping the first section and adapted to rotate and tilt relative to the first section; and b) an indication mechanism 116, 116a, 130, 516, 526, 616, 816, 826, 836, 1316, 1416, 1616, 2116, 2222, 2320, 2720, 3524 for relaying an indication corresponding to a relative position obtained between the first stationary section 114 and the first rotatable section 112.
2. The device of point 1, wherein the relative position is obtained through an action selected from the group consisting of a relative tilt, a relative rotation and a relative tilt and rotation.
3. The device of point 1, wherein the indication mechanism is a passive indication mechanism.
4. The device of point 1, wherein the indication mechanism is an active indication mechanism.
5. The device of point 1, wherein the indication mechanism includes a sensing mechanism 118, 118a, 118b, 118c, 128, 128', 134, 136, 1216,
6. The device of point 1, wherein the first stationary section 114 includes a plurality of tracks 218a, 218b on which the first rotatable section 112 can rotate.
7. The device of point 1, wherein the first stationary section 114 is replaced by a second rotatable section 912, wherein the first rotatable section 112 is adapted to rotate and tilt on the second rotatable section 912.
8. The device of point 7, wherein the second rotatable section 912 includes a plurality of tracks 218a, 218b on which first rotatable section 112 can rotate, 9. The device of point 6, wherein the plurality of tracks 218a, 218b further allow first rotatable section 112 to tilt.
10. The device of point 6, further comprising a third rotatable section 112' at least partially overlapping first stationary section 114 and adapted to rotate and tilt relative to first stationary section 114.
11. The device of point 1, further comprising a locking mechanism 1440 for locking the first rotatable section 112 into a given position.
12. The device of point 11, wherein the given position is selected from the group consisting of a rotated position, a tilted position and a rotated and tilted position.
13. The device of point 1, wherein the first stationary section 114 includes indication locations 154 for indicating corresponding tilted positions of the first rotatable section 112.
14. The device of point 6, wherein the first stationary section 114 includes indication locations 154 for indicating corresponding tilted positions of the first rotatable section 112.
15. The device of point 6, wherein each track 218a, 218b controls a separate interface element 1030a, 1030b, 1030c of an interface 1020.
16. The device of point 8, wherein each track 218a, 218b controls a separate interface element 1030a, 1030b, 1030c of an interface 1020.
17. The device of point 15, wherein interface 1020 is an interface selected from the group of an interface internal to the device and an interface external to the device.
18. The device of point 15, wherein interface 1020 is an interface selected from the group of an interface internal to the device and an interface external to the device.

## Claims

1. A method comprising the steps of:
(a) obtaining an indication or detecting (4324, 4322, 4336) an operation (3920a, 3920b, 3920c, 166a, 166b) performed by a finger (106) on a finger-worn device (3920, 4020); and **characterised by**
(b) setting a context, based on said detected operation, for the processing of the results of a touch location or touch motion or touch gesture (3924) by a detection mechanism (3912, 4024) such as a touch-screen (4024).

2. The method of claim 1, wherein said context for processing the results of said touch motion or touch gesture (3924) includes changing visuals displayed by said touch-screen (4024).

3. The method of claim 1, wherein said context for processing the results of said touch motion or touch gesture (3924) is further based on visuals displayed by said touch-screen (4024) where said touch motion or gesture motion (3924) is detected.

4. The method of claim 1, wherein said context for processing the results of said touch motion or touch gesture (3924) is further based on the location of said touch motion or gesture motion (3924) as detected by said touch-screen (4024).

5. The method of claim 1, wherein said detected operation (3920a, 3920b, 3920c, 166a, 166b) is performed before or after or simultaneously to said touch motion or touch gesture (3924).

6. A finger-worn device (3920, 4020) comprising:
(a) an indication mechanism (164, 3920a, 3920b, 3920c) for relaying indications about the use or information about conditions, such as states, of the finger-worn device, said indication mechanism configured to obtain indications or detect (4324, 4322, 4336) operations (3920a, 3920b, 3920c, 166a, 166b) performed by a finger (106) on said indication mechanism; and
(b) a communication mechanism (140) for connecting the finger-worn device to a separate party, resulting in said indication mechanism influencing other mechanism of said separate party **characterised in that** said indications are adapted to set a context for the processing of the results of a touch location or a touch motion or touch gesture (3924) by a detection mechanism (3912, 4024) such as a touch-screen (4024).
